# EUROPEAN PATENT APPLICATION

(11) **EP 4 447 517 A1**
(43) Date of publication of application: **16.10.2024**
(21) Application number: 23737026.7
(22) Date of filing: 04.01.2023
(51) Int. Cl.: H04W 16/22

(54) **COMMUNICATION METHOD AND APPARATUS, AND COMPUTER-READABLE STORAGE MEDIUM**

(30) Priority: 10.01.2022 CN 202210021088
(71) Applicant: Huawei Technologies Co., Ltd., Shenzhen, Guangdong 518129 (CN)
(72) Inventor: WANG, Jun, Shenzhen, Guangdong 518129 (CN); PENG, Chenghui, Shenzhen, Guangdong 518129 (CN)
(74) Representative: MERH-IP Matias Erny Reichl Hoffmann Patentanwälte PartG mbB
(86) International application number: PCT/CN2023/070340
(87) International publication number: WO 2023/131162

(57) **Abstract**

Embodiments of the present invention disclose a communication method and apparatus, and a computer-readable storage medium. The method includes: A second device determines a first algorithm, where the first algorithm is a first model or a part of the first model; then, the second device may send first indication information to a first device, where the first indication information indicates the first algorithm; and after the first device receives the first indication information from the second device, the second device may directly enable the first algorithm. In embodiments of the present invention, the second device may configure the first algorithm for the first device by using the first indication information. Because a quantity of bits required for transmitting indication information is relatively small, an algorithm switching delay can be reduced.

## Description

This application claims priority to Chinese Patent Application No. 202210021088.X, filed with the China National Intellectual Property Administration on January 10, 2022 and entitled "COMMUNICATION METHOD AND APPARATUS, AND COMPUTER-READABLE STORAGE MEDIUM", which is incorporated herein by reference in its entirety.

### TECHNICAL FIELD

The present invention relates to the field of communication technologies, and in particular, to a communication method and apparatus, and a computer-readable storage medium.

### BACKGROUND

With development of communication technologies and maturity of artificial intelligence (artificial intelligence, AI) technologies, AI will become an indispensable part of a communication system.

Currently, an AI algorithm may be used to assist a network device in radio resource management (radio resource management, RRM), network fault monitoring, and the like, so that performance of the communication system can be improved.

For example, a base station may predict user traffic in each future time period by using a traffic prediction algorithm, to assist the base station in sleeping and reduce energy consumption of the base station. For another example, a terminal device may predict network quality in a future time period by using a network quality prediction algorithm, so that data can be buffered in advance before the network quality deteriorates, thereby resolving problems such as video play frame freezing and user page loading failures.

In addition, in different scenarios, the base station and the terminal device may use different AI algorithms.

For example, when a power level of the terminal device is greater than a specific threshold (for example, 1000 mAh), the terminal device may use an AI algorithm with higher power consumption, for example, a deep neural network model or the first 10 layers of the deep neural network model. Then, when the power level of the terminal device is less than a specific threshold (for example, 100 mAh), the terminal device may switch to an AI algorithm with lower power consumption, for example, a shallow neural network model or the first three layers of the deep neural network model. When the terminal device uses the first 10 layers or the first three layers of the deep neural network model, the terminal device may send an output result of the tenth layer or the third layer to a network device, and the network device continues processing.

At the same time, in the communication system, how to more flexibly configure an algorithm for a network element such as the terminal device and reduce a switching delay of an algorithm is a problem that a technical person pays attention to.

### SUMMARY

Embodiments of the present invention disclose a communication method and apparatus, and a computer-readable storage medium to reduce an algorithm switching delay.

A first aspect discloses a communication method. The communication method may be applied to a first device or a module (for example, a chip) in the first device. The following uses an example in which the communication method is applied to the first device for description. The communication method may include:
determining that a first event is satisfied;
obtaining a first algorithm corresponding to the first event, where the first algorithm is a first model or a part of the first model; and
enabling the first algorithm.

In this embodiment of the present invention, the first device may monitor one or more events. When detecting that the first event is satisfied, the first device may obtain the first algorithm corresponding to the first event. Then, the first device may directly use the first algorithm. It can be learned that the first device may monitor one or more events, and then may directly obtain a corresponding algorithm for use when different events are satisfied, thereby reducing an algorithm switching delay.

In a possible implementation, the method may further include:
receiving configuration information from a second device, where the configuration information includes one or more events and corresponding algorithms, and the one or more events include the first event.

In this embodiment of the present invention, the first device may first receive the configuration information from the second device, where the configuration information may include one or more events and corresponding algorithms. Then, the first device may monitor the one or more events, and may obtain a corresponding algorithm for use when different events are satisfied to quickly switch an algorithm.

In a possible implementation, the method may further include:
sending indication information to the second device, where the indication information indicates the first algorithm.

In this embodiment of the present invention, after enabling the first algorithm, the first device may send, to the second device, the indication information that indicates the first algorithm, so that the second device can learn of the first algorithm currently used by the first device and the first event currently satisfied by the first device.

In a possible implementation, the indication information is an identifier of the first algorithm or an identifier of the first event.

In this embodiment of the present invention, the indication information sent by the first device to the second device may be the identifier of the first algorithm or the identifier of the first event. In addition, because a quantity of bits required for transmitting the identifier of the first algorithm or the identifier of the first event is relatively small, a transmission resource can be saved.

In a possible implementation, the first model is one of a neural network model, a decision tree model, a random forest model, a linear regression model, a logistic regression model, a support vector machine model, or a naive Bayes model.

In this embodiment of the present invention, the first model may be one of a neural network model, a decision tree model, a random forest model, a linear regression model, a logistic regression model, a support vector machine model, or a naive Bayes model. When different models satisfy different events, different models may have different performance or final effects for different problems. Therefore, when the first device satisfies the first event, the first model used by the first device may be a currently optimal model (for example, a support vector machine model), so that an optimal effect can be achieved.

In a possible implementation, the first event includes one or more of a signal quality event, a power level event, a memory event, and a storage event.

The signal quality event is that signal quality is less than a first threshold or the signal quality is greater than/equal to the first threshold. The power level event is that a power level of the first device is less than a second threshold or the power level of the first device is greater than/equal to the second threshold. The memory event is that a memory is less than a third threshold or the memory is greater than/equal to the third threshold. The storage event is that a storage capacity is less than a fourth threshold or the storage capacity is greater than/equal to the fourth threshold.

The signal quality is obtained based on one or more of a reference signal received power RSRP, reference signal received quality RSRQ, a signal to interference plus noise ratio SINR, a signal-to-noise ratio SNR, and a channel quality indicator CQI.

In this embodiment of the present invention, the first event satisfied by the first device may be a plurality of different events (for example, the signal quality is less than the first threshold or the signal quality is greater than or equal to the first threshold). In addition, when different events are satisfied, effects achieved by the first device by using the first algorithm may be different. For example, when the signal quality is greater than or equal to the first threshold, the first device can achieve an optimal effect by using the first algorithm; and in another case (for example, the signal quality is less than the first threshold), an effect achieved by using another algorithm may be better than that achieved by using the first algorithm. Therefore, a corresponding first event may be flexibly configured for the first algorithm, so that the first device can achieve an optimal effect by using the first algorithm.

A second aspect discloses a communication method. The communication method may be applied to a second device or a module (for example, a chip) in the second device. The following uses an example in which the communication method is applied to the second device for description. The communication method may include:
determining configuration information; and
sending the configuration information to a first device, where the configuration information includes one or more events and corresponding algorithms, the one or more events include a first event, the first event corresponds to a first algorithm, and the first algorithm is a first model or a part of the first model.

In this embodiment of the present invention, the second device may first determine the configuration information, where the configuration information includes one or more events and corresponding algorithms. Then, the second device may send the configuration information to the first device, so that the first device can monitor the one or more events, and the first device can directly obtain a corresponding algorithm for use when different events are satisfied, thereby reducing an algorithm switching delay.

In a possible implementation, the method may further include:
receiving indication information from the first device, where the indication information indicates the first algorithm.

In this embodiment of the present invention, the second device may receive the indication information from the first device, and the second device may learn, by using the indication information, of the first algorithm currently used by the first device and the first event currently satisfied by the first device.

In a possible implementation, the indication information is an identifier of the first algorithm or an identifier of the first event.

In this embodiment of the present invention, the indication information received by the second device may be the identifier of the first algorithm or the identifier of the first event. In addition, because a quantity of bits required for transmitting the identifier of the first algorithm or the identifier of the first event is relatively small, a transmission resource can be saved.

In a possible implementation, the method may further include:
determining a second algorithm based on the indication information, where the second algorithm is a collaborative algorithm corresponding to the first algorithm; and
enabling the second algorithm.

In this embodiment of the present invention, when the first device and the second device execute a collaboration task, the second device may determine the second algorithm according to the indication information. Then, the second device may execute the collaboration task with the first device by using the second algorithm to obtain a collaboration gain.

In a possible implementation, the first model is one of a neural network model, a decision tree model, a random forest model, a linear regression model, a logistic regression model, a support vector machine model, or a naive Bayes model.

In this embodiment of the present invention, the first model may be one of a neural network model, a decision tree model, a random forest model, a linear regression model, a logistic regression model, a support vector machine model, or a naive Bayes model. When different models satisfy different events, different models may have different performance or final effects for different problems. Therefore, the first model configured by the second device for the first device may be an optimal model (for example, a support vector machine model) in the first event, so that an optimal effect can be achieved.

In a possible implementation, the first event includes one or more of a signal quality event, a power level event, a memory event, and a storage event.

The signal quality event is that signal quality is less than a first threshold or the signal quality is greater than/equal to the first threshold. The power level event is that a power level of the first device is less than a second threshold or the power level of the first device is greater than or equal to the second threshold. The memory event is that a memory is less than a third threshold or the memory is greater than/equal to the third threshold. The storage event is that a storage capacity is less than a fourth threshold or the storage capacity is greater than/equal to the fourth threshold.

The signal quality is obtained based on one or more of a reference signal received power RSRP, reference signal received quality RSRQ, a signal to interference plus noise ratio SINR, a signal-to-noise ratio SNR, and a channel quality indicator CQI.

In this embodiment of the present invention, the first event configured by the second device for the first device may be a plurality of different events (for example, the signal quality is less than the first threshold or the signal quality is greater than or equal to the first threshold). In addition, when different events are satisfied, effects achieved by the first device by using the first algorithm may be different. For example, when the signal quality is greater than or equal to the first threshold, the first device can achieve an optimal effect by using the first algorithm; and in another case (for example, the signal quality is less than the first threshold), an effect achieved by using another algorithm may be better than that achieved by using the first algorithm. Therefore, the second device may flexibly configure a corresponding first event for the first algorithm, so that the first device can achieve an optimal effect by using the first algorithm.

A third aspect discloses a communication method. The communication method may be applied to a first device or a module (for example, a chip) in the first device. The following uses an example in which the communication method is applied to the first device for description. The communication method may include:
receiving first indication information from a second device, where the first indication information indicates a first algorithm, and the first algorithm is a first model or a part of the first model; and
enabling the first algorithm.

In this embodiment of the present invention, the first device may receive the indication information from the second device. Then, the first device may determine the first algorithm by using the first indication information, and may enable the first algorithm. It can be learned that the second device may configure the first algorithm for the first device by using the first indication information. In addition, because a quantity of bits required for transmitting the indication information is relatively small, a rate of transmitting the indication information is relatively high. Therefore, the second device can configure the first algorithm for the first device in a relatively short time, thereby reducing an algorithm switching delay.

In a possible implementation, the method may further include:
receiving configuration information from the second device, where the configuration information includes one or more algorithms and corresponding identifiers, and the one or more algorithms include the first algorithm.

In this embodiment of the present invention, the first device may first receive the configuration information from the second device, where the configuration information may include one or more algorithms and corresponding identifiers. Then, when receiving the first indication information from the second device, the first device may directly obtain the corresponding first algorithm for use to quickly implement algorithm switching.

In a possible implementation, the method may further include:
sending second indication information to the second device, where the second indication information indicates a first event satisfied by the first device.

In this embodiment of the present invention, the first device may monitor one or more events. When detecting that the first event is satisfied, the first device may first send the second indication information to the second device, so that the second device can learn of the first event currently satisfied by the first device, and can configure the first algorithm for the first device based on the first event satisfied by the first device.

In a possible implementation, the method may further include:
sending third indication information to the second device, where the third indication information indicates whether the first device successfully enables or fails to enable the first algorithm, and the third indication information is response information corresponding to the first indication information.

In this embodiment of the present invention, after receiving the first indication information from the second device, the first device may configure the first algorithm. When the first algorithm is successfully configured, the first device may send the third indication information to the second device to notify the second device that the first algorithm is successfully configured. When the first algorithm fails to be configured, the first device may also send the third indication information to the second device to notify the second device that the first algorithm fails to be configured. It can be learned that the first device may notify, by using the third indication information, the second device whether the first device successfully configures the first algorithm, so that the second device may perform corresponding processing (for example, when the configuration fails, the second device may reconfigure an algorithm for the first device).

In a possible implementation, the second indication information includes an identifier of the first event.

In this embodiment of the present invention, the second indication information sent by the first device to the second device may include the identifier of the first event, so that the second device can directly determine, based on the identifier of the first event, the first event currently satisfied by the first device. In addition, because a quantity of bits required for transmitting the identifier of the first event is relatively small, a transmission resource can be saved.

In a possible implementation, the first event includes one or more of a signal quality event, a power level event, a memory event, and a storage event.

The signal quality event is that signal quality is less than a first threshold or the signal quality is greater than/equal to the first threshold. The power level event is that a power level of the first device is less than a second threshold or the power level of the first device is greater than or equal to the second threshold. The memory event is that a memory is less than a third threshold or the memory is greater than/equal to the third threshold. The storage event is that a storage capacity is less than a fourth threshold or the storage capacity is greater than/equal to the fourth threshold.

The signal quality is obtained based on one or more of a reference signal received power RSRP, reference signal received quality RSRQ, a signal to interference plus noise ratio SINR, a signal-to-noise ratio SNR, and a channel quality indicator CQI.

In this embodiment of the present invention, the first event satisfied by the first device may be a plurality of different events (for example, the signal quality is less than the first threshold or the signal quality is greater than or equal to the first threshold). In addition, when different events are satisfied, effects achieved by the first device by using the first algorithm may be different. For example, when the signal quality is greater than or equal to the first threshold, the first device can achieve an optimal effect by using the first algorithm; and in another case (for example, the signal quality is less than the first threshold), an effect achieved by using another algorithm may be better than that achieved by using the first algorithm. Therefore, the second device may flexibly configure a corresponding first event for the first algorithm, so that the first device can achieve an optimal effect by using the first algorithm.

In a possible implementation, the first indication information includes an identifier of the first algorithm.

In this embodiment of the present invention, the first indication information received by the first device may include the identifier of the first algorithm. Then, the first device may directly determine the corresponding first algorithm based on the identifier of the first algorithm, and enable the first algorithm. In addition, because a quantity of bits required for transmitting the identifier of the first algorithm is relatively small, a transmission resource can be saved.

In a possible implementation, the first indication information is carried in downlink control information DCI, radio resource control RRC signaling, or media access control MAC signaling.

In this embodiment of the present invention, the first indication information may be carried in downlink control information (downlink control information, DCI), radio resource control (radio resource control, RRC) signaling, or media access control (media access control, MAC) signaling (for example, MAC control element (control element, CE) signaling), so that the first device can receive the first indication information more quickly, thereby switching an algorithm more quickly, and reducing an algorithm switching delay.

In a possible implementation, the first model is one of a neural network model, a decision tree model, a random forest model, a linear regression model, a logistic regression model, a support vector machine model, or a naive Bayes model.

In this embodiment of the present invention, the first model may be one of a neural network model, a decision tree model, a random forest model, a linear regression model, a logistic regression model, a support vector machine model, or a naive Bayes model. When different models satisfy different events, different models may have different performance or final effects for different problems. Therefore, the second device may flexibly configure the first model for the first device. In this way, when the first device satisfies the first event, the first model used by the first device may be a currently optimal model (for example, a support vector machine model), so that an optimal effect can be achieved.

A fourth aspect discloses a communication method. The communication method may be applied to a second device or a module (for example, a chip) in the second device. The following uses an example in which the communication method is applied to the second device for description. The communication method may include:
determining a first algorithm, where the first algorithm is a first model or a part of the first model; and
sending first indication information to a first device, where the first indication information indicates the first algorithm.

In this embodiment of the present invention, the second device may first determine the first algorithm, and then may send the first indication information to the first device, so that the first algorithm can be configured for the first device by using the first indication information. In addition, because a quantity of bits required for transmitting the indication information is relatively small, a rate of transmitting the indication information is relatively high. Therefore, the second device can configure the first algorithm for the first device in a relatively short time, thereby reducing an algorithm switching delay.

In a possible implementation, the method may further include:
sending configuration information to the first device, where the configuration information includes one or more algorithms and corresponding identifiers, and the one or more algorithms include the first algorithm.

In this embodiment of the present invention, the second device may first send the configuration information to the first device, where the configuration information may include one or more algorithms and corresponding identifiers. Then, when receiving the first indication information from the second device, the first device may directly obtain the corresponding first algorithm for use to quickly implement algorithm switching.

In a possible implementation, the determining, by the second device, a first algorithm includes:
receiving second indication information from the first device, where the second indication information indicates a first event satisfied by the first device; and
determining the first algorithm based on the second indication information.

In this embodiment of the present invention, the second device may receive the second indication information from the first device, and the second device may determine, based on the second indication information, the first event currently satisfied by the first device. Then, the second device may configure the first algorithm for the first device based on the first event satisfied by the first device.

In a possible implementation, the method may further include:
receiving third indication information from the first device, where the third indication information indicates whether the first device successfully enables or fails to enable the first algorithm, and the third indication information is response information corresponding to the first indication information.

In this embodiment of the present invention, the second device may receive the third indication information from the first device, so that the second device can learn of whether the first algorithm is successfully configured for the first device, and the second device can perform corresponding processing (for example, when the configuration fails, the second device may reconfigure an algorithm for the first device).

In a possible implementation, the second indication information includes an identifier of the first event.

In this embodiment of the present invention, the second indication information received by the second device may include the identifier of the first event. Therefore, the second device can directly determine, based on the identifier of the first event, the first event currently satisfied by the first device. In addition, because a quantity of bits required for transmitting the identifier of the first event is relatively small, a transmission resource can be saved.

In a possible implementation, the first event includes one or more of a signal quality event, a power level event, a memory event, and a storage event.

The signal quality event is that signal quality is less than a first threshold or the signal quality is greater than/equal to the first threshold. The power level event is that a power level of the first device is less than a second threshold or the power level of the first device is greater than or equal to the second threshold. The memory event is that a memory is less than a third threshold or the memory is greater than/equal to the third threshold. The storage event is that a storage capacity is less than a fourth threshold or the storage capacity is greater than/equal to the fourth threshold.

The signal quality is obtained based on one or more of a reference signal received power RSRP, reference signal received quality RSRQ, a signal to interference plus noise ratio SINR, a signal-to-noise ratio SNR, and a channel quality indicator CQI.

In this embodiment of the present invention, the first event configured by the second device for the first device may be a plurality of different events (for example, the signal quality is less than the first threshold or the signal quality is greater than or equal to the first threshold). In addition, when different events are satisfied, effects achieved by the first device by using the first algorithm may be different. For example, when the signal quality is greater than or equal to the first threshold, the first device can achieve an optimal effect by using the first algorithm; and in another case (for example, the signal quality is less than the first threshold), an effect achieved by using another algorithm may be better than that achieved by using the first algorithm. Therefore, the second device may flexibly configure a corresponding first event for the first algorithm, so that the first device can achieve an optimal effect by using the first algorithm.

In a possible implementation, the first indication information includes an identifier of the first algorithm.

In this embodiment of the present invention, the first indication information sent by the second device to the first device may include the identifier of the first algorithm, so that after receiving the first indication information, the first device can directly determine the corresponding first algorithm based on the identifier of the first algorithm, and then enable the first algorithm. In addition, because a quantity of bits required for transmitting the identifier of the first algorithm is relatively small, a transmission resource can be saved.

In a possible implementation, the first indication information is carried in downlink control information DCI, radio resource control RRC signaling, or media access control MAC signaling.

In this embodiment of the present invention, the second device may add the first indication information to the DCI, the RRC signaling, or the MAC signaling (for example, MAC CE signaling), so that the first device can receive the first indication information more quickly, and an algorithm can be switched more quickly, thereby reducing an algorithm switching delay.

In a possible implementation, the first model is one of a neural network model, a decision tree model, a random forest model, a linear regression model, a logistic regression model, a support vector machine model, or a naive Bayes model.

In this embodiment of the present invention, the first model may be one of a neural network model, a decision tree model, a random forest model, a linear regression model, a logistic regression model, a support vector machine model, or a naive Bayes model. When different models satisfy different events, different models may have different performance or final effects for different problems. Therefore, the first model configured by the second device for the first device may be an optimal model (for example, a support vector machine model) in the first event, so that an optimal effect can be achieved.

A fifth aspect discloses a communication method. The communication method may be applied to a first device or a module (for example, a chip) in the first device. The following uses an example in which the communication method is applied to the first device for description. The communication method may include:
processing first data by using a first algorithm to obtain second data, where the first algorithm is a first model or a first part of the first model; and
sending a first data packet to a second device, where the first data packet includes first indication information that indicates the first algorithm and the second data.

In this embodiment of the present invention, the first device may process the first data by using the first algorithm to obtain the second data. Then, the first device may send the first data packet including the first indication information and the second data to the second device, so that after receiving the first data packet, the second device can determine, by using the first indication information, a collaborative algorithm corresponding to the first algorithm, and process the second data by using a second algorithm. It can be learned that the first device includes the first indication information in the sent first data packet, so that it can be ensured that the second device can correctly process the second data by using the collaborative algorithm corresponding to the first algorithm, thereby avoiding an algorithm confusion problem.

In a possible implementation, the first indication information includes an identifier of the first algorithm.

In this embodiment of the present invention, the first data packet sent by the first device may include the first indication information, and the first indication information may include the identifier of the first algorithm, so that the second device can directly determine the corresponding first algorithm based on the identifier of the first algorithm, and then can determine the collaborative algorithm corresponding to the first algorithm. In this way, it can be ensured that the second device can process the second data by using the correct algorithm, thereby avoiding an algorithm confusion problem. In addition, because a quantity of bits required for transmitting the identifier of the first algorithm is relatively small, a transmission resource can be saved.

In a possible implementation, the first indication information is 1-bit information, and the method may further include:
processing third data by using a second algorithm to obtain fourth data, where the second algorithm is different from the first algorithm; and
sending a second data packet to the second device, where the second data packet includes second indication information ad the fourth data, and a value of the second indication information is different from a value of the first indication information.

In this embodiment of the present invention, the first indication information sent by the first device is 1-bit information. When the first device switches an algorithm, the first device processes the third data by using the second algorithm (different from the first algorithm) to obtain the fourth data. Then, the first device may send the second data packet to the second device, where the second data packet may include the second indication information and the fourth data, and the value of the second indication information is different from the value of the first indication information. It can be learned that when using different algorithms, the first device may flip 1-bit indication information carried in a data packet to notify the second device whether the data carried in the data packet is obtained by using a new algorithm (the second algorithm) or an old algorithm (the first algorithm), thereby avoiding an algorithm confusion problem.

In a possible implementation, the method may further include:
sending control signaling to the second device, where the control signaling includes an end marker and a first serial number.

In this embodiment of the present invention, when the first device switches an algorithm (for example, switches from the first algorithm to a third algorithm) and submits a data packet obtained by using the old algorithm (the first algorithm) to a bottom layer, the first device may send the control signaling to the second device, where the control signaling includes the end marker and the first serial number, to notify the second device that data carried in a data packet whose serial number is before the first serial number is obtained by using the old algorithm (the first algorithm) and that data carried in a data packet whose serial number is after the first serial number is obtained by using the new algorithm (the third algorithm), thereby avoiding an algorithm confusion problem.

In a possible implementation, after the sending control signaling to the second device, the method may further include:
processing fifth data by using a third algorithm to obtain sixth data, where the third algorithm is different from the first algorithm; and
sending a third data packet to the second device, where the third data packet includes third indication information and the sixth data, and the third indication information is a serial number of the third data packet.

In this embodiment of the present invention, after the first device sends the control signaling to the second device, the first device may process the fifth data by using the third algorithm to obtain the sixth data. Then, the first device may send the third data packet including the third indication information and the sixth data to the second device, where the third indication information may be the serial number of the third data packet, so that after receiving the third data packet, the second device may determine, by using the serial number of the third data packet, whether the sixth data included in the third data packet is obtained by using the new algorithm (the third algorithm) or the old algorithm (the first algorithm), thereby avoiding an algorithm confusion problem.

In a possible implementation, the method may further include:
receiving fourth indication information from the second device, where the fourth indication information indicates to switch an algorithm to the second algorithm or the third algorithm, the second algorithm is a second model or a second part of the first model, and the third algorithm is a third model or a third part of the first model; and
enabling the second algorithm or the third algorithm.

In this embodiment of the present invention, the first device may first receive the fourth indication information from the second device. Then, the first device may switch to an algorithm (the second algorithm or the third algorithm) based on the fourth indication information. It can be learned that the first device may switch an algorithm after receiving the fourth indication information from the second device. Therefore, the second device can learn of an approximate time of algorithm switching of the first device and a specific algorithm used before and after the switching, so that the first device can perform corresponding processing in a period of time to resolve an algorithm confusion problem.

A sixth aspect discloses a communication method. The communication method may be applied to a second device or a module (for example, a chip) in the second device. The following uses an example in which the communication method is applied to the second device for description. The communication method may include:
receiving a first data packet from a first device, where the first data packet includes first indication information that indicates a first algorithm and second data, and the first algorithm is a first model or a first part of the first model; and
processing the second data by using a fourth algorithm, where the fourth algorithm is a collaborative algorithm corresponding to the first algorithm.

In this embodiment of the present invention, the second device may receive the first data packet from the first device, where the first data packet may include the first indication information and the second data. Then, the second device may determine, based on the first indication information, the collaborative algorithm (the fourth algorithm) corresponding to the first algorithm, and may process the second data by using the fourth algorithm. It can be learned that the first device includes the first indication information in the sent first data packet, so that it can be ensured that the second device can correctly process the second data by using the collaborative algorithm corresponding to the first algorithm, thereby avoiding an algorithm confusion problem.

In a possible implementation, the first indication information includes an identifier of the first algorithm.

In this embodiment of the present invention, the first indication information may include the identifier of the first algorithm. Therefore, the second device may directly determine the corresponding first algorithm based on the identifier of the first algorithm. Then, the second device may determine the collaborative algorithm (the fourth algorithm) corresponding to the first algorithm, and may process the second data by using the fourth algorithm, thereby avoiding a model confusion problem. In addition, because a quantity of bits required for transmitting the identifier of the first algorithm is relatively small, a transmission resource can be saved.

In a possible implementation, the first indication information is 1-bit information, and the method may further include:
receiving a second data packet from the first device, where the second data packet includes second indication information and fourth data; and
when a value of the first indication information is the same as a value of the second indication information, processing the fourth data by using the fourth algorithm; or
when the value of the first indication information is different from the value of the second indication information, processing the fourth data by using a fifth algorithm, where the fifth algorithm is a collaborative algorithm corresponding to a second algorithm, the second algorithm is different from the first algorithm, and the fourth algorithm is different from the fifth algorithm.

In this embodiment of the present invention, the first indication information is 1-bit information, and the second device may receive the second data packet from the first device, where the second data packet includes the second indication information and the fourth data. Then, the second device may first determine whether the value of the first indication information is the same as the value of the second indication information. When it is determined that the value of the first indication information is the same as the value of the second indication information, it indicates that the fourth data is obtained by using an old algorithm (the first algorithm), and the second device may process the fourth data by using the fourth algorithm (that is, the collaborative algorithm corresponding to the first algorithm). When it is determined that the value of the first indication information is different from the value of the second indication information, it indicates that the fourth data is obtained by using a new algorithm (the second algorithm), and the second device may process the fourth data by using the fifth algorithm (that is, the collaborative algorithm corresponding to the second algorithm). It can be learned that, by determining whether the value of the first indication information is the same as the value of the second indication information, the second device may learn whether the fourth data is obtained by using the new algorithm or the old algorithm, so that the fourth data can be processed by using a correct collaborative algorithm, thereby avoiding a model confusion problem.

In a possible implementation, the method may further include:
receiving control signaling from the first device, where the control signaling includes an end marker and a first serial number.

In this embodiment of the present invention, the second device may receive the control signaling from the first device, where the control signaling may include the end marker and the first serial number. The first serial number indicates that data carried in a data packet whose serial number is before the first serial number is obtained by using the old algorithm (the first algorithm) and that data carried in a data packet whose serial number is after the first serial number is obtained by using the new algorithm (the third algorithm). Therefore, the second device may determine, by using the first serial number, whether data included in a data packet is obtained by using the new algorithm or the old algorithm, thereby avoiding an algorithm confusion problem.

In a possible implementation, after the receiving control signaling from the first device, the method may further include:
receiving a third data packet from the first device, where the third data packet includes third indication information and sixth data, and the third indication information is a serial number of the third data packet; and
when the serial number of the third data packet is before the first serial number, processing the sixth data by using the fourth algorithm; or
when the serial number of the third data packet is after the first serial number, processing the sixth data by using a sixth algorithm, where the sixth algorithm is a collaborative algorithm corresponding to a third algorithm, the third algorithm is different from the first algorithm, and the sixth algorithm is different from the fourth algorithm.

In this embodiment of the present invention, after receiving the control signaling from the first device, the second device may further receive the third data packet, where the third data packet includes the third indication information and the sixth data, and the third indication information is the serial number of the third data packet. Then, the second device may first determine whether the serial number of the third data packet is before or after the first serial number. When it is determined that the serial number of the third data packet is before the first serial number, it indicates that the sixth data is obtained by using the old algorithm (the first algorithm), and the second device may process the sixth data by using the fourth algorithm. When it is determined that the serial number of the third data packet is after the first serial number, it indicates that the sixth data is obtained by using the new algorithm (the third algorithm), and the second device may process the sixth data by using the sixth algorithm (that is, the collaborative algorithm corresponding to the third algorithm). It can be learned that, by determining whether the serial number of the third data packet is before or after the first serial number, the second device may learn whether the sixth data is obtained by using the new algorithm or the old algorithm, so that the sixth data can be processed by using a correct collaborative algorithm, thereby avoiding a model confusion problem.

In a possible implementation, the method may further include:
sending fourth indication information to the first device, where the fourth indication information indicates to switch an algorithm to the second algorithm or the third algorithm, the second algorithm is a second model or a second part of the first model, and the third algorithm is a third model or a third part of the first model.

In this embodiment of the present invention, the second device may send the fourth indication information to the first device, and indicate, by using the fourth information, the first device to switch an algorithm. Therefore, the second device can learn of an approximate time of algorithm switching of the first device and a specific algorithm used before and after the switching, so that the first device can perform corresponding processing in a period of time to resolve an algorithm confusion problem.

A seventh aspect discloses a communication apparatus. The communication apparatus may be a first device or a module (for example, a chip) in the first device. The communication apparatus may include:
a determining unit, configured to determine that a first event is satisfied;
an obtaining unit, configured to obtain a first algorithm corresponding to the first event, where the first algorithm is a first model or a part of the first model; and
an enabling unit, configured to enable the first algorithm.

In a possible implementation, the apparatus may further include:
a receiving unit, configured to receive configuration information from a second device, where the configuration information includes one or more events and corresponding algorithms, and the one or more events include the first event.

In a possible implementation, the apparatus may further include:
a sending unit, configured to send indication information to the second device, where the indication information indicates the first algorithm.

In a possible implementation, the indication information is an identifier of the first algorithm or an identifier of the first event.

In a possible implementation, the first model is one of a neural network model, a decision tree model, a random forest model, a linear regression model, a logistic regression model, a support vector machine model, or a naive Bayes model.

In a possible implementation, the first event includes one or more of a signal quality event, a power level event, a memory event, and a storage event.

The signal quality event is that signal quality is less than a first threshold or the signal quality is greater than/equal to the first threshold. The power level event is that a power level of the first device is less than a second threshold or the power level of the first device is greater than/equal to the second threshold. The memory event is that a memory is less than a third threshold or the memory is greater than/equal to the third threshold. The storage event is that a storage capacity is less than a fourth threshold or the storage capacity is greater than/equal to the fourth threshold.

The signal quality is obtained based on one or more of a reference signal received power RSRP, reference signal received quality RSRQ, a signal to interference plus noise ratio SINR, a signal-to-noise ratio SNR, and a channel quality indicator CQI.

An eighth aspect discloses a communication apparatus. The communication apparatus may be a second device or a module (for example, a chip) in the second device. The communication apparatus may include:
a determining unit, configured to determine configuration information; and
a sending unit, configured to send the configuration information to a first device, where the configuration information includes one or more events and corresponding algorithms, the one or more events include a first event, the first event corresponds to a first algorithm, and the first algorithm is a first model or a part of the first model.

In a possible implementation, the apparatus may further include:
a receiving unit, configured to receive indication information from the first device, where the indication information indicates the first algorithm.

In a possible implementation, the indication information is an identifier of the first algorithm or an identifier of the first event.

In a possible implementation, the determining unit is further configured to determine a second algorithm based on the indication information, where the second algorithm is a collaborative algorithm corresponding to the first algorithm.

The apparatus may further include:
an enabling unit, configured to enable the second algorithm.

In a possible implementation, the first model is one of a neural network model, a decision tree model, a random forest model, a linear regression model, a logistic regression model, a support vector machine model, or a naive Bayes model.

In a possible implementation, the first event includes one or more of a signal quality event, a power level event, a memory event, and a storage event.

The signal quality event is that signal quality is less than a first threshold or the signal quality is greater than/equal to the first threshold. The power level event is that a power level of the first device is less than a second threshold or the power level of the first device is greater than/equal to the second threshold. The memory event is that a memory is less than a third threshold or the memory is greater than/equal to the third threshold. The storage event is that a storage capacity is less than a fourth threshold or the storage capacity is greater than/equal to the fourth threshold.

The signal quality is obtained based on one or more of a reference signal received power RSRP, reference signal received quality RSRQ, a signal to interference plus noise ratio SINR, a signal-to-noise ratio SNR, and a channel quality indicator CQI.

A ninth aspect discloses a communication apparatus. The communication apparatus may be a first device or a module (for example, a chip) in the first device. The communication apparatus may include:
a receiving unit, configured to receive first indication information from a second device, where the first indication information indicates a first algorithm, and the first algorithm is a first model or a part of the first model; and
an enabling unit, configured to enable the first algorithm.

In a possible implementation, the receiving unit is further configured to receive configuration information from the second device, where the configuration information includes one or more algorithms and corresponding identifiers, and the one or more algorithms include the first algorithm.

In a possible implementation, the apparatus may further include:
a sending unit, configured to send second indication information to the second device, where the second indication information indicates a first event satisfied by the first device.

In a possible implementation, the sending unit is further configured to send third indication information to the second device, where the third indication information indicates whether the first device successfully enables or fails to enable the first algorithm, and the third indication information is response information corresponding to the first indication information.

In a possible implementation, the second indication information includes an identifier of the first event.

In a possible implementation, the first event includes one or more of a signal quality event, a power level event, a memory event, and a storage event.

The signal quality event is that signal quality is less than a first threshold or the signal quality is greater than/equal to the first threshold. The power level event is that a power level of the first device is less than a second threshold or the power level of the first device is greater than/equal to the second threshold. The memory event is that a memory is less than a third threshold or the memory is greater than/equal to the third threshold. The storage event is that a storage capacity is less than a fourth threshold or the storage capacity is greater than/equal to the fourth threshold.

The signal quality is obtained based on one or more of a reference signal received power RSRP, reference signal received quality RSRQ, a signal to interference plus noise ratio SINR, a signal-to-noise ratio SNR, and a channel quality indicator CQI.

In a possible implementation, the first indication information includes an identifier of the first algorithm.

In a possible implementation, the first indication information is carried in downlink control information DCI, radio resource control RRC signaling, or media access control MAC signaling.

A tenth aspect discloses a communication apparatus. The communication apparatus may be a second device or a module (for example, a chip) in the second device. The communication apparatus may include:
a determining unit, configured to determine a first algorithm, where the first algorithm is a first model or a part of the first model; and
a sending unit, configured to send first indication information to a first device, where the first indication information indicates the first algorithm.

In a possible implementation, the sending unit is further configured to send configuration information to the first device, where the configuration information includes one or more algorithms and corresponding identifiers, and the one or more algorithms include the first algorithm.

In a possible implementation, the apparatus may further include:
a receiving unit, configured to receive second indication information from the first device, where the second indication information indicates a first event satisfied by the first device.

The determining unit is specifically configured to determine the first algorithm based on the second indication information.

In a possible implementation, the receiving unit is further configured to receive third indication information from the first device, where the third indication information indicates whether the first device successfully enables or fails to enable the first algorithm, and the third indication information is response information corresponding to the first indication information.

In a possible implementation, the second indication information includes an identifier of the first event.

In a possible implementation, the first event includes one or more of a signal quality event, a power level event, a memory event, and a storage event.

The signal quality event is that signal quality is less than a first threshold or the signal quality is greater than/equal to the first threshold. The power level event is that a power level of the first device is less than a second threshold or the power level of the first device is greater than/equal to the second threshold. The memory event is that a memory is less than a third threshold or the memory is greater than/equal to the third threshold. The storage event is that a storage capacity is less than a fourth threshold or the storage capacity is greater than/equal to the fourth threshold.

The signal quality is obtained based on one or more of a reference signal received power RSRP, reference signal received quality RSRQ, a signal to interference plus noise ratio SINR, a signal-to-noise ratio SNR, and a channel quality indicator CQI.

In a possible implementation, the first indication information includes an identifier of the first algorithm.

In a possible implementation, the first indication information is carried in downlink control information DCI, radio resource control RRC signaling, or media access control MAC signaling.

An eleventh aspect discloses a communication apparatus. The communication apparatus may be a first device or a module (for example, a chip) in the first device. The communication apparatus may include:
a processing unit, configured to process first data by using a first algorithm to obtain second data, where the first algorithm is a first model or a first part of the first model; and
a sending unit, configured to send a first data packet to a second device, where the first data packet includes first indication information that indicates the first algorithm and the second data.

In a possible implementation, the first indication information includes an identifier of the first algorithm.

In a possible implementation, the first indication information is 1-bit information, and the processing unit is further configured to process third data by using a second algorithm to obtain fourth data, where the second algorithm is different from the first algorithm.

The sending unit is further configured to send a second data packet to the second device, where the second data packet includes second indication information and the fourth data, and a value of the second indication information is different from a value of the first indication information.

In a possible implementation, the sending unit is further configured to send control signaling to the second device, where the control signaling includes an end marker and a first serial number.

In a possible implementation, after the control signaling is sent to the second device, the processing unit is further configured to process fifth data by using a third algorithm to obtain sixth data, where the third algorithm is different from the first algorithm.

The sending unit is further configured to send a third data packet to the second device, where the third data packet includes third indication information and the sixth data, and the third indication information is a serial number of the third data packet.

In a possible implementation, the apparatus may further include:
a receiving unit, configured to receive fourth indication information from the second device, where the fourth indication information indicates to switch an algorithm to the second algorithm or the third algorithm, the second algorithm is a second model or a second part of the first model, and the third algorithm is a third model or a third part of the first model; and
an enabling unit, configured to enable the second algorithm or the third algorithm.

A twelfth aspect discloses a communication apparatus. The communication apparatus may be a second device or a module (for example, a chip) in the second device. The communication apparatus may include:
a receiving unit, configured to receive a first data packet from a first device, where the first data packet includes first indication information that indicates a first algorithm and second data, and the first algorithm is a first model or a first part of the first model; and
a processing unit, configured to process the second data by using a fourth algorithm, where the fourth algorithm is a collaborative algorithm corresponding to the first algorithm.

In a possible implementation, the first indication information includes an identifier of the first algorithm.

In a possible implementation, the first indication information is 1-bit information, and the receiving unit is further configured to receive a second data packet from the first device, where the second data packet includes second indication information and fourth data.

When a value of the first indication information is the same as a value of the second indication information, the processing unit is further configured to process the fourth data by using the fourth algorithm.

When the value of the first indication information is different from the value of the second indication information, the processing unit is further configured to process the fourth data by using a fifth algorithm, where the fifth algorithm is a collaborative algorithm corresponding to a second algorithm, the second algorithm is different from the first algorithm, and the fourth algorithm is different from the fifth algorithm.

In a possible implementation, the receiving unit is further configured to receive control signaling from the first device, where the control signaling includes an end marker and a first serial number.

In a possible implementation, after receiving the control signaling from the first device, the receiving unit is further configured to receive a third data packet from the first device, where the third data packet includes third indication information and sixth data, and the third indication information is a serial number of the third data packet.

When the serial number of the third data packet is before the first serial number, the processing unit is further configured to process the sixth data by using the fourth algorithm.

When the serial number of the third data packet is after the first serial number, the processing unit is further configured to process the sixth data by using a sixth algorithm, where the sixth algorithm is a collaborative algorithm corresponding to a third algorithm, the third algorithm is different from the first algorithm, and the sixth algorithm is different from the fourth algorithm.

In a possible implementation, the apparatus may further include:
a sending unit, configured to send fourth indication information to the first device, where the fourth indication information indicates to switch an algorithm to the second algorithm or the third algorithm, the second algorithm is a second model or a second part of the first model, and the third algorithm is a third model or a third part of the first model.

A thirteenth aspect discloses a communication apparatus. The communication apparatus may be a first device or a module (for example, a chip) in the first device. The communication apparatus may include a processor, a memory, and a transceiver. The transceiver is configured to: receive information from another communication apparatus other than the communication apparatus, and output information to the another communication apparatus other than the communication apparatus. When the processor executes a computer program stored in the memory, the processor is enabled to perform the communication method disclosed in any one of the first aspect or the implementations of the first aspect.

A fourteenth aspect discloses a communication apparatus. The communication apparatus may be a second device or a module (for example, a chip) in the second device. The communication apparatus may include a processor, a memory, and a transceiver. The transceiver is configured to: receive information from another communication apparatus other than the communication apparatus, and output information to the another communication apparatus other than the communication apparatus. When the processor executes a computer program stored in the memory, the processor is enabled to perform the communication method disclosed in any one of the second aspect or the implementations of the second aspect.

A fifteenth aspect discloses a communication apparatus. The communication apparatus may be a first device or a module (for example, a chip) in the first device. The communication apparatus may include a processor, a memory, and a transceiver. The transceiver is configured to: receive information from another communication apparatus other than the communication apparatus, and output information to the another communication apparatus other than the communication apparatus. When the processor executes a computer program stored in the memory, the processor is enabled to perform the communication method disclosed in any one of the third aspect or the implementations of the third aspect.

A sixteenth aspect discloses a communication apparatus. The communication apparatus may be a second device or a module (for example, a chip) in the second device. The communication apparatus may include a processor, a memory, and a transceiver. The transceiver is configured to: receive information from another communication apparatus other than the communication apparatus, and output information to the another communication apparatus other than the communication apparatus. When the processor executes a computer program stored in the memory, the processor is enabled to perform the communication method disclosed in any one of the fourth aspect or the implementations of the fourth aspect.

A seventeenth aspect discloses a communication apparatus. The communication apparatus may be a first device or a module (for example, a chip) in the first device. The communication apparatus may include a processor, a memory, and a transceiver. The transceiver is configured to: receive information from another communication apparatus other than the communication apparatus, and output information to the another communication apparatus other than the communication apparatus. When the processor executes a computer program stored in the memory, the processor is enabled to perform the communication method disclosed in any one of the fifth aspect or the implementations of the fifth aspect.

An eighteenth aspect discloses a communication apparatus. The communication apparatus may be a second device or a module (for example, a chip) in the second device. The communication apparatus may include a processor, a memory, and a transceiver. The transceiver is configured to: receive information from another communication apparatus other than the communication apparatus, and output information to the another communication apparatus other than the communication apparatus. When the processor executes a computer program stored in the memory, the processor is enabled to perform the communication method disclosed in any one of the sixth aspect or the implementations of the sixth aspect.

A nineteenth aspect discloses a communication system. The communication system includes the communication apparatus in the thirteenth aspect and the communication apparatus in the fourteenth aspect, or the communication system includes the communication apparatus in the fifteenth aspect and the communication apparatus in the sixteenth aspect, or the communication system includes the communication apparatus in the seventeenth aspect and the communication apparatus in the eighteenth aspect.

A twelfth aspect discloses a computer-readable storage medium. The computer-readable storage medium stores a computer program or computer instructions. When the computer program or the computer instructions are run, the communication method disclosed in any one of the foregoing aspects is performed.

A twenty-first aspect discloses a chip. The chip includes a processor, configured to execute a program stored in a memory. When the program is executed, the chip is enabled to perform the foregoing method.

In a possible implementation, the memory is located outside the chip.

A twenty-second aspect discloses a computer program product. The computer program product includes computer program code. When the computer program code is run, the foregoing communication method is enabled to be performed.

### BRIEF DESCRIPTION OF DRAWINGS

To describe technical solutions in embodiments of the present invention more clearly, the following briefly describes the accompanying drawings used in describing the embodiments. Apparently, the accompanying drawings in the following description show merely some embodiments of the present invention, and a person of ordinary skill in the art may still derive other drawings from these accompanying drawings without creative efforts.
FIG. 1 is a diagram of a network architecture according to an embodiment of the present invention;
FIG. 2 is a diagram of another network architecture according to an embodiment of the present invention;
FIG. 3 is a diagram of a protocol stack according to an embodiment of the present invention;
FIG. 4 is a diagram of single-point AI and cloud AI according to an embodiment of the present invention;
FIG. 5 is a diagram of a communication network supporting AI endogenously according to an embodiment of the present invention;
FIG. 6 is a diagram of protocol layers related to an AI task on a terminal device side and a network side according to an embodiment of the present invention;
FIG. 7 is a diagram of an AI inference task according to an embodiment of the present invention;
FIG. 8 is a diagram of three RAN architectures according to an embodiment of the present invention;
FIG. 9 is a schematic flowchart of a communication method according to an embodiment of the present invention;
FIG. 10 is a diagram of algorithm collaboration according to an embodiment of the present invention;
FIG. 11 is a diagram of other algorithm collaboration according to an embodiment of the present invention;
FIG. 12 is a diagram of an identifier of an algorithm (a neural network model) according to an embodiment of the present invention;
FIG. 13 is a diagram of an algorithm configuration and a use scenario according to an embodiment of the present invention;
FIG. 14 is a schematic flowchart of another communication method according to an embodiment of the present invention;
FIG. 15 is a diagram of an algorithm configuration according to an embodiment of the present invention;
FIG. 16 is a diagram of another algorithm configuration according to an embodiment of the present invention;
FIG. 17 is a diagram of sending algorithm recommendation information by a first device according to an embodiment of the present invention;
FIG. 18 is a diagram of another algorithm configuration and another use scenario according to an embodiment of the present invention;
FIG. 19 is a diagram of an algorithm confusion scenario according to an embodiment of the present invention;
FIG. 20 is a diagram of another algorithm confusion scenario according to an embodiment of the present invention;
FIG. 21 is a schematic flowchart of still another communication method according to an embodiment of the present invention;
FIG. 22 is a diagram of flipping 1-bit indication information according to an embodiment of the present invention;
FIG. 23 is a diagram of a solution to an algorithm confusion problem according to an embodiment of the present invention;
FIG. 24 is a diagram of another solution to an algorithm confusion problem according to an embodiment of the present invention;
FIG. 25 is a diagram of still another solution to an algorithm confusion problem according to an embodiment of the present invention;
FIG. 26 is a diagram of a structure of a communication apparatus according to an embodiment of the present invention;
FIG. 27 is a diagram of a structure of another communication apparatus according to an embodiment of the present invention;
FIG. 28 is a diagram of a structure of still another communication apparatus according to an embodiment of the present invention;
FIG. 29 is a diagram of a structure of still another communication apparatus according to an embodiment of the present invention;
FIG. 30 is a diagram of a structure of still another communication apparatus according to an embodiment of the present invention;
FIG. 31 is a diagram of a structure of still another communication apparatus according to an embodiment of the present invention;
FIG. 32 is a diagram of a structure of still another communication apparatus according to an embodiment of the present invention;
FIG. 33 is a diagram of a structure of still another communication apparatus according to an embodiment of the present invention; and
FIG. 34 is a diagram of a structure of a communication system according to an embodiment of the present invention.

### DESCRIPTION OF EMBODIMENTS

Embodiments of the present invention disclose a communication method and apparatus, and a computer-readable storage medium to reduce an algorithm switching delay. The following clearly and completely describes the technical solutions in embodiments of this application with reference to the accompanying drawings in embodiments of this application.

Apparently, the described embodiments are merely some but not all of embodiments of this application. "Embodiment" mentioned in the specification means that a particular feature, structure, or characteristic described with reference to embodiments may be included in at least one embodiment of this application. The phrase shown in various locations in the specification may not necessarily refer to a same embodiment, and is not an independent or optional embodiment exclusive from another embodiment. A person skilled in the art may understand explicitly and implicitly that embodiments described herein may be combined with other embodiments. All other embodiments obtained by a person of ordinary skill in the art based on embodiments of this application without creative efforts shall fall within the protection scope of this application.

In the specification, claims, and accompanying drawings of this application, the terms "first", "second", "third", and the like are used to distinguish between different objects but do not indicate a particular order. In addition, the terms "including" and "having" and any other variants thereof are intended to cover a non-exclusive inclusion. For example, a series of steps or units are included; optionally, a step or unit that is not listed is further included; or optionally, another inherent step or unit of the process, the method, the product, or the device is further included.

The accompanying drawings show only a part rather than all content related to this application. Before example embodiments are discussed in more detail, it should be mentioned that some example embodiments are described as processing or methods depicted as flowcharts. Although the flowchart describes operations (or steps) as sequential processing, many of them can be implemented in parallel, concurrently, or simultaneously. In addition, the sequence of the operations may be rearranged. The processing may be terminated upon completion of its operation, but may further have additional steps not included in the accompanying drawings. The processing may correspond to a method, a function, a procedure, a subroutine, a subprogram, or the like.

Terminologies such as "component", "module", "system", and "unit" used in this specification indicate computer-related entities, hardware, firmware, combinations of hardware and software, software, or software being executed. For example, a unit may be, but is not limited to, a process running on a processor, a processor, an object, an executable file, an execution thread, or a program, and/or may be distributed between two or more computers. In addition, these units may be executed from various computer-readable media storing various data structures. For example, the units may communicate with each other based on signals of one or more data packets (for example, second unit data exchanged with a local system, a distributed system, and/or another unit between networks such as an internet interacting with another system through signals) by using a local and/or remote process.

To better understand embodiments of the present invention, the following first describes a network architecture used in embodiments of the present invention.

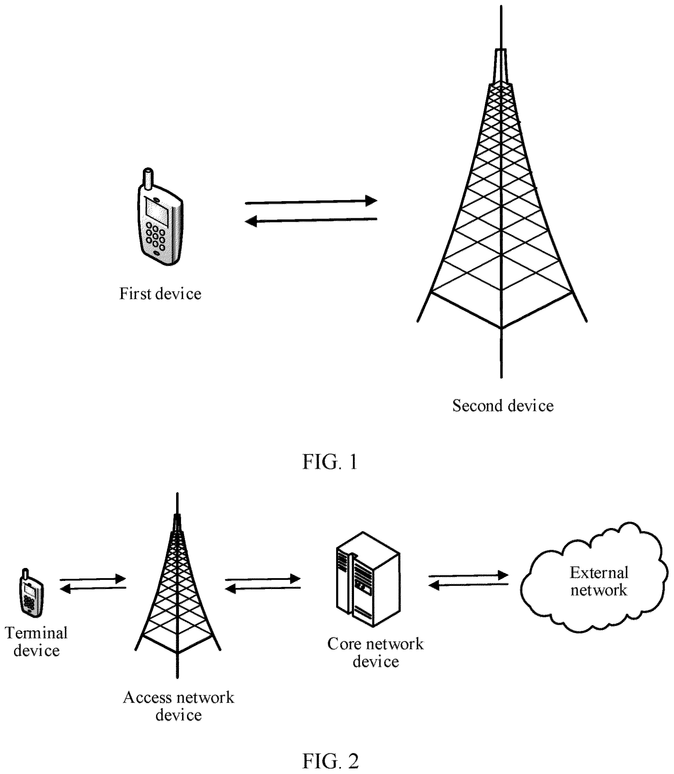

FIG. 1 is a diagram of a network architecture according to an embodiment of the present invention. As shown in FIG. 1, the network architecture may include a first device and a second device. There may be one or more first devices (one is shown in FIG. 1), and there may be one or more second devices (one is shown in FIG. 1).

The first device and the second device may communicate with each other in a wireless communication or wired communication manner.

The first device may be a terminal device, and the second device may be an access network device.

When the access network device is deployed by using a central unit (centralized unit, CU) and distributed unit (distributed unit, DU) separated architecture, the first device may be a terminal device, and the second device may be an entity device corresponding to a CU or an entity device corresponding to a DU; or the first device may be an entity device corresponding to a DU, and the second device may be an entity device corresponding to a CU.

When the access network device is deployed in a centralized unit-control plane (centralized unit-control plane, CU-CP) and centralized unit-user plane (centralized unit-user plane, CU-UP) and distributed unit (distributed unit, DU) separated architecture, the first device may be a terminal device, and the second device may be an entity device corresponding to a CU-CP, an entity device corresponding to a CU-UP, or an entity device corresponding to a DU; the first device may be an entity device corresponding to a DU, and the second device may be an entity device corresponding to a CU-CP or an entity device corresponding to a CU-UP; or the first device may be an entity device corresponding to a CU-UP, and the second device may be an entity device corresponding to a CU-CP.

It should be understood that the foregoing descriptions about the first device and the second device are merely examples for description, and constitute no limitation thereto. For example, the first device and the second device may alternatively be two different access network devices. For another example, the first device may be an access network device, and the second device may be a core network device, for example, a user plane function (user plane function, UPF) network element, an access and mobility management function (access and mobility function, AMF) network element, or another core network element. For another example, the first device and the second device may be two different terminal devices, which are not listed one by one herein.

It should be noted that names of all network elements in embodiments of the present invention are merely used as examples. In future communication, for example, a sixth generation mobile communication technology (6^{th} generation mobile networks, 6G), the network elements may also be referred to as other names. Alternatively, in future communication, for example, in 6G, the network elements in embodiments of the present invention may be replaced with other entities or devices having same functions. This is not limited in embodiments of the present invention.

Access network devices may communicate with each other through an optical fiber interface or an Xn interface. An access network device and a terminal device may communicate with each other through a radio interface (that is, an air interface, for example, a Uu interface). An access network device and a core network device may communicate with each other through an NG interface. For example, an access network device and an AMF network element may communicate with each other through an N2 interface, and an access network device and a UPF network element may communicate with each other through an N3 interface. Core network devices may also communicate with each other through an NG interface. For example, a UPF network element and a session management function (session management function, SMF) network element may communicate with each other through an N4 interface, and UPF network elements may communicate with each other through an N9 interface. In addition, the core network device may further provide a service-based interface (RESTful interface). For example, the AMF network element may provide a service-based interface Namf, and the SMF network element may provide a service-based interface Nsmf. The DU and the CU may communicate with each other through an F 1 interface. An interface between the DU and the CU-CP is also referred to as an F1-C interface, and an interface between the DU and the CU-UP is also referred to as an F1-U interface. CU-CPs may communicate with each other through an E1 interface.

It should be understood that the foregoing descriptions of related interfaces of the access network device, the core network device, the terminal device, the CU, the DU, and the CU-CP are merely examples for description. In future communication, for example, in 6G, related interfaces may also be referred to as other names. This is not limited in embodiments of the present invention.

Communication between the terminal device and the access network device may include uplink communication (that is, communication from the terminal device to the access network device) and downlink communication (that is, communication from the access network device to the terminal device). In uplink communication, the terminal device is configured to send an uplink signal to the access network device, and the access network device is configured to receive the uplink signal from the terminal device. In downlink communication, the access network device is configured to send a downlink signal to the terminal device, and the terminal device is configured to receive the downlink signal from the access network device. A link corresponding to uplink communication is an uplink, and a link corresponding to downlink communication is a downlink.

It should be noted that the network architecture shown in FIG. 1 is not limited to including only the first device and the second device that are shown in the figure. It should be understood that the network architecture shown in FIG. 1 is merely an example for description, and constitutes no limitation thereto.

FIG. 2 is a diagram of another network architecture according to an embodiment of the present invention. As shown in FIG. 2, the network architecture may include a terminal device, an access network device, a core network device, and an external network. There may be one or more terminal devices (one is shown in FIG. 2), there may be one or more access network devices (one is shown in FIG. 2), and there may be one or more core network devices (one is shown in FIG. 2).

The terminal device and the access network device may communicate with each other, the access network device and the core network device may communicate with each other, and the core network device and the external network may communicate with each other. Correspondingly, a first device and a second device may be terminal devices, access network devices, or core network devices. For details, refer to the foregoing related descriptions. Details are not described herein again.

It should be noted that the network architecture shown in FIG. 2 is not limited to including only the terminal device, the access network device, the core network device, and the external network that are shown in the figure. It should be understood that the network architecture shown in FIG. 2 is merely an example for description, and constitutes no limitation thereto.

The terminal device is also referred to as user equipment (user equipment, UE), a mobile station (mobile station, MS), a mobile terminal (mobile terminal, MT), or the like, and is a device that provides a user with voice and/or data connectivity. The terminal device may be a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, a wearable device (for example, a smartwatch, a smart band, or a pedometer), a vehicle-mounted device (for example, an automobile, a bicycle, an electric vehicle, an airplane, a ship, a train, or a high-speed rail), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, workshop equipment, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in smart home (smart home), a flying device (for example, an intelligent robot, a hot air balloon, an uncrewed aerial vehicle, or an airplane), or another device that can access a network.

The access network device may include a radio access network device. The radio access network device is an apparatus that is deployed in a radio access network and that provides a wireless communication function for a terminal device. The radio access network (radio access network, RAN) device may include base stations (base station, BS) in various forms, for example, a macro base station, a micro base station (also referred to as a small cell), a relay station, or an access point. In systems using different radio access technologies, names of radio access network devices may be different, for example, a base transceiver station (base transceiver station, BTS) in a global system for mobile communication (global system for mobile communication, GSM) or a code division multiple access (code division multiple access, CDMA) network, an NB (NodeB) in wideband code division multiple access (wideband code division multiple access, WCDMA), an eNB or eNodeB (evolved NodeB) in long term evolution (long term evolution, LTE), and a gNB in new radio (new radio, NR). Alternatively, the radio access network device may be a radio controller in a cloud radio access network (cloud radio access network, CRAN) scenario. Alternatively, the radio access network device may be a base station device in a future network (for example, a sixth generation mobile communication technology (6^{th} generation mobile communication technology, 6G)) or a radio access network device in a future evolved public land mobile network (public land mobile network, PLMN). Alternatively, the radio access network device may be a wearable device or a vehicle-mounted device. Alternatively, the radio access network device may be a transmission and reception point (transmission and reception point, TRP).

The access network device is mainly responsible for functions related to an air interface, for example, a radio link maintenance function (responsible for maintaining a radio link with a terminal, and responsible for protocol conversion between radio link data and an internet protocol (internet protocol, IP) data), a radio resource management function (responsible for establishing and releasing a radio link, scheduling and allocating a radio resource, and so on), and some mobility management functions (including configuring a terminal for measurement, evaluating radio link quality of a terminal, and deciding a handover of a terminal between cells).

The core network device is an apparatus that is deployed in a core network and that provides various functions and services for the terminal device and the access network device. The core network device may also be referred to as a core network element. The core network device is mainly responsible for core functions such as mobility management, session management, and data transmission of the terminal device. The core network device mainly helps implement various functions of the core network. The core network is the core part of a mobile communication network and functions as a link between an upper layer and a lower layer.

The core network provides user connections, manages users, and bears various services, and functions as a bearer network to provide interfaces to an external network. User connections include mobility management (mobility management, MM), calling management (calling management, CM), switching/routing, and recording notification (connecting to an intelligent peripheral device with reference to an intelligent service). The user management mainly includes management of user descriptions, quality of service (quality of service, Qos) (including the description of user service QoS), user communication accounting (accounting), a virtual home environment (virtual home environment, VHE) (providing a virtual home environment for an intelligent platform session), and security (where an authentication center provides corresponding security measures, including security management for mobile services and security processing for external network access). The bearer connection (access to) includes an external public-switched telephone network (public-switched telephone network, PSTN), an external circuit data network and packet data network, an internet (internet), an enterprise intranet (intranets), and a short message service (short message service, SMS) server. A basic service that can be provided by a core network includes a mobile office, e-commerce, communication, an entertainment service, a travel and location-based service, a telemetry (telemetry) service, a simple message transfer service (monitoring and control), or the like.

It should be noted that this embodiment of the present invention is applicable to a homogeneous network, and is also applicable to a heterogeneous network. In addition, this embodiment of the present invention is applicable to a 4G communication system, a 5G communication system, a 6G communication system, a satellite communication system, an internet of vehicles system, an internet of things system, an industrial internet system, and a future evolved communication system. This is not limited herein.

To better understand embodiments of the present invention, the following first describes related technologies in embodiments of the present invention.

Artificial intelligence (artificial intelligence, AI) is a theory, a method, a technology, and an application system in which human intelligence is simulated and extended by using a digital computer or a machine controlled by a digital computer to perceive an environment, obtain knowledge, and achieve an optimal result by using the knowledge. In other words, artificial intelligence is a comprehensive technology in computer science. It aims to understand the essence of intelligence and produce a new intelligent machine that can respond in a similar way as human intelligence. Artificial intelligence is to research design principles and implementation methods of various intelligent machines, so that the machines have perception, inference, and decision-making functions.

The artificial intelligence technology is a comprehensive subject, and relates to a wide range of fields, including both hardware and software technologies. Basic technologies of artificial intelligence generally include technologies such as a sensor, a special-purpose artificial intelligence chip, cloud computing, distributed storage, a big data processing technology, an operation/interaction system, and mechatronics. Software technologies of artificial intelligence mainly include a computer vision technology, a voice processing technology, a natural language processing technology, machine learning/deep learning, and the like. Currently, the artificial intelligence technologies are relatively mature and have been applied to fields such as image recognition, self-recognized language processing, autonomous driving, intelligent internet of things, smart logistics, and city brain, and have achieved good results.

In the past few decades, wireless communication systems have evolved from the first generation analog communication technology to new radio (new radio, NR) of the fifth generation mobile communication technology (5^{th} generation mobile communication technology, 5G). At present, the research of the sixth generation mobile communication technology (6^{th} generation mobile communication technology, 6G) network is also under way.

Compared with the 4G communication system, the 5G communication system may support more new services, mainly including an enhanced mobile broadband (enhanced mobile broadband, eMBB) service, an ultra-reliable and low-latency communication (ultra-reliable and low-latency communication, URLLC) service, a machine-type communication (machine-type communication, MTC) service, where MTC may also be referred to as M2M, an augmented reality (augmented reality, AR) service, a virtual reality (virtual reality, VR) service, a vehicle to everything (vehicle to everything, V2X) service, and the like.

The eMBB services mainly include a high-traffic mobile broadband service such as an ultra high definition video. For users, the intuitive feeling is a significant increase in the internet speed, and there will be no lag when the users watch 4K high definition videos. URLLC features high reliability, low latency, and high availability, and is mainly used to support services that require low latency and high reliability, such as unmanned driving and industrial automation. MTC features low costs and enhanced coverage, and is mainly used to support large-scale internet of things services. V2X is the key technology of a future intelligent transportation system. It enables communication between vehicles, between a vehicle and an access network device, and between access network devices, so that a series of traffic information such as real-time road condition information and pedestrian information can be obtained. Then, duration of a traffic light can be optimized by using the foregoing information, thereby improving driving safety, reducing road congestion, and improving traffic efficiency.

Because 5G needs to support services such as eMBB, URLLC, and MTC, a core network architecture and an access network architecture of the 5G communication system are much different from those of the fourth generation mobile communication technology (4^{th} generation mobile communication technology, 4G), and an overall network architecture is optimized, so that the overall network architecture is more flexible. In addition, a coding and modulation scheme, a transmission technology, a multiple access technology, and the like that are used in the 5G communication system are also partially different from those used in 4G. For example, technologies such as polar code (polar code), non-orthogonal multiple access (non-orthogonal multiple access, NOMA), and a larger-scale antenna array are used in 5G.

Based on an evolved packet core (evolved packet core, EPC), a 5G core network mainly has three new enhancements: a service-based architecture, supporting network slicing, and separation of a control plane and a user plane. In addition, the 5G core network evolves to a separated architecture again compared with the 4G core network. The first one is separation of network functions, and a design idea of cloud-native network function virtualization (network functions virtualization, NFV) is absorbed to establish a 5G network in a software-based, modular, and service-oriented manner. The second one is separation of the control plane and the user plane, so that user plane functions are not restricted by "centralization", and can be flexibly deployed in both a core network and an access network.

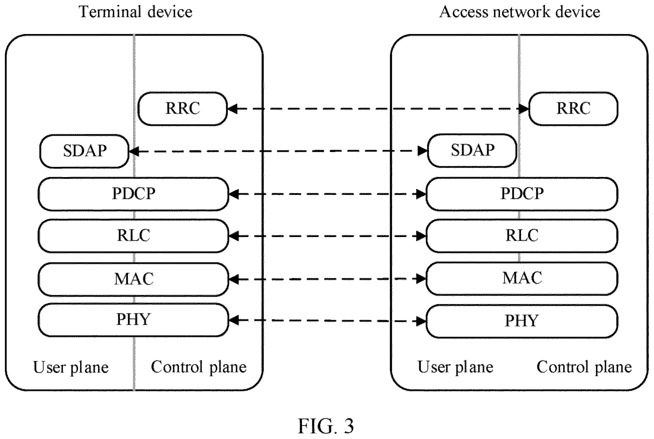

FIG. 3 is a diagram of a protocol stack according to an embodiment of the present invention. As shown in FIG. 3, a terminal device may include a control plane (control plane) protocol stack and a user plane (user plane) protocol stack, and an access network device may also include a control plane protocol stack and a user plane protocol stack. The user plane may include a physical layer (physical layer, PHY), a media access control (medium access control, MAC) layer, a radio link control (radio link control, RLC) layer, a packet data convergence protocol (packet data convergence protocol, PDCP) layer, and a service data adaptation protocol (service data adaptation protocol, SDAP) layer. The control plane may include a PHY layer, a MAC layer, an RLC layer, a PDCP layer, and a radio resource control (radio resource control, RRC) layer. Equivalent layers of the terminal device and the access network device may be connected to each other to transfer information.

In addition, with the maturity of artificial intelligence (artificial intelligence, AI) technologies, AI algorithms have demonstrated powerful performance in various fields. Currently, there is also research and application of an AI technology in the communication field. For example, an AI algorithm may be used to assist a network device (that is, an access network device or a core network device) in radio resource management (radio resource management, RRM), network fault monitoring, network security protection, and the like, so that performance of a communication system can be improved. However, an existing standard protocol does not support a related procedure and function of the AI.

Therefore, during implementation, currently, some AI functions may be integrated on an access network device side or a terminal device side to implement single-point AI. For example, for a radio resource management (radio resource management, RRM) algorithm on a base station side, an AI algorithm may be used to replace a conventional handover algorithm to improve handover efficiency. For another example, the access network device may have a built-in traffic prediction AI algorithm, and user traffic in each future time period is predicted by using the algorithm to assist a base station in sleeping and reduce energy consumption of the base station. For another example, for a terminal device, the terminal device may predict network quality in a future time period by using a built-in network quality prediction algorithm, so that data can be buffered in advance before the network quality deteriorates, thereby resolving problems such as video play frame freezing and user page loading failure. It can be learned that this manner is unaware to a communication system (network), and can be implemented without standardization. A communication operator, a mobile phone manufacturer, or the like may add a corresponding AI module or the like to a device for implementation.

In addition, if a plurality of devices need to perform a collaborative AI task (that is, an AI task that needs to be jointly completed by a plurality of network nodes), currently, only a centralized AI/cloud AI manner (for example, a centralized server manner) can be used for implementation. For example, AI algorithms may be deployed on a plurality of devices (for example, one or more terminal devices and one or more access network devices), and output data of the plurality of AI algorithms of the plurality of devices needs to be used as input data of another AI algorithm. In this case, because a standard protocol does not support a related procedure and function of AI, the plurality of devices can upload the output data of the algorithms only to one unified server, and then the server performs centralized collaborative AI training, inference, or the like. In this process, a communication network is only used as a pure pipe (that is, a channel for transmitting data), that is, the communication network is only responsible for transmitting the data to the server, and does not know what the transmitted data is. It can also be understood that the communication network is unaware of the collaborative AI task between the devices. In addition, in a cloud AI manner, because a large amount of data needs to be uploaded to the server, a relatively large quantity of transmission resources are consumed, and problems such as a long delay, security (data leakage), and a slow collaboration speed (unable to adapt to a rapid change of a network environment) exist.

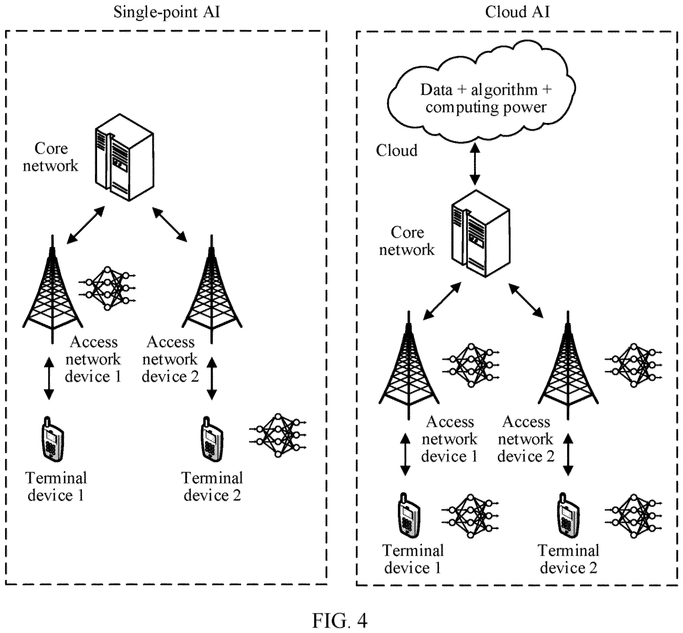

FIG. 4 is a diagram of single-point AI and cloud AI according to an embodiment of the present invention. As shown in FIG. 4, currently, in a case of single-point AI, a communication operator, a mobile phone manufacturer, or the like may add a corresponding AI module to a device. For example, an access network device 1 may have a built-in AI algorithm, and the AI algorithm may be used to optimize a control policy of the access network device, ensure network performance, improve network reliability, improve user experience, and so on. For another example, a terminal device 2 may also have a built-in AI algorithm, and the AI algorithm may be used to optimize a handover control policy, improve network reliability, improve user experience, and so on. In a case of cloud AI, an access network device 1, an access network device 2, a terminal device 1, and a terminal device 2 each may have a built-in AI algorithm, then need to upload outputs of the respective AI algorithms to a cloud (server), and perform centralized collaborative AI training, inference, or the like by using an AI environment on the cloud.

It can be learned that a current communication network (3GPP network) has weak support for AI, and cannot provide a complete AI environment (computing power + algorithm + data) or support multi-point collaboration endogenously/natively. AI can be implemented only in a manner such as by using a centralized server.

Then, with further integration of AI and a communication network, the communication network may support AI endogenously/natively, in other words, the communication network may provide a complete AI environment (computing power + algorithm + data), and may support multi-point collaboration endogenously/natively, for example, collaboration between a terminal device and an access network device, and collaboration between an access network device and another access network device. To enable a communication network to support AI endogenously, data/algorithm/computing power and the like on a centralized server (a cloud/cloud server) may be moved down to the communication network, so that the communication network can have a complete AI environment.

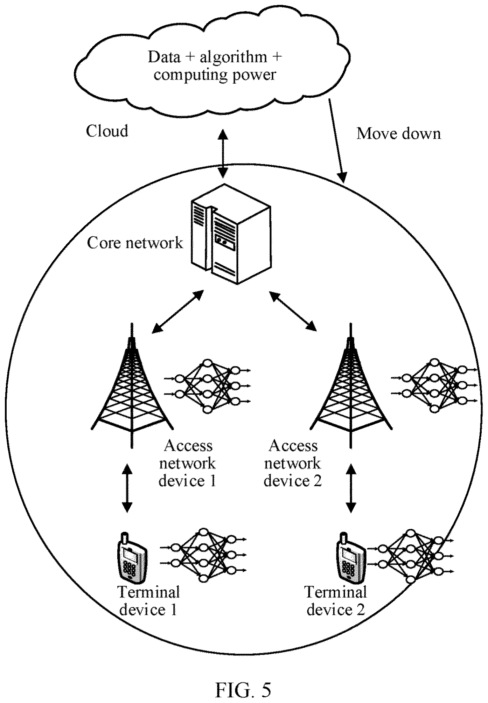

FIG. 5 is a diagram of a communication network supporting AI endogenously according to an embodiment of the present invention. As shown in FIG. 5, data/algorithm/computing power on a cloud may be moved down to the communication network, so that the entire communication network has a complete AI environment. In a case of endogenous AI, an access network device may configure an AI algorithm for a terminal device, and the access network device may directly collaborate with the terminal device without using the foregoing cloud AI manner. For example, an access network device 1 may configure an AI algorithm for a terminal device 1. Then, the terminal device 1 may obtain output data by using the AI algorithm. Next, the terminal device 1 may send the output data to the access network device 1. The access network device 1 may continue to process the output data by using another AI algorithm, then obtain an output result, and apply the output result. For another example, the access network device 1 may configure an AI algorithm for an access network device 2, and then the access network device 1 and the access network device 2 may perform a collaboration task. Similarly, the access network device 1, the terminal device 1, and the access network device 2 may also perform a collaboration task, for example, perform more intelligent cell handover by using an AI algorithm. Details are not listed herein.

It should be understood that when the communication network supports AI endogenously, the communication network is aware of an AI task (that is, a task such as an AI model training task or an AI model inference task) in the network. In other words, a network element in the communication network may learn of an AI task that currently exists and is being executed. In this case, the communication network is no longer used only as a transmission channel. In addition, when the communication network supports the AI endogenously and the communication network has a complete AI environment, an existing core network function network element (such as an AMF network element or a session management function (session management function, SMF) network element) may be used to manage the AI environment, for example, manage an AI computing resource, manage AI algorithm training, and manage AI algorithm use; or a core network function network element may be added to manage the AI environment. In addition, as a part of the communication network, the access network device may also manage some AI functions, for example, configure an AI algorithm for the terminal device.

It should be understood that the single-point AI and the cloud AI that are shown in FIG. 4 and the endogenous AI shown in FIG. 5 are merely examples for description, and constitute no limitation thereto.

After the communication network has the complete AI environment, two applications may be mainly included: The first one is AI4NET, to be specific, an AI technology is used in the communication network to assist in network optimization; and the second one is NET4AI, to be specific, an AI environment in the communication network is opened to a third party (for example, an individual user or an enterprise) for access.

In the AI4NET scenario, an AI algorithm is mainly used to optimize the communication system. For example, the AI algorithm may be used to optimize a control policy of the access network device; the AI algorithm may be used to locate a network fault more quickly and accurately, thereby improving network reliability and robustness; or the AI algorithm may be used to detect a network attack more accurately in real time, thereby ensuring user data security. Specifically, for the communication system, an AI algorithm may be used to replace some conventional RRM algorithms and radio transmission technology (radio transmission technology, RTT) algorithms, or an AI algorithm may be used to optimize some conventional RRM algorithms and RTT algorithms, thereby improving algorithm performance. Therefore, all RRM and RTT algorithm execution points may execute an AI task.

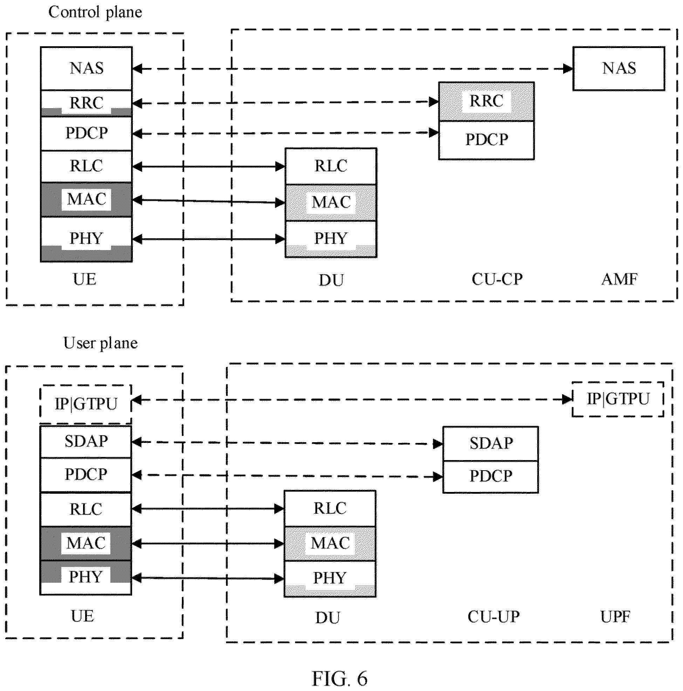

FIG. 6 is a diagram of protocol layers related to an AI task on a terminal device side and a network side according to an embodiment of the present invention. As shown in FIG. 6, for a control plane of the terminal device and network side, an RTT is mainly applied to a PHY layer, and RRM is mainly applied to a MAC layer and an RRC layer. Correspondingly, the RRC layer, the MAC layer, and the PHY layer may be RRM and RTT algorithm execution points. Therefore, for the control plane of the terminal device, an AI task may exist at the RRC layer, the MAC layer, and the PHY layer. For example, the RRC layer, the MAC layer, and the PHY layer may be optimized by using an AI algorithm or the like to improve efficiency and performance of each layer. For the control plane on the network side (that is, an access network device side and a core network device side), an AI task may also exist at an RRC layer, a MAC layer, and a PHY layer. Correspondingly, efficiency and performance of each layer may also be improved by using an AI algorithm or the like. For a user plane of the terminal device and network side, a MAC layer and a PHY layer may be RRM and RTT algorithm execution points. Therefore, for the user plane of the terminal device and network side, an AI task may exist at the MAC layer and the PHY layer, and efficiency of the MAC layer and the PHY layer may be improved by using an AI algorithm or the like.

It should be understood that the foregoing related AI tasks of the RRM and RTT algorithm execution points are merely examples for description, and constitute no limitation thereto. For example, there may be another AI task in a communication system, for example, a traffic prediction task (that is, a traffic prediction AI algorithm is used to assist an access network device in sleeping) or a network security monitoring task (that is, an AI algorithm is used to monitor an abnormal behavior in the communication network in real time, and discover a network attack in real time). The execution points of the AI task shown in FIG. 6 are merely examples for description, and constitute no limitation thereto.

In a NET4AI scenario, a complete AI environment in a communication network is provided for a third party to assist the third party in executing a related AI task. That is, an AI training function (including a computing resource required for AI training) or a trained AI algorithm may be provided for the third party. For example, a third-party user may use an AI algorithm (for example, a computer vision AI algorithm) in a communication system to recognize a picture, or train an AI model to obtain an expected AI model, or obtain environment information by using a perception function. In the NET4AI scenario, an AI task may be triggered by a third party or a user, and a task resource (for example, a computing resource) or a special node (for example, an access network device) in the communication network may be used to participate in task execution, thereby satisfying a requirement of the third party or the user.

AI tasks in the communication system may mainly include an AI inference task, an AI training task, a computing task, a perception task, and the like. Based on different execution bodies or different involved network elements (nodes), the AI tasks may be classified into a single-side (point) task, a two-point collaboration task, and a multi-point collaboration task. The single-side task is a task that may be independently executed on a terminal device side, or a task that may be independently executed on a node such as an access network device, a CU, a DU, a CU-CP, or a CU-UP. The two-point collaboration task is a collaboration task between two nodes (network elements). The two nodes may be a terminal device and an access network device, a terminal device and a DU, or the like. The multi-point collaboration task is a collaboration task between a plurality of nodes. The plurality of nodes may be one access network device and a plurality of terminal devices, one DU and a plurality of terminal devices, or the like. Details are not listed herein one by one.

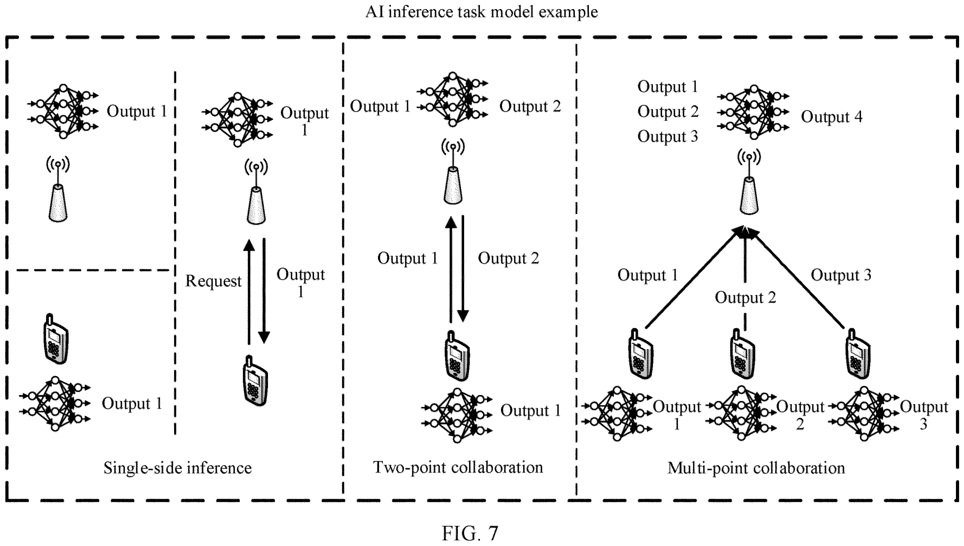

FIG. 7 is a diagram of an AI inference task according to an embodiment of the present invention. As shown in FIG. 7, the AI inference task may include a single-side (point) inference task, a two-point collaboration inference task, and a multi-point collaboration inference task. The single-side inference task may be an AI task directly executed by a terminal device or an access network device. For example, the terminal device or the access network device obtains an output result (namely, an output 1) directly by using an AI algorithm. Alternatively, the single-side inference task may be an AI task executed by the access network device after the terminal device sends a request to the access network device. For example, the terminal device first sends a request to the access network device, and then the access network device may obtain an output result by using an AI algorithm, and send the output result to the terminal device. A working mechanism of the single-point inference task is similar to that of an access and adaptive modulation and coding (adaptive modulation and coding, AMC) algorithm.

The two-point collaboration inference task may be an AI task collaboratively performed by the terminal device and the access network device. For example, the terminal device may first obtain an output 1 by using an AI algorithm. Then, the terminal device may send the output 1 to the access network device. The access network device processes the output 1 by using another AI algorithm to obtain an output 2. Next, the access network device may send the output 2 to the terminal device for application. A working mechanism of the two-point collaboration inference task is similar to that of a non-uniform constellation map technology.

The multi-point collaboration inference task may be an AI task collaboratively performed by a plurality of terminal devices and one access network device. For example, three terminal devices may be included. The three terminal devices may respectively obtain an output 1, an output 2, and an output 3 by using an AI algorithm, and may send the output 1, the output 2, and the output 3 to the access network device. The access network device may process the output 1, the output 2, and the output 3 by using another AI algorithm to obtain an output 4 and apply the output 4. A working mechanism of the multi-point collaboration inference task is similar to that of a coordinated multi-point (coordinated multiple points, COMP) technology, a multiple input multiple output (multiple input multiple output, MIMO) technology, or the like.

It should be understood that a working mechanism of another AI task, for example, an AI inference task such as an AI learning task, an AI computing task, or an AI perception task, is similar to that of the AI inference task. For details, refer to the foregoing related descriptions. Details are not described herein again. In addition, it should be further understood that the working mechanism of the AI inference task shown in FIG. 7 is merely an example for description, and constitutes no limitation thereto.

In different network architectures, nodes for executing AI tasks may be different. A 5G network is used as an example, for different RAN architectures (an xNB, a CU/DU separated architecture, and a CU-CP/CU-UP separated architecture), there may be a plurality of execution participating nodes when a computing task, an AI training task, an AI inference task, and a perception task are executed.

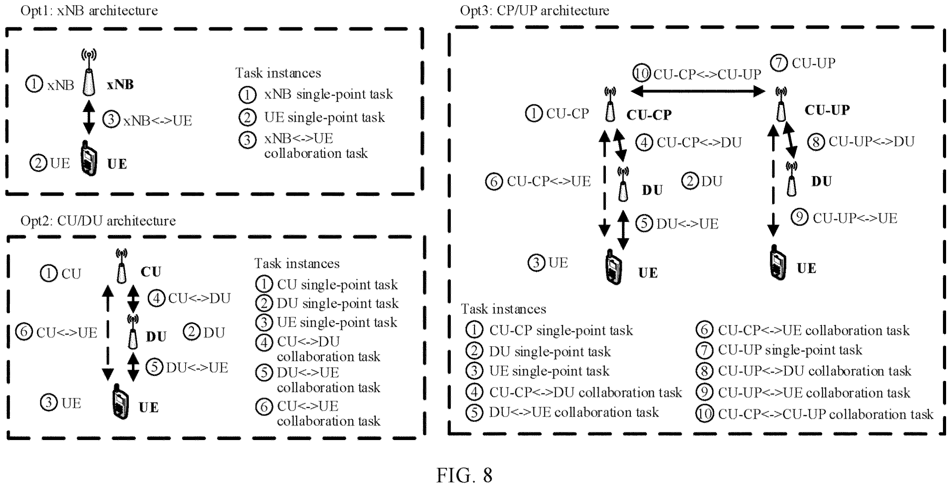

FIG. 8 is a diagram of three RAN architectures according to an embodiment of the present invention. As shown in FIG. 8, in a first optional architecture (option 1, Opt1), that is, an xNB (for example, a gNB) architecture, there may be an xNB single-point task, a UE single-point task, and a collaboration task between an xNB and UE. In a second optional architecture (option 2, Opt2), that is, a CU/DU separated architecture, there may be a CU single-point task, a DU single-point task, a UE single-point task, a collaboration task between a CU and a DU, a collaboration task between the DU and UE, and a collaboration task between the CU and the UE. In a third optional architecture (option 3, Opt3), that is, in a CU-CP/CU-UP separated architecture, there may be a CU-CP single-point task, a DU single-point task, a UE single-point task, a collaboration task between a CU-CP and a DU, a collaboration task between the DU and UE, a collaboration task between the CU-CP and the UE, a CU-UP single-point task, a collaboration task between a CU-UP and the DU, a collaboration task between the CU-UP and the UE, and a collaboration task between the CU-CP and the CU-UP.

It should be understood that the RAN architectures shown in FIG. 8 are merely examples for description, and constitute no limitation thereto.

When a communication network supports AI, that is, when the communication network has a complete AI environment, there may be a plurality of task scenarios in the communication network. Therefore, how to conveniently support the plurality of tasks and how to more flexibly configure an AI algorithm (for example, an AI model) for a terminal device and the like and reduce an algorithm switching delay are concerns of technical personnel.

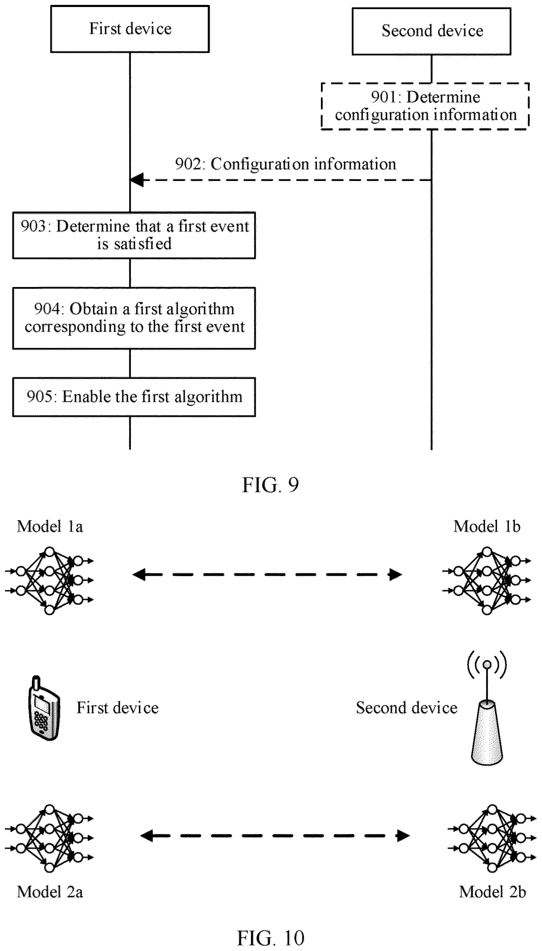

Based on the foregoing network architectures, refer to FIG. 9. FIG. 9 is a schematic flowchart of a communication method according to an embodiment of the present invention. As shown in FIG. 9, the communication method may include the following steps.

901: A second device determines configuration information.

In a communication system, devices such as a first device and the second device may use an AI algorithm, and the AI algorithm may be used to assist in network fault monitoring, radio resource management, and the like, so that network reliability can be improved, network robustness can be enhanced, and user experience can be optimized.

In addition, when the first device and the second device satisfy different events, that is, in different cases, the first device and the second device may use different algorithms.

For example, it is assumed that the second device is an access network device, and the first device is a terminal device. When a power level of the first device is relatively high (for example, the remaining power level is greater than 60%), the first device may use an algorithm with relatively high power consumption. When the power level of the first device is relatively low (for example, the remaining power level is less than or equal to 60%), to prevent the first device from consuming power too quickly and affecting normal use of a user, the first device needs to switch from an algorithm with higher power consumption to an algorithm with lower power consumption. For another example, when a currently running memory of the first device is relatively small (for example, the currently running memory is less than 5 gigabytes (gigabyte, GB)), and a utilization rate of a central processing unit (central processing unit, CPU) of the first device is relatively high (for example, the current utilization rate of the CPU is 80%), the first device may use an algorithm with a relatively small calculation amount to prevent that the algorithm cannot run or runs for an excessively long time. However, when the running memory of the first device is relatively large (for example, the currently running memory is greater than or equal to 5 GB), and the utilization rate of the central processing unit (central processing unit, CPU) of the first device is relatively low (for example, when the current utilization rate of the CPU is 5%), to obtain a more accurate result, the first device may switch from the algorithm with the relatively small calculation amount to an algorithm with a relatively large calculation amount.

Therefore, to enable the first device to quickly use a corresponding algorithm when different events are satisfied, the second device may first determine the configuration information of the first device. The configuration information may include one or more events and corresponding algorithms. The one or more events may include a first event, the first event corresponds to a first algorithm, and the first algorithm is a first model or a part of the first model. The first event may be understood as a condition for using the first algorithm. The one or more events may be different events, but the corresponding algorithms may be directed to a same problem. For example, the one or more events may include an event 1 (for example, the utilization rate of the CPU < 20%), an event 2 (20% ≤ the utilization rate of the CPU ≤ 60%), and an event 3 (the utilization rate of the CPU > 60%). An algorithm corresponding to the event 1 is an algorithm 1 (10-layer neural network model), an algorithm corresponding to the event 2 is an algorithm 2 (7-layer neural network model), and an algorithm corresponding to the event 3 is an algorithm 3 (3-layer neural network model). The algorithm 1, the algorithm 2, and the algorithm 3 may all be traffic prediction algorithms, and are used to assist the first device in sleeping, but use conditions of the algorithms are different. That the configuration information may include one or more events and corresponding algorithms may be understood as that the configuration information includes configuration information of the one or more events and may include configuration information of the algorithms corresponding to the one or more events. The configuration information of the one or more events may be used to configure the one or more events. The configuration information of the algorithms corresponding to the one or more events may be used to configure specific algorithms corresponding to the one or more events. For example, for the first algorithm, configuration information of the first algorithm may include a specific parameter of the first algorithm (for example, for a neural network model, the configuration information of the first algorithm may include a parameter file of the neural network model, a detailed quantity of layers of the neural network model, a quantity of neurons at each layer, and a detailed parameter of each neuron).

It should be noted that algorithms corresponding to one or more events included in the configuration information may be one or more different complete models, or may be a plurality of different segmentation parts of one complete model. For example, a plurality of corresponding algorithms may be first two layers, first three layers, first five layers, or the like of one neural network model; or may be one or more different complete models, or a plurality of different segmentation parts of one or more complete models.

The first event may include one or more of a signal quality event, a power level event, a memory event, and a storage event. The signal quality event may be that signal quality is less than a first threshold or the signal quality is greater than/equal to the first threshold. The power level event may be that a power level of the first device is less than a second threshold or the power level of the first device is greater than or equal to the second threshold. The memory event may be that a memory (that is, a running memory) is less than a third threshold or the memory greater than/equal to the third threshold. The storage event may be that a storage capacity (that is, a size of available storage space, for example, 60 GB) is less than a fourth threshold or the storage capacity is greater than/equal to the fourth threshold. For example, the first event may only be that the signal quality is less than the first threshold, may be that the signal quality is less than the first threshold and the memory is less than the third threshold, or may be that the signal quality is greater than/equal to the first threshold and the storage capacity is greater than/equal to the fourth threshold. Details are not listed herein one by one herein. In addition, values of the first threshold, the second threshold, the third threshold, and the fourth threshold may be determined based on an actual situation.

The signal quality may be obtained based on one or more of a reference signal received power (reference signal received power, RSRP), a reference signal received quality (reference signal receiving quality, RSRQ), a signal to interference plus noise ratio (signal to interference plus noise ratio, SINR), a signal-to-noise ratio (signal-noise ratio, SNR), and a channel quality indicator (channel quality indication, CQI). It should be understood that the signal quality may alternatively be obtained based on a received signal strength indicator (received signal strength indicator, RSSI), or the signal quality may be obtained based on an RSSI, an SINR, or the like. This is not limited herein. That the signal quality is less than the first threshold may be understood as that a signal quality score is less than the first threshold.

For example, a value of the RSRP may be directly used as the signal quality score (for example, if RSRP = -85 dBm, the signal quality score is -85); a value of the SINR may be directly used as the signal quality score (for example, if SINR = 50 dB, the signal quality score is 50); or a value obtained by weighting the RSRP, the RSRQ, the SINR, the SNR, the CQI, and the like may be used as the signal quality score (for example, if SINR = 50 dB, SNR = 40 dB, an SINR weight is 0.6, and an SNR weight is 0.4, the signal quality score may be 46). Because units and meanings of the RSRP, the RSRQ, the SINR, the SNR, and the CQI are different, corresponding processing may be performed. For example, the RSRP, the RSRQ, the SINR, the SNR, the CQI, and the like are normalized, so that values are all between 0 and 1.

It should be understood that the signal quality event may be that the signal quality is less than the first threshold or the signal quality is greater than/equal to the first threshold. In addition, the signal quality event may be that the signal quality is greater than the first threshold, the signal quality is not equal to the first threshold, the signal quality is equal to the first threshold, the signal quality is in an interval range (for example, -95 dBm ≤ RSRP < -85 dBm, -85 dBm ≤ RSRP ≤ -70 dBm, or -90 dBm < RSRP ≤ -80 dBm), the RSRP is less than a specific threshold (for example, -85 dBm) and the SINR is less than a specific threshold (for example, 65 decibels (dB)), or the SNR is greater than a specific threshold (for example, 30 dB) and the RSRP is greater than a specific threshold (for example, -75 dBm), and so on. Similarly, the power level event, the memory event, and the storage event may be other cases (for example, the power level of the first device is not equal to the second threshold). For details, refer to related descriptions of the signal quality event. Details are not described herein again.

The first event may further include other events, for example, a distance event (for example, a distance between the first device and the second device is less than 100 meters), a time event (for example, a time is between 8:00 and 22:00), and a CPU utilization rate event (for example, a CPU utilization rate is less than 50%).

The first model may be one of models such as a neural network model, a decision tree model, a random forest model, a linear regression model, a logistic regression model, a support vector machine model, and a naive Bayes model. The first model may alternatively be one of models such as a k nearest neighbor (k nearest neighbors, KNN) model, a Markov model, and an expectation-maximization (expectation-maximization, EM) model. In this embodiment of the present invention, the first model may be any AI model. This is not limited herein.

The first algorithm may be the first model. In this case, the first algorithm may be a complete model, for example, an SVM model, a KNN model, a decision tree model with a depth of 5, or a 10-layer convolutional neural network (convolutional neural networks, CNN) model (a type of neural network model).

Alternatively, the first algorithm may be a part of the first model. Specifically, when the first model may be divided into a plurality of parts, and needs to be divided into a plurality of parts for collaborative use, the first algorithm may be a part of the first model. That the first algorithm may be a part of the first model may be understood as that the first algorithm may be a part of a complete AI model. For example, when the first model is a neural network model, the first model may be segmented at one layer (for example, the third layer), and then divided into two parts for separate execution by two devices, or may be divided into three parts for separate execution by three devices. For another example, when the first model is a random forest model, a plurality of trees included in a random forest may be separately used by different devices, and then results are summarized. It can be understood that when the first model may be divided into a plurality of parts, one or more algorithms that may be included in the configuration information may be different parts (for example, the first layer, the first two layers, and the first three layers) of the first model, in other words, one algorithm may correspond to one segmentation point (for example, a layer 0, a layer 1, or a layer 2) of the first model, and different segmentation points may correspond to different events.

It should be noted that the first algorithm may be an algorithm that works independently, that is, an algorithm used to execute a single-point task; or the first algorithm may be a collaborative algorithm that needs to work with another algorithm, that is, an algorithm used to execute a collaboration task. When the first algorithm is an algorithm that works independently, the first algorithm may be a complete model (the first model). When the first algorithm is a collaborative algorithm, the first algorithm may be a complete model (the first model) or a part of a complete model (a part of the first model). When the first algorithm is a complete model, the first algorithm needs to collaborate with another algorithm. For example, an output of the first algorithm needs to be used as an input of another algorithm, or an output of another algorithm needs to be used as an input of the first algorithm. When the first algorithm is a part of a complete model (the first model), the first algorithm needs to collaborate with another part of the model.

FIG. 10 is a diagram of algorithm collaboration according to an embodiment of the present invention. As shown in FIG. 10, a first device may use an algorithm 1a (that is, a model 1a) and an algorithm 2a (that is, a model 2a), and a second device may use an algorithm 1b (that is, a model 1b) and an algorithm 2b (that is, a model 2b). The model 1a, the model 1b, the model 2a, and the model 2b are complete models. When satisfying an event 1, the first device may use the model 1a, the second device may use the model 1b, and an output of the model 1a may be used as an input of the model 1b, or an output of the model 1b may be used as an input of the model 1a. When satisfying an event 2, the first device may use the model 2a, the second device may use the model 2b, and an output of the model 2a may be used as an input of the model 2b, or an output of the model 2b may be used as an input of the model 2a. The model 1a and the model 1b are corresponding collaboration models and may be used in pairs. The model 2a and the model 2b are corresponding collaboration models and may be used in pairs.

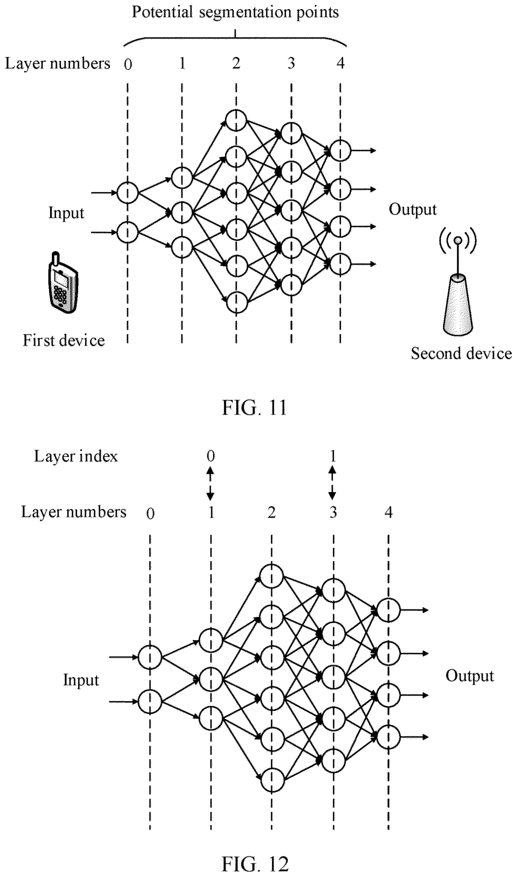

FIG. 11 is a diagram of other algorithm collaboration according to an embodiment of the present invention. As shown in FIG. 11, a first model may be a neural network model with five layers, and the first model may be segmented at any layer. Therefore, the first model may have five potential segmentation points (to be specific, a layer 0, a layer 1, a layer 2, a layer 3, and a layer 4). If the first model is segmented into two parts, the two parts may be respectively used by two devices. For example, after the first model is segmented at the second layer, a first device may use the first two layers (namely, the layer 0 and the layer 1), and then the first device may send output results of the first two layers to a second device. After receiving the output results of the first two layers from the first device, the second device may continue to run the last three layers (namely, the layer 2, the layer 3, and the layer 4) of the first model by using the output results, and then may obtain a final output result. In this manner of segmenting a model into a plurality of parts, and obtaining a final output result through collaboration of a plurality of devices, computing resources (such as a running memory resource and a central processing unit (central processing unit, CPU) resource) of all the devices may be used in a balanced manner, thereby avoiding that all computing is carried on a single device, and reducing computing pressure of a node.

It should be understood that the algorithm collaboration shown in FIG. 10 and FIG. 11 is merely an example for description, and constitutes no limitation thereto. For example, the model 1a and the model 1b that are shown in FIG. 10 may be used together with another model 1c, and outputs of the model 1a and the model 1b may be used together as inputs of the model 1c.

In addition, different algorithms may have different performance and final effects in different cases (different events are satisfied) and for different problems. Therefore, different events and corresponding algorithms (models or parts of models) may be flexibly configured for the first device to achieve an optimal effect.

902: The second device sends configuration information to the first device.

After determining the configuration information, the second device may send the configuration information to the first device. Correspondingly, the first device may receive the configuration information from the second device.

To enable the first device to use an algorithm in time and switch the algorithm in different events, in one case, the second device may directly send the configuration information to the first device in advance when a resource is relatively idle (that is, there are relatively many transmission resources that can be currently used). When the first device is a terminal device and the second device is a network device, the second device may send the configuration information to the first device by using RRC signaling, or may send the configuration information to the first device by using other signaling (for example, MAC CE signaling). In this embodiment of the present invention, a manner in which the second device sends the configuration information is not limited.

In another case, the first device may send an algorithm configuration request to the second device. Correspondingly, the second device may receive the algorithm configuration request from the first device. Then, the second device may send the configuration information to the first device based on the algorithm configuration request. In this embodiment of the present invention, an occasion at which the second device sends the configuration information to the first device is not limited.

903: The first device determines that the first event is satisfied.

The first device may be configured with one or more events, and the first device may monitor the one or more events.

Specifically, the first device may first receive the configuration information from the second device, and one or more events may be configured by using the configuration information. The first device may alternatively configure the one or more events in another manner. This is not limited herein. For example, the first device may locally store the configuration information in advance. Therefore, the first device may directly read the local configuration information. Therefore, it should be understood that step 901 and step 902 are optional.

The first device may monitor the one or more events, and may determine that the first event is satisfied. In one case, the first device may monitor the one or more events in real time. In another case, the first device may monitor the one or more events in a constant periodicity. For example, the first device may perform monitoring once every 10 milliseconds (ms) or every 1 second (s).

For example, the first event may be that the RSRP is less than -85 dBm. When the first device detects that the current RSRP is -70 dBm, the first device may not respond, and may continue to wait for next monitoring. When the first device detects that the current RSRP is -90 dBm, the first device may determine that the first event is satisfied.

904: The first device obtains the first algorithm corresponding to the first event.

When determining that the first event is satisfied, the first device may obtain the first algorithm corresponding to the first event.

Specifically, when determining that the first event is satisfied, the first device may first determine whether the first event is the same as an event satisfied last time. When determining that the first event is the same as the event satisfied last time, the first device may not respond, and continue to monitor the one or more events. When determining that the first event is different from the event satisfied last time, the first device may determine or obtain the first algorithm based on the first event and the configuration information to switch an algorithm.

905: The first device enables the first algorithm.

After the first device determines that the first event is satisfied and the first device obtains the first algorithm corresponding to the first event, the first device may enable the first algorithm.

In addition, when the first device successfully enables the first algorithm, the first device may send indication information to the second device, where the indication information indicates the first algorithm. Correspondingly, the second device may receive the indication information from the first device. The second device may learn, according to the indication information, that the algorithm currently used by the first device is the first algorithm, so that corresponding processing may be performed.

When the first device is a terminal device and the second device is a network device, the indication information may be carried in uplink control information (uplink control information, UCI), RRC signaling, or MAC signaling (for example, MAC CE signaling), in other words, the first device may add the indication information to the UCI, the RRC signaling, or the MAC signaling to be sent to the second device. Correspondingly, the second device may receive the UCI, the RRC signaling, or the MAC signaling from the first device, and may obtain the corresponding indication information therefrom. In addition, because the indication information may be carried in the UCI, the RRC signaling, or the MAC signaling, the second device may receive the indication information more quickly. It should be understood that the indication information may alternatively be carried in other signaling or control information. This is not limited herein. It should be further understood that when the first device is a terminal device and the second device is a core network device, first indication information may be carried in non-access stratum (non-access stratum, NAS) signaling.

The indication information may be an identifier (identity document, ID) of the first algorithm or an identifier of the first event. The identifier of the first algorithm may be an identifier of the first model. For example, it is assumed that there are four algorithms in total: an algorithm 1, an algorithm 2, an algorithm 3, and an algorithm 4. The algorithm 1 is a model 1, the algorithm 2 is a model 2, the algorithm 3 is a model 3, and the algorithm 4 is a model 4. Two bits may be used for representation. An identifier of the algorithm 1 may be an identifier 1 of the model 1, and may be represented by 00. An identifier of the algorithm 2 may be an identifier 2 of the model 2, and may be represented by 01. An identifier of the algorithm 3 may be an identifier 3 of the model 3, and may be represented by 10. An identifier of the algorithm 4 may be an identifier 4 of the model 4, and may be represented by 11. Alternatively, the identifier of the first algorithm may be an identifier of a segmentation point of the first model. For example, it is assumed that the first model has a plurality of segmentation points, and one or more algorithms included in the configuration information are different parts of the first model. There are three algorithms in total: an algorithm 1 (the first two layers of the first model), an algorithm 2 (the first three layers of the first model), and an algorithm 3 (the first four layers of the first model). In this case, an identifier of an algorithm is also an identifier of a corresponding layer (a segmentation point), and is represented by using three bits. An identifier of the algorithm 1 may be 010 (indicating the first two layers of the model). An identifier of the algorithm 2 may be 011 (indicating the first three layers of the model). An identifier of the algorithm 3 may be 100 (indicating the first four layers of the model). When there are a plurality of different models in the configuration information, and the plurality of different models include models including different segmentation points, the identifier of the first algorithm may alternatively be an identifier of a model + an identifier of a model segmentation point. For example, five bits may be used for representation, the first two bits are an identifier of a model, and the last two bits are an identifier of a segmentation point of the model. For example, 01011 may indicate the first three layers of the model 2. In this embodiment of the present invention, the indication information may alternatively be other information that can uniquely identify the first algorithm. For example, the indication information may be a name of the first algorithm, an index (number) of the first algorithm, or an index of the first event. This is not limited herein.

FIG. 12 is a diagram of an identifier of an algorithm (a neural network model) according to an embodiment of the present invention. As shown in FIG. 12, a first model may be a neural network model with five layers, and the first model may have five potential segmentation points (to be specific, a layer 0, a layer 1, a layer 2, a layer 3, and a layer 4), which correspond to five algorithms (that is, five different parts of the first model). In this case, an identifier of each algorithm may be a layer number corresponding to the algorithm, that is, identifiers of the five algorithms may be 0, 1, 2, 3, and 4. The first model may alternatively have only two segmentation points (to be specific, a layer 1 and a layer 3), which correspond to two algorithms (that is, two different parts of the first model), namely, an algorithm 1 and an algorithm 2. In this case, an identifier of each algorithm may also be a layer number corresponding to the algorithm. For example, an identifier of the algorithm 1 may be 1 (that is, the corresponding number of the layer), and an identifier of the algorithm 2 may be 3. An identifier of each algorithm may alternatively be a layer index, and the layer index may be understood as a number corresponding to a specific segmentation point (a layer number). For example, a layer index corresponding to the layer 1 may be 0, and a layer index corresponding to the layer 3 may be 1.

It should be understood that the identifiers of the algorithms shown in FIG. 12 are merely examples for description, and constitute no limitation thereto.

When the indication information is an identifier of a first algorithm, a second device may directly determine the corresponding first algorithm based on the identifier of the first algorithm. When the indication information is the identifier of the first event, and the second device stores a correspondence between the first event and the first algorithm, the second device may first determine the first event based on the identifier of the first event, and then may determine the corresponding first algorithm based on the first event.

In addition, when executing a collaboration task, the second device may determine a second algorithm according to the indication information, where the second algorithm is a collaborative algorithm corresponding to the first algorithm. Specifically, when the first algorithm and the second algorithm are corresponding collaborative algorithms, there is a correspondence between the first algorithm and the second algorithm, and the second device may determine, according to the indication information and the correspondence between the collaborative algorithms, the second algorithm corresponding to the first algorithm. Then, the second device may enable the second algorithm, so that the second device can perform a collaboration task with the first device.

It should be noted that, in addition to enabling the first algorithm corresponding to the first event, the first device may alternatively enable another algorithm.

For example, the first device may monitor an event 1 and an event 2. The event 1 is that a power level is less than 1000 mAh. The event 2 is that the power level is greater than or equal to 1000 mAh. An algorithm corresponding to the event 1 is an algorithm 1 with lower power consumption. An algorithm corresponding to the event 2 is an algorithm 2 with higher power consumption than the algorithm 1, but a result obtained by using the algorithm 2 is more accurate than that obtained by using the algorithm 1, and a final effect is better. When determining that the event 1 is satisfied, the first device may obtain the algorithm 1 corresponding to the event 1 and use the algorithm 1. However, if the first device needs a more accurate result without considering remaining power of the first device, the first device may use the algorithm 2.

In this embodiment of the present invention, the second device may deliver configuration information (an event and a corresponding algorithm) of an algorithm to the first device in advance. Then, the first device may monitor one or more events, and may directly obtain a corresponding algorithm for use when different events are satisfied, thereby reducing an algorithm switching delay. In addition, the second device may send the configuration information to the first device only once, and does not need to send an algorithm corresponding to an event to the first device again (that is, configure the algorithm for the first device again) each time when the first device satisfies a different event. Therefore, algorithm reconfiguration overheads can be reduced, and a transmission resource can be saved.

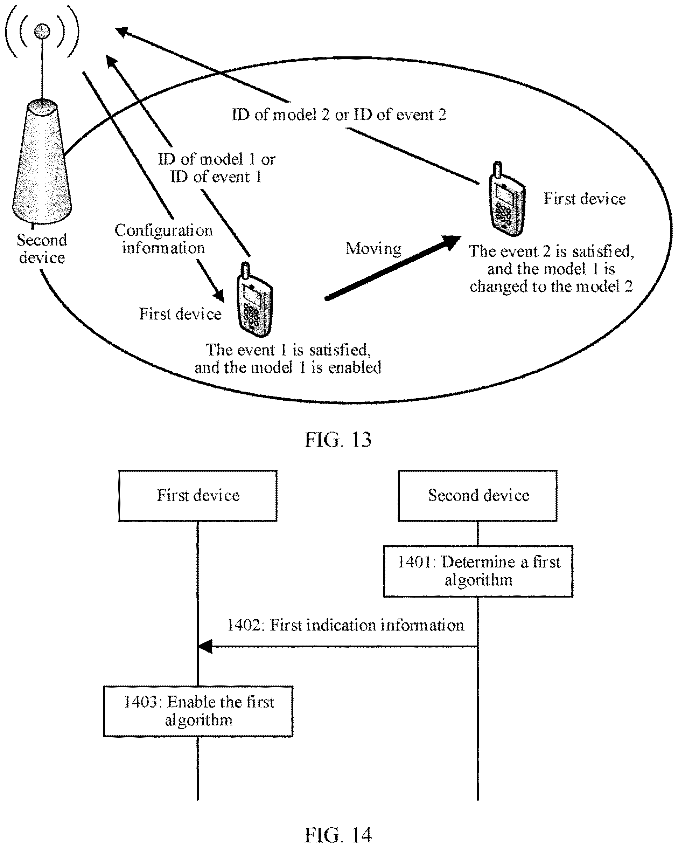

For example, FIG. 13 is a diagram of an algorithm configuration and a use scenario according to an embodiment of the present invention. As shown in FIG. 13, the second device may send configuration information to the first device in advance to configure one or more events and a corresponding algorithm for the first device. The one or more events may include an event 1 (RSRP ≥ -90 dBm) and a corresponding algorithm 1, and may further include an event 2 (RSRP < -90 dBm) and a corresponding algorithm 2. The algorithm 1 may be a model 1, and the algorithm 2 may be a model 2. Then, the first device may monitor the one or more events (that is, monitor whether the RSRP satisfies a corresponding threshold). When detecting that an event is satisfied, the first device may enable a corresponding algorithm. For example, when the first device is close to the second device, the RSRP obtained by the first device through measurement may be -80 dBm, and the first device may determine that the event 1 is satisfied. Then, the first device may directly enable the corresponding model 1. In addition, when the first device uses the model 1, the first device may send an ID of the model 1 or an ID of the event 1 to the second device, so that the second device can learn of an event currently satisfied by the first device and a currently used algorithm.

After the first device is moved, for example, moved from a place close to the second device to a place relatively far from the second device, the RSRP gradually decreases, for example, gradually decreases from -80 dBm to -90 dBm, and then decreases to -100 dBm. When the RSRP decreases to less than -90 dBm, the first device may determine that the event 2 is satisfied. In this case, the first device may switch from the model 1 to the model 2 corresponding to the event 2. In addition, when the first device uses the model 2, the first device may alternatively send an ID of the model 2 or an ID of the event 2 to the second device. Then, the first device may continue to move. For example, the first device moves from a location relatively far away from the second device to a location close to the second device. In this case, the RSRP gradually increases, for example, gradually increases from -100 dBm to -90 dBm, and then increases to -80 dBm. When the RSRP increases to greater than -90 dBm, the second device may determine that the event 1 is satisfied. In this case, the first device may switch from the model 2 to the model 1. In addition, the first device may send the ID of the model 1 or the ID of the event 1 to the second device.

It should be understood that the algorithm configuration and the use scenario that are shown in FIG. 13 are merely examples for description, and constitute no limitation thereto. For example, the algorithm 1 and the algorithm 2 may be two different parts of the model 1.

Based on the foregoing network architectures, refer to FIG. 14. FIG. 14 is a schematic flowchart of another communication method according to an embodiment of the present invention. As shown in FIG. 14, the communication method may include the following steps.

1401: A second device determines a first algorithm.

In a communication system, devices such as a first device and the second device may use an AI algorithm, and the AI algorithm may be used to assist in network fault monitoring, radio resource management, and the like. In addition, in different events, that is, in different cases, devices such as the first device and the second device may use different algorithms.

Therefore, to enable the first device to use a corresponding algorithm when different events are satisfied, the second device may first determine the first algorithm. The first algorithm is a first model or a part of the first model. For descriptions of the first algorithm, refer to related descriptions in the embodiment corresponding to FIG. 9. Details are not described herein again.

The second device may determine the first algorithm based on second indication information. Specifically, the first device may be configured with one or more events, and may monitor the one or more events. Subsequently, when the first device determines that the first event is satisfied, the first device may send the second indication information to the second device. The second indication information indicates the first event satisfied by the first device. Correspondingly, the second device may receive the second indication information from the first device. Then, the second device may determine the first event based on the second indication information, and then determine, based on the first event, the first algorithm corresponding to the first event. It should be understood that the second device may locally store a correspondence between one or more algorithms and one or more events, and the one or more events may include the first event. One event may correspond to one algorithm, or one event may correspond to a plurality of algorithms. When the first event corresponds to a plurality of algorithms, the second device may select one algorithm from the plurality of algorithms, and determine the algorithm as the first algorithm. A rule for the second device to select the first algorithm may be randomly selected, or the second device may select the first algorithm based on algorithm complexity (for example, may preferentially select an algorithm with relatively low complexity), or may select the first algorithm based on according to another rule. This is not limited in this embodiment of the present invention.

The one or more events of the first device may be configured by the second device for the first device, may be configured by another device for the first device, or may be pre-configured. This is not limited in this embodiment of the present invention.

The first event may include one or more of a signal quality event, a power level event, a memory event, and a storage event. The signal quality event may be that signal quality is less than a first threshold or the signal quality is greater than/equal to the first threshold. The power level event is that a power level of the first device is less than a second threshold or the power level of the first device is greater than or equal to the second threshold. The memory event is that a memory (that is, a running memory) is less than a third threshold or the memory greater than/equal to the third threshold. The storage event is that a storage capacity (that is, a size of available storage space, for example, 60 GB) is less than a fourth threshold or the storage capacity is greater than/equal to the fourth threshold.

The signal quality may be obtained based on one or more of an RSRP, RSRQ, an SINR, an SNR, and a CQI. For descriptions of the first event and the signal quality, refer to related descriptions in the embodiment corresponding to FIG. 9. Details are not described herein again.

The second indication information may include an identifier of the first event. The second device may directly determine the corresponding first event based on the identifier of the first event, and then may determine the first algorithm corresponding to the first event.

For example, it is assumed that there are a total of four events: a first event, an event 2, an event 3, and an event 4. An identifier of the first event may be 00, an identifier of the event 2 may be 01, an identifier of the event 3 may be 10, and an identifier of the event 4 may be 11. Second indication information sent by the first device to the second device includes the identifier 00 of the first event. Correspondingly, the second device may receive the second indication information from the first device. Then, the second device may read that an identifier of an event included in the second indication information is 00, and then the second device may determine an event (the first event) corresponding to the identifier 00.

It should be understood that the second indication information may further include other information that can uniquely identify the first event, for example, a name of the first event or an index (number) of the first event. This is not limited herein.

When the first device is a terminal device and the second device is a network device (for example, an access network device), the second indication information may be carried in UCI, RRC signaling, or MAC signaling (for example, MAC CE signaling). When the first device is a terminal device and the second device is a core network device, first indication information may be carried in non-access stratum (non access stratum, NAS) signaling.

It should be understood that the second device may alternatively directly determine the first algorithm. Specifically, the second device may be configured with one or more events, and the second device may monitor the one or more events, where the one or more events include the first event. When the second device determines that the first event is satisfied, the second device may directly determine the first algorithm corresponding to the first event, and then may configure the first algorithm for the first device.

For example, when the second device is a network device and the first device is a terminal device, an event 1 and an event 2 may be configured for the second device. The event 1 may be that a received power of an uplink reference signal sent by the terminal device is less than -85 dBm. The event 2 may be that the received power of the uplink reference signal is greater than or equal to -85 dBm. An algorithm corresponding to the event 1 is the algorithm 1. An algorithm corresponding to the event 2 is the algorithm 2. When the second device determines that the event 1 is satisfied, the second device may configure the algorithm 1 for the first device. When the second device determines that the event 2 is satisfied, the second device may configure the algorithm 2 for the first device.

1402: The second device sends the first indication information to the first device.

Correspondingly, the first device may receive the first indication information from the second device.

Specifically, after the second device determines the first algorithm, the second device may send the first indication information to the first device. The first indication information indicates the first algorithm.

The first indication information may include an identifier of the first algorithm. For descriptions of the identifier of the first algorithm, refer to related descriptions in the embodiment corresponding to FIG. 9. Details are not described herein again. It should be understood that the first indication information may further include other information that can uniquely identify the first algorithm, for example, a name of the first algorithm, or an index (number) of the first algorithm. This is not limited herein.

When the first device is a terminal device and the second device is a network device (for example, an access network device), the first indication information may be carried in DCI, RRC signaling, or MAC signaling. Specifically, the second device may send the DCI, the RRC signaling, the MAC signaling, or the like to the first device, where the first indication information is carried in the DCI, the RRC signaling, or the MAC signaling. Correspondingly, the first device may receive the DCI, the RRC signaling, or the MAC signaling from the second device. In addition, because the first indication information may be carried in the DCI, the RRC signaling, or the MAC signaling, the first device may receive the first indication information more quickly, so that an algorithm can be switched more quickly, thereby reducing an algorithm switching delay.

It should be understood that the first indication information may alternatively be carried in other signaling or control information, for example, may be carried in other layer 1 (layer 1, L1), layer 2 (layer 2, L2), and layer 3 (layer 3, L3) signaling. A layer 1 may be a physical layer, a layer 2 may be a data link layer, and a layer 3 may be a network layer. Specifically, the layer 2 may include four sublayers: a MAC layer, a radio link control (radio link control, RLC) layer, a packet data convergence protocol (packet data convergence protocol, PDCP) layer, and a service data adaptation protocol (service data adaptation protocol, SDAP) layer. Layer 3 may include an RRC sublayer. It should be further understood that when the first device is a terminal device and the second device is a core network device, the first indication information may be carried in non-access stratum (non-access stratum, NAS) signaling.

1403: The first device enables the first algorithm.

After the first device receives the first indication information from the second device, the first device may enable the first algorithm based on the first indication information.

Specifically, the first device may determine the first algorithm based on the first indication information, and then may enable the first algorithm. When the first indication information is an identifier of the first algorithm, the first device may directly determine the first algorithm based on the identifier of the first algorithm, and then enable (use) the first algorithm.

The first algorithm may be pre-configured, for example, may be pre-configured by the second device. Specifically, the second device may send configuration information to the first device. The configuration information may include one or more algorithms and corresponding identifiers, and the one or more algorithms include the first algorithm. Correspondingly, the first device may receive the configuration information from the second device. The second device may send the configuration information to the first device by using configuration request (config request, ConfigReq) signaling. Correspondingly, after the first device receives the configuration information from the second device, the first device may send configuration response (response, Resp) signaling to the second device. Then, the second device may receive the configuration response signaling from the first device to learn whether the first device has received the configuration information (the pre-configuration succeeds). There is a correspondence between the configuration request signaling and the configuration response signaling. When the first device is a terminal device and the second device is a network device, the second device may send the configuration information to the first device by using RRC signaling, or may send the configuration information to the first device by using other signaling (for example, MAC CE signaling). In this embodiment of the present invention, a manner in which the second device sends the configuration information is not limited.

If pre-configuration for the first device succeeds (that is, the first device receives the configuration information from the second device in advance and stores the configuration information), when the first device receives the indication information from the second device, the first device may directly obtain a corresponding algorithm for use based on an identifier of an algorithm included in the indication information, thereby reducing an algorithm switching delay. It should be understood that the first algorithm may alternatively be configured by another device. This is not limited herein.

Optionally, the first device may send third indication information to the second device. Correspondingly, the second device may receive the third indication information from the first device. The third indication information may indicate whether the first device successfully enables or fails to enable the first algorithm, and the third indication information is response information corresponding to the first indication information. When the first device is a terminal device and the second device is a network device (for example, an access network device), the third indication information may be carried in UCI, RRC signaling, or MAC signaling (for example, MAC CE signaling). When the first device is a terminal device and the second device is a core network device, the first indication information may be carried in NAS signaling.

The second device may send the first indication information to the first device by using algorithm configuration request (config request, ConfigReq) signaling. Correspondingly, the first device may receive the algorithm configuration request signaling from the second device. Then, the first device may send the third indication information to the second device by using algorithm configuration response (response, Resp) signaling. There is a correspondence between the algorithm configuration request signaling and the algorithm configuration response signaling.

Specifically, because the first device may fail to enable the first algorithm due to some reasons (for example, an insufficient running memory), the first device may send the third indication information to the second device to notify the second device whether the first algorithm is successfully enabled. When the first device successfully enables the first algorithm, the first device may send the third indication information to the second device. The third indication information may carry a flag (Flag) indicating that the algorithm is successfully enabled. For example, the carried identifier may be True, indicating that the first algorithm is successfully enabled; or the carried identifier may be False, indicating that the first algorithm fails to be enabled. When the first device fails to enable the first algorithm, the third indication information may further carry a reason why the first algorithm fails to be enabled and an identifier of an algorithm that can be successfully enabled currently.

It should be understood that when the first device fails to enable the first algorithm, the first device may not send the third indication information to the second device, and send the third indication information only when the first algorithm is successfully enabled. In this case, a constant periodicity may be used by default, for example, 30 milliseconds (ms). After sending the first indication information to the first device, the second device may maintain a time window of 30 ms. When the third indication information from the first device is not received within the time window, the second device may determine that the first device fails to enable the first algorithm. Similarly, when the first algorithm is successfully enabled, the first device may not send the third indication information to the second device, and send the third indication information only when the first algorithm fails to be enabled.

When determining that the first device successfully enables or fails to enable the first algorithm, the second device may perform corresponding processing (response). When the second device determines that the first device successfully enables the first algorithm, if the first device and the second device need to execute a collaboration task, the second device may enable a collaborative algorithm corresponding to the first algorithm. If the first device needs to execute only a single-point task, that is, the first algorithm is an algorithm that can be independently used, the second device may not respond. When the second device determines that the first device fails to enable the first algorithm, the second device may re-configure the first algorithm for the first device, or may configure another algorithm for the first device based on a reason why the first device fails to enable the first algorithm.

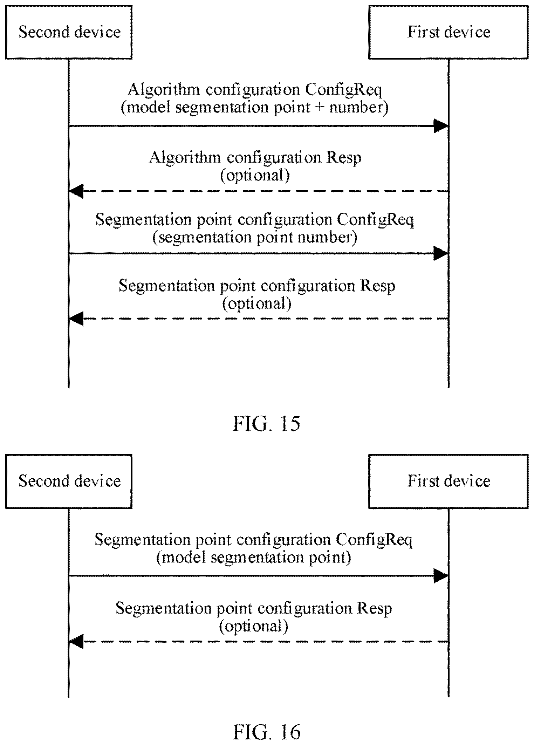

FIG. 15 is a diagram of an algorithm configuration according to an embodiment of the present invention. As shown in FIG. 15, a second device may first send configuration information to a first device by using an algorithm configuration ConfigReq, and may configure a correspondence between a model segmentation point and a number (layer index) for the first device. In the neural network model shown in FIG. 12, the segmentation point corresponding to the number (layer index) 0 is the layer 1, and the segmentation point corresponding to the number 1 is the layer 3. Correspondingly, the first device may receive the algorithm configuration ConfigReq from the second device, and then may send an algorithm configuration Resp to the second device. After receiving the algorithm configuration Resp from the first device, the second device may learn whether the first device receives the configuration information (the pre-configuration succeeds). Next, the second device may configure a specific segmentation point of a model for the first device by using a segmentation point configuration ConfigReq. The segmentation point configuration ConfigReq carries the first indication information, which carries a number of a specific model segmentation point, for example, the number 1. Correspondingly, the first device may receive the segmentation point configuration ConfigReq from the second device. Then, the first device may enable a corresponding algorithm, that is, the first four layers of the model. In addition, the first device may send the segmentation point configuration Resp to the second device. After receiving the segmentation point configuration Resp from the first device, the second device may learn whether the first device successfully enables the algorithm.

Alternatively, the configuration information sent by the second device to the first device may not include an algorithm identifier, and includes only one specific algorithm (for example, a neural network model). In this case, a default algorithm identifier may be used between the first device and the second device. For example, for a neural network, corresponding segmentation points (layer numbers) may be used as identifiers of different algorithms by default. FIG. 16 is a diagram of another algorithm configuration according to an embodiment of the present invention. As shown in FIG. 16, for the neural network model shown in FIG. 12, a first device and a second device may consider segmentation points (layer numbers) of the neural network model as identifiers of different algorithms by default. For example, an algorithm corresponding to an algorithm identifier 1 is the first two layers (that is, the layer 0 and the layer 1) of the model. In this case, the second device may directly configure a specific segmentation point of a model for the first device by using a segmentation point configuration ConfigReq. The segmentation point configuration ConfigReq carries the first indication information, which carries a specific model segmentation point (a layer number), for example, 2. Correspondingly, the first device may receive the segmentation point configuration ConfigReq from the second device. Then, the first device may enable a corresponding algorithm, that is, the first three layers of the model. In addition, the first device may send the segmentation point configuration Resp to the second device. After receiving the segmentation point configuration Resp from the first device, the second device may learn whether the first device successfully enables the algorithm.

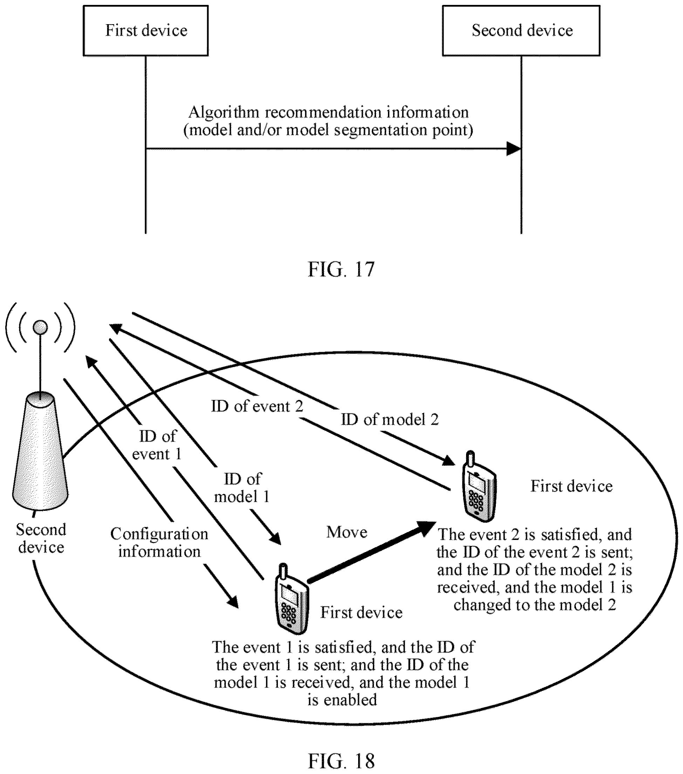

It should be noted that the first device may send algorithm recommendation information to the second device to recommend an algorithm to be used. The algorithm recommendation information may carry information about one or more algorithms, for example, may carry identifiers of the one or more algorithms. Correspondingly, the second device may receive the algorithm recommendation information from the first device. Then, the second device may select an algorithm from one or more algorithms recommended by the first device, and may configure the algorithm for the first device. The one or more algorithms recommended by the first device to the second device may be a most appropriate algorithm determined by the first device based on a capability of the first device. Therefore, when the one or more algorithms are used, a final effect can be improved. FIG. 17 is a diagram of sending algorithm recommendation information by a first device according to an embodiment of the present invention. As shown in FIG. 17, the first device may send the algorithm recommendation information to a second device. The algorithm recommendation information may carry an identifier of an algorithm, and the identifier of the algorithm may indicate a specific model and/or model segmentation point.

In this embodiment of the present invention, the second device may first determine a first algorithm, and then may directly send the first indication information to the first device to configure the first algorithm for the first device, so that an algorithm switching delay can be reduced. In addition, the second device may send only indication information to the first device, and does not need to send a complete algorithm to the first device each time, so that reconfiguration overheads can be reduced, and a transmission resource can be saved.

For example, FIG. 18 is a diagram of another algorithm configuration and use scenario according to an embodiment of the present invention. As shown in FIG. 18, a second device may send configuration information to a first device in advance to configure one or more events and corresponding identifiers (ID) and one or more algorithms and corresponding identifiers for the first device. The one or more events may include an event 1 (RSRP ≥ -90 dBm), and may further include an event 2 (RSRP < -90 dBm). The one or more algorithms may include an algorithm 1 and an algorithm 2. The algorithm 1 may be a model 1, and the algorithm 2 may be a model 2. Then, the first device may monitor the one or more events (that is, monitor whether the RSRP satisfies a corresponding threshold). When detecting that an event is satisfied, the first device may send an identifier of the event to the second device. When the first device is close to the second device, the RSRP obtained by the first device through measurement may be -80 dBm, and the first device may determine that the event 1 is satisfied. Then, the first device may send an ID of the event 1 to the second device. Correspondingly, the second device may receive the ID of the event 1 from the first device. Then, the second device may first determine the model 1 corresponding to the event 1, and then may send an ID of the model 1 to the first device. Correspondingly, the first device may receive the ID of the model 1 from the second device. Then, the first device may enable the corresponding model 1 based on the ID of the model 1. After the first device is moved, for example, moved from a place close to the second device to a place relatively far from the second device, the RSRP gradually decreases, for example, gradually decreases from -80 dBm to -90 dBm, and then decreases to -100 dBm. When the RSRP decreases to less than -90 dBm, the first device may determine that the event 2 is satisfied. Then, the first device may send an ID of the event 2 to the second device. Correspondingly, the second device may receive the ID of the event 2 from the first device. Then, the second device may first determine the model 2 corresponding to the event 2, and then may send an ID of the model 2 to the first device. Correspondingly, the first device may receive the ID of the model 2 from the second device. Then, the first device may enable the corresponding model 2 based on the ID of the model 2.

It should be understood that the algorithm configuration and the use scenario that are shown in FIG. 18 are merely examples for description, and constitute no limitation thereto. For example, the algorithm 1 and the algorithm 2 may be two different parts of the model 1.

To better understand a communication method disclosed in embodiments of the present invention, the following first describes an application scenario used in embodiments of the present invention. It can be learned from the method embodiment corresponding to FIG. 9 and the method embodiment corresponding to FIG. 14 that the first device and the second device may execute a collaboration task by using a collaborative algorithm. In addition, when the collaboration task is executed, the collaborative algorithm used by the first device and the second device needs to have a matching relationship. For example, an algorithm 1a and an algorithm 1b may be corresponding collaborative algorithms, and have a matching relationship. Output data of the algorithm 1a needs to be used as input data of the algorithm 1b. An algorithm 2b and an algorithm 2a may be corresponding collaborative algorithms, and have a matching relationship. Output data of the algorithm 2a needs to be used as input data of the algorithm 2b. Therefore, when the first device uses the algorithm 1a, the second device needs to use the corresponding algorithm 1b; and when the first device uses the algorithm 2a, the second device needs to use the corresponding algorithm 2b. If the first device uses the algorithm 1a and the second device uses the algorithm 2b, when the first device sends output data obtained by using the algorithm 1a to the second device, in a case, the second device may not use the output data as input data of the algorithm 2b. For example, the output data of the algorithm 1a is 5 bits, and the input data of the algorithm 2b is 10 bits. In another case, the second device may use the output data as the input data of the algorithm 2b. For example, the output data of the algorithm 1a is 10 bits, and the input data of the algorithm 2b is also 10 bits; or the output data of the algorithm 1a is 5 bits, and the input data of the algorithm 2b is 10 bits, but the second device may pad received data (for example, pad 5 bits of 0 or 1). However, because the algorithm 1a and the algorithm 2b do not match, the finally obtained output data of the algorithm 2b is inaccurate or even incorrect, thereby affecting a use effect of the algorithm.

The foregoing algorithm mismatch (algorithm confusion) problem may be caused by different application times of algorithms of the first device and the second device, or may be caused by retransmission of data packets sent by the first device and the second device. In addition, there may be two cases for the different application times of the algorithms of the first device and the second device. In a first case, times at which the first device and the second device configure a new algorithm (for example, the algorithm 2a) are different, and application times of the algorithm are also different. In a second case, times at which the first device and the second device configure a new algorithm (for example, the algorithm 2b) are the same, but application times of the new algorithm are different.

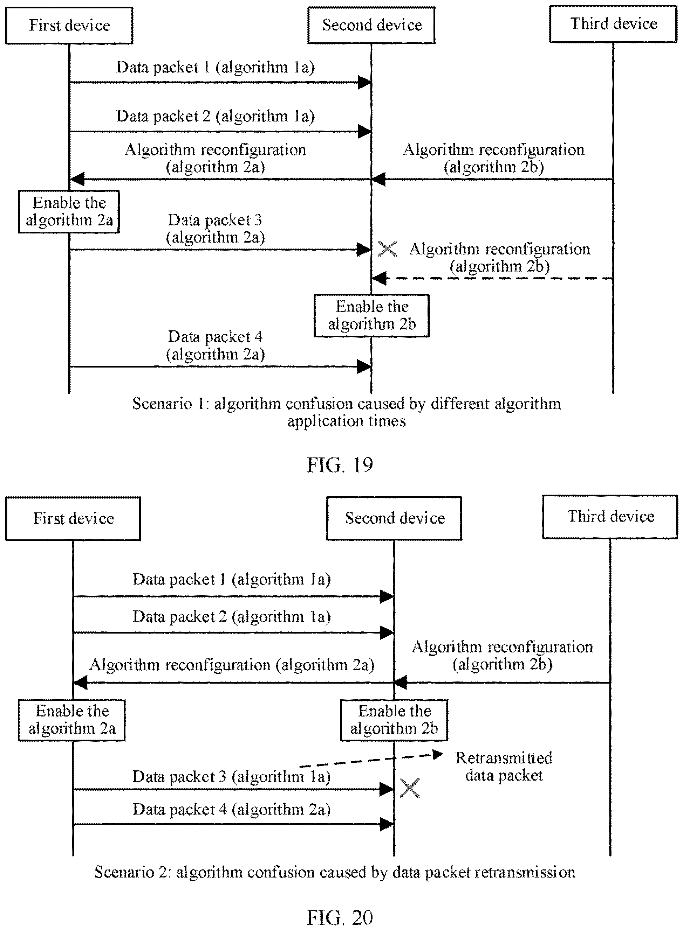

FIG. 19 is a diagram of an algorithm confusion scenario according to an embodiment of the present invention. As shown in FIG. 19, a first device may use an algorithm 1a and an algorithm 2a, and a second device may use an algorithm 1b and an algorithm 2b. The algorithm 1a and the algorithm 1b may be corresponding collaborative algorithms, and have a matching relationship. Output data of the algorithm 1a needs to be used as input data of the algorithm 1b. The algorithm 2b and the algorithm 2a may be corresponding collaborative algorithms, and have a matching relationship. Output data of the algorithm 2a needs to be used as input data of the algorithm 2b. The algorithm 1a may be a model 1, and the algorithm 1b may be a model 2. The algorithm 2a may be a model 3, and the algorithm 2b may be a model 4. The algorithm 1a may alternatively be a part of the model 1. In this case, the algorithm 1b may be another part of the model 1, in other words, the first device and the second device j ointly use the model 1. It is assumed that the first device and the second device respectively use the algorithm 1a and the algorithm 1b at the beginning, and data carried in a data packet 1 and data carried in a data packet 2 are both obtained by the first device by using the algorithm 1a. After receiving the data packet 1 and the data packet 2, the second device may perform corresponding processing by using the algorithm 1b. Then, the first device may receive an algorithm reconfiguration message (indicating to switch to the algorithm 2a) from a third device, and the second device may also receive an algorithm reconfiguration message (indicating to switch to the algorithm 2b) from the third device. Times at which the first device and the second device receive the algorithm reconfiguration message may be the same, or may be different. However, in the two cases, algorithm switching times (that is, algorithm application times) of the first device and the second device may be different. Specifically, after receiving the algorithm reconfiguration message, the first device may immediately switch to the algorithm 2a. Then, data carried in a data packet 3 sent by the first device may be obtained by using the algorithm 2a. However, when the second device receives the data packet 3, the second device may have received the algorithm reconfiguration message but has not switched to the new algorithm (algorithm 2b), or the second device may not have received the algorithm reconfiguration message. Therefore, the algorithm used by the second device is the algorithm 1b, and the first device processes, by using the old algorithm (algorithm 1b), the data carried in the data packet 3, thereby causing an algorithm mismatch problem.

FIG. 20 is a diagram of another algorithm confusion scenario according to an embodiment of the present invention. As shown in FIG. 20, a first device and a second device may simultaneously receive an algorithm reconfiguration message from a third device. In addition, a time at which the first device switches from an algorithm 1a to an algorithm 2a is the same as a time at which the second device switches from an algorithm 1b to an algorithm 2b, in other words, algorithm application times of the first device and the second device are the same. However, after the first device and the second device switch an algorithm, because previous communication quality may be relatively poor, a previous data packet may fail to be transmitted and need to be resent. Therefore, a data packet 3 sent by the first device to the second device may be a retransmitted data packet, and data carried in the data packet 3 is obtained by using the algorithm 1a. When the second device receives the data packet 3, because the second device has enabled the algorithm 2b, the second device processes, by using the algorithm 2b, the data carried in the data packet 3. Consequently, an algorithm mismatch problem is caused.

It should be understood that the algorithm confusion scenarios shown in FIG. 19 and FIG. 20 are merely examples for description, and constitute no limitation thereto. For example, in FIG. 19, the second device may receive the algorithm reconfiguration message first, and immediately enable (apply) the new algorithm; or the first device may receive the algorithm reconfiguration message later than the second device, and may switch to the new algorithm five seconds later.

It can be learned that when the first device and the second device execute a collaboration task, algorithms used by the first device and the second device may not match (algorithm confusion). Consequently, no output data is obtained or inaccurate output data is obtained, and an algorithm use effect is further affected. Therefore, the algorithm confusion problem is an urgent technical problem to be resolved.

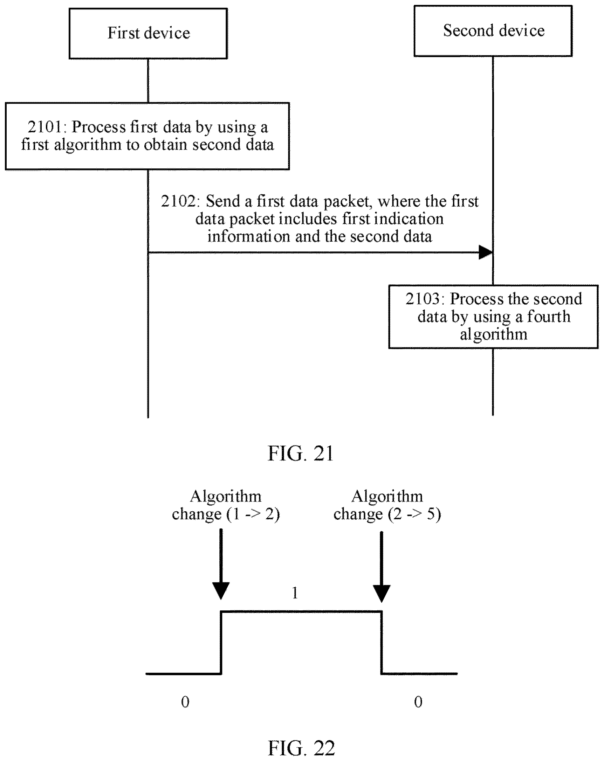

Based on the foregoing network architectures, refer to FIG. 21. FIG. 21 is a schematic flowchart of still another communication method according to an embodiment of the present invention. As shown in FIG. 21, the communication method may include the following steps.

2101: A first device processes first data by using a first algorithm to obtain second data.

In a communication system, devices such as the first device and a second device may use an AI algorithm, and the AI algorithm may be used to assist in network fault monitoring, radio resource management, and the like. In addition, in different events, that is, in different cases, devices such as the first device and the second device may use different algorithms.

Specifically, the first device may process the first data by using the first algorithm to obtain the second data. The first data may be input data of the first algorithm, and the second data may be output data of the first algorithm. For example, the first algorithm may be the neural network model shown in FIG. 12, the first data may be an input of the neural network model, for example, [1.5, 2.1], and the second data may be an output obtained by processing the first data by the neural network model, for example, [1, 1.2, 2.4, 1.5].

The first algorithm may be a first model or a first part of the first model. For descriptions of the first algorithm, refer to related descriptions in the embodiment corresponding to FIG. 9. Details are not described herein again.

2102: The first device sends a first data packet to the second device, where the first data packet includes first indication information and the second data.

Correspondingly, the second device may receive the first data packet from the first device.

Specifically, after the first device obtains the second data, the first device may first generate the first data packet, and then send the first data packet to the second device. The first data packet may include the first indication information that indicates the first algorithm and the second data.

The first indication information may include an identifier of the first algorithm. The identifier of the first algorithm may be an identifier of the first model. Alternatively, the identifier of the first algorithm may be an identifier of a segmentation point of the first model. Alternatively, the identifier of the first algorithm may be an identifier of a model + an identifier of a model segmentation point. For descriptions of the identifier of the first algorithm, refer to related descriptions in the embodiment corresponding to FIG. 9. Details are not described herein again.

The first indication information may be 1-bit information. In this case, the first indication information may have only two values: 0 and 1. Each time the first device changes an algorithm, the first device may flip 1-bit indication information carried in a data packet from 0 to 1, or from 1 to 0 to indicate an algorithm change (switching).

Specifically, after the first device obtains the second data and generates the first data packet, the first device may further change (switch) an algorithm, and switch from the first algorithm to a second algorithm. The first device may process third data by using the second algorithm to obtain fourth data. Then, the first device may generate a second data packet, and send the second data packet to the second device. Correspondingly, the second device may receive the second data packet from the first device. The second data packet includes second indication information and the fourth data, and a value of the second indication information is different from a value of the first indication information. The second algorithm may be a second model or a second part of the first model, and the second algorithm is different from the first algorithm. That the first algorithm is different from the second algorithm may be understood as that the first algorithm and the second algorithm are different AI models (for example, the first algorithm is a three-layer neural network model, and the second algorithm is a four-layer neural network model), or include at least one different algorithm parameter. For example, both the first algorithm and the second algorithm may be the neural network model shown in FIG. 12, but the first algorithm and the second algorithm include at least one neuron with a different parameter.

For example, the first device may process input data 1 by using an algorithm 1 to obtain output data 1, and then send a data packet 1 to the second device, where 1-bit indication information carried in the data packet 1 may be 0. Then, the first device may switch from the algorithm 1 to an algorithm 2. When data carried in a newly generated data packet is obtained by using a new algorithm (algorithm 2), 1-bit indication information carried in the data packet may be flipped from 0 to 1. The first device may process input data 2 by using the algorithm 2 to obtain output data 2, and then send a data packet 2 to the second device, where 1-bit indication information carried in the data packet 2 is 1. Next, the first device may switch from the algorithm 2 to an algorithm 5. Therefore, when data carried in a newly generated data packet is obtained by using a new algorithm (algorithm 5), 1-bit indication information carried in the data packet may be flipped from 1 to 0.

FIG. 22 is a diagram of flipping 1-bit indication information according to an embodiment of the present invention. As shown in FIG. 22, at the beginning, data carried in a data packet generated by the first device is obtained by using the algorithm 1, and 1-bit indication information carried in the data packet may be 0. Then, the first device may change from the algorithm 1 to the algorithm 2. When data carried in a newly generated data packet is obtained by using the algorithm 2, the 1-bit indication information carried in the data packet may be flipped from 0 to 1. Next, the first device may change from the algorithm 2 to the algorithm 5. When the data carried in the newly generated data packet is obtained by using the algorithm 5, the 1-bit indication information carried in the data packet may be flipped to 0. It should be understood that flipping of the 1-bit indication information shown in FIG. 22 is merely an example for description, and constitutes no limitation thereto.

Alternatively, the first indication information may be multiple-bit information. The multiple-bit information may indicate an algorithm change (switching), and may indicate an old algorithm (for example, the first algorithm) before algorithm switching and a new algorithm (for example, the second algorithm) after algorithm switching. Specifically, the first indication information may be 2-bit information or 3-bit information. This is not limited herein. For example, when the first indication information is 2-bit information, a value of the first indication information may be 00, 01, 10, or 11. When the first device switches an algorithm for the first time, the value of the first indication information carried in the data packet may first change from 00 to 01. When the first device switches an algorithm for the second time, the value of the first indication information may change from 01 to 10. When the first device switches an algorithm for the third time, the value of the first indication information may change from 10 to 11. When the first device switches an algorithm for the fourth time, the value of the first indication information may change from 11 to 00. Next, when the first device switches an algorithm, the value of the first indication information may repeatedly undergo the foregoing change process.

It should be noted that when the first indication information is 1-bit information, 0 and 1 indicate algorithms before and after algorithm switching (that is, an old algorithm before switching and a new algorithm after switching), and may indirectly indicate a plurality of algorithms (not limited to two algorithms). The first indication information is different from the 1-bit identifier of the first algorithm included in the first indication information. The 1-bit identifier can indicate only two algorithms. For example, it is assumed that there are two algorithms in total: an algorithm 1 and an algorithm 2. When the first indication information includes an identifier of the first algorithm, the value of the first indication information may be 0, and in this case, 0 should be understood as an identifier of the algorithm 1; or the value of the first indication information may be 1, and in this case, 1 should be understood as an identifier of the algorithm 2. Similarly, an identifier (indicate four different algorithms) of an algorithm whose first indication information is 2 bits is also different from information (indicate the new algorithm and the old algorithm before and after algorithm switching) whose first indication information is 2 bits.

The first device may send control signaling to the second device. Correspondingly, the second device may receive the control signaling from the first device. The control signaling may include an end marker (end marker, EM) and a first serial number (serial number, SN). The end marker indicates a data packet corresponding to a first serial number before the first serial number, and the data packet is the last data packet obtained by using the old algorithm. Specifically, after obtaining the second data, the first device may generate the first data packet, and the first indication information included in the first data packet may be the serial number of the first data packet. Then, the first device may further change (switch) an algorithm, and switch from the first algorithm to a third algorithm. After switching an algorithm, the first device may send the control signaling, where the control signaling may include the end marker and the first serial number. The first device may process fifth data by using the third algorithm to obtain sixth data. Then, the first device may generate a third data packet, and then send the third data packet to the second device. Correspondingly, the second device may receive the third data packet from the first device. The third data packet may include third indication information and the sixth data, and the third indication information may be a serial number of the third data packet. The third algorithm may be a third model or a third part of the first model, and the third algorithm is different from the first algorithm.

The serial number of the first data packet, the first serial number of the control signaling, and the serial number of the third data packet may be uniformly numbered, for example, may be serial numbers maintained at a PDCP layer. In addition, the control signaling may be a control protocol data unit (protocol data unit, PDU), for example, a PDCP control PDU. Therefore, the first serial number is located after the serial number of the first data packet and before the serial number of the third data packet. It should be understood that the serial number of the first data packet, the first serial number of the control signaling, and the serial number of the third data packet may alternatively be serial numbers at an RLC layer, or may be other serial numbers. This is not limited herein.

It can be understood that solutions corresponding to the three manners, to be specific, the first indication information includes an algorithm identifier, the first indication information is 1-bit or multiple-bit information (indicating a new algorithm and an old algorithm before and after algorithm switching), and the control signaling (carrying the EM) is sent may be three parallel solutions, and may be used independently or in combination. The first two solutions may be user plane solutions, and the last solution (that is, the solution implemented by using the control signaling) may be a control plane solution.

It should be noted that the algorithm switching of the first device may be triggered by the first device (refer to related descriptions in the embodiment corresponding to FIG. 9), may be triggered by another device (for example, control signaling from another device is received, and refer to related descriptions in the embodiment corresponding to FIG. 14), or may be triggered in another manner. This is not limited in this embodiment of the present invention.

When the algorithm switching of the first device is triggered by the second device, the first device may directly perform switching without responding. Specifically, the second device may send fourth indication information to the first device. Correspondingly, the first device may receive the fourth indication information from the second device. The fourth indication information indicates to switch an algorithm to the second algorithm or the third algorithm. After the first device receives the fourth indication information from the second device, the first device may switch from the first algorithm to the second algorithm, or switch from the first algorithm to the third algorithm.

When the algorithm switching of the first device is triggered by the first device, the first device may notify the second device of related information about algorithm switching, for example, may notify the second device of an algorithm switching time and an identifier of a newly switched algorithm.

When the algorithm switching of the first device is triggered by another device (for example, a third device) other than the second device, the first device or the third device may notify the second device of related information about algorithm switching.

2103: The second device processes the second data by using a fourth algorithm.

Specifically, after the second device receives the first data packet from the first device, the second device may first determine the fourth algorithm based on the first indication information. Then, the second device may process, by using the fourth algorithm, the second data included in the first data packet. The fourth algorithm is a collaborative algorithm corresponding to the first algorithm, and the fourth algorithm may be a fourth model or a fourth part of the first model. The fourth model is a collaborative model corresponding to the first model, and output data of the first model may be used as input data of the fourth model. The first part that is of the first model and that corresponds to the first algorithm and the fourth part that is of the first model and that corresponds to the fourth algorithm may be two mutually exclusive parts. For example, the first algorithm may correspond to the first three layers of the neural network model shown in FIG. 12, and the fourth algorithm may correspond to the last two layers of the neural network model.

When the first indication information includes the identifier of the first algorithm, the second device may directly determine the first algorithm based on the identifier of the first algorithm, and then determine the collaborative algorithm (that is, the fourth algorithm) corresponding to the first algorithm. Then, the first device may process the second data by using the fourth algorithm. Similarly, for another data packet, the second device may also determine a corresponding collaborative algorithm based on an identifier of an algorithm carried in the data packet. Then, the second device may process, by using the corresponding collaborative algorithm, data carried in the data packet.

For example, the first device may use an algorithm 1, an algorithm 2, and an algorithm 5; and the second device may use an algorithm 3, an algorithm 4, and an algorithm 6. The algorithm 1 and the algorithm 3 are corresponding collaborative algorithms. The algorithm 2 and the algorithm 4 are corresponding collaborative algorithms. The algorithm 5 and the algorithm 6 are corresponding collaborative algorithms. Specifically, the first device may sequentially send a plurality of data packets to the second device: a data packet 1 (packet 1) carrying an algorithm identifier (ID = 1); a data packet 2 carrying an algorithm identifier (ID = 1), where the first device switches an algorithm (algorithm 1 -> algorithm 2); a data packet 3 carrying an algorithm identifier (ID = 2); a data packet 4 carrying an algorithm identifier (ID = 1), where the first device switches an algorithm (algorithm 2 -> algorithm 5); a data packet 5 carrying an algorithm identifier (ID = 2); and a data packet 6 carrying an algorithm identifier (ID = 5). The data packet 4 may be a retransmitted data packet. Therefore, an identifier of an algorithm carried in the data packet 4 may be 1. The data packet 5 may be a data packet obtained by the first device by using the algorithm 2 before algorithm switching (algorithm 2 -> algorithm 5), and is delivered to a bottom layer (for example, a MAC layer) but has not been sent. Therefore, the algorithm identifier carried in the data packet 5 may be 2, and a time at which the data packet 5 is sent may be later than a time at which the first device switches from the algorithm 2 to the algorithm 5.

Correspondingly, the second device may sequentially receive the plurality of data packets sent by the first device. A sequence of the successfully received data packets may be the data packet 1, the data packet 2, the data packet 3, the data packet 4, the data packet 5, and the data packet 6. When the second device receives the data packet 1, the second device may first read the algorithm identifier (ID = 1) carried in the data packet 1. Then, the second device may process, by using a collaborative algorithm (algorithm 3) corresponding to the algorithm 1, the data carried in the data packet 1. Similarly, after receiving the data packet 2, the second device may also read the algorithm identifier carried in the data packet 2, and then may also process, by using the collaborative algorithm (algorithm 3) corresponding to the algorithm 1, the data carried in the data packet 2. Next, the second device may receive the data packet 3, may read the algorithm identifier carried in the data packet 3, and may process, by using a collaborative algorithm (algorithm 4) corresponding to the algorithm 2, the data carried in the data packet 3. Subsequently, the second device may receive the data packet 5 and the data packet 6. A manner for processing the data packet 5 and the data packet 6 is similar to that for the data packet 1, the data packet 2, and the data packet 3. Details are not described herein again.

It should be understood that because a communication link between the first device and the second device may change every moment, a sequence in which the first device sends data packets may be different from a sequence in which the second device successfully receives the data packets. However, because the data packet may carry an identifier of an algorithm, the second device can use a correct collaborative algorithm, so that an algorithm confusion problem can be resolved.

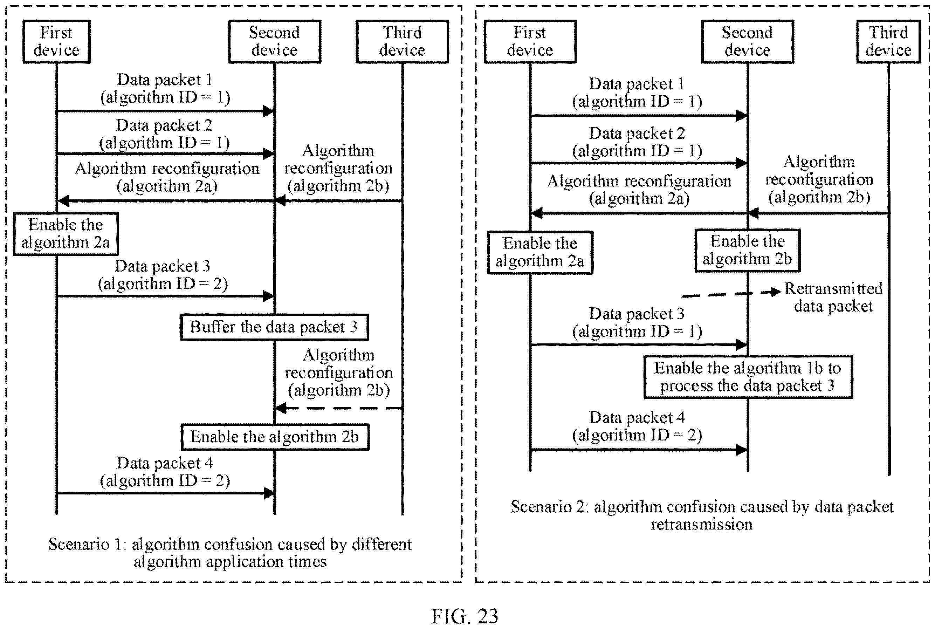

FIG. 23 is a diagram of a solution to an algorithm confusion problem according to an embodiment of the present invention. As shown in FIG. 23, for a scenario 1, that is, an algorithm confusion problem caused by different algorithm application times, in this embodiment of the present invention, a first device may add an algorithm identifier (ID) to a data packet to be sent to a second device. After the second device receives the data packet, the second device may use a correct collaborative algorithm based on the algorithm identifier carried in the data packet to process data carried in the data packet. Therefore, for a data packet 3, after the second device receives the data packet 3, the second device may first buffer the data packet 3, and may perform processing after enabling a new collaborative algorithm (algorithm 2b). For a scenario 2, that is, an algorithm confusion problem caused by data packet retransmission, in this embodiment of the present invention, for the data packet 3, the second device may determine a corresponding collaborative algorithm (algorithm 1b) based on an algorithm identifier (ID = 1) carried in the data packet 3, and then may enable the algorithm 1b to process data carried in the data packet 3. It should be understood that the solutions to the algorithm confusion problems shown in FIG. 23 are merely examples for description, and constitute no limitation thereto.

It can be learned that in this embodiment of the present invention, the first device may add a specific algorithm identifier to each data packet. After the second device receives a data packet sent by the first device, the second device may read an algorithm identifier carried in the data packet to learn of the algorithm that needs to be used by the second device to perform subsequent processing on the data packet, thereby avoiding a model confusion problem. In addition, because a quantity of bits required for transmitting an identifier of the algorithm is relatively small, a transmission resource can be saved.

When first indication information is 1-bit information, after the second device receives a second data packet from the first device, the second device may first determine whether a value of the first indication information carried in the first data packet is the same as a value of indication information carried in the second data packet. When the value of the first indication information is the same as the value of the second indication information, the second device may process fourth data by using a fourth algorithm. When the value of the first indication information is different from the value of the second indication information, the second device may process the fourth data by using a fifth algorithm. The fifth algorithm is a collaborative algorithm corresponding to a second algorithm. The fourth algorithm is different from the fifth algorithm. The fifth algorithm may be a fifth model or a fifth part of a first model. The fifth model is a collaborative model corresponding to a second model, and output data of the second model may be used as input data of the fifth model. A second part that is of the first model and that corresponds to the second algorithm and a fifth part that is of the first model and that corresponds to the fifth algorithm may be two mutually exclusive parts.

For example, the first device may use an algorithm 1, an algorithm 2, and an algorithm 5; and the second device may use an algorithm 3, an algorithm 4, and an algorithm 6. The algorithm 1 and the algorithm 3 are corresponding collaborative algorithms. The algorithm 2 and the algorithm 4 are corresponding collaborative algorithms. The algorithm 5 and the algorithm 6 are corresponding collaborative algorithms. Specifically, the first device may sequentially send a plurality of data packets to the second device: a data packet 1 (packet 1) carrying 1-bit indication information (1), where the 1-bit indication information carried in the first data packet may be 1 by default; a data packet 2 carrying 1-bit indication information (1), where the first device switches an algorithm (algorithm 1 -> algorithm 2); a data packet 3 carrying 1-bit indication information (0); a data packet 4 carrying 1-bit indication information (1), where the first device switches an algorithm (algorithm 2 -> algorithm 5); a data packet 5 carrying 1-bit indication information (0); and a data packet 6 carrying 1-bit indication information (1). The data packet 4 may be a retransmitted data packet. Therefore, a value of indication information carried in the data packet 4 may be 1. The data packet 5 may be a data packet obtained by the first device by using the algorithm 2 before algorithm switching (algorithm 2 -> algorithm 5), and is delivered to a bottom layer (for example, a MAC layer) but has not been sent. Therefore, a value of the indication information carried in the data packet 5 may be 0, and a time at which the data packet 5 is sent may be later than a time at which the first device switches from the algorithm 2 to the algorithm 5.

Correspondingly, the second device may sequentially receive the plurality of data packets sent by the first device. A sequence of the successfully received data packets may be the data packet 1, the data packet 2, the data packet 3, the data packet 4, the data packet 5, and the data packet 6. When the second device receives the data packet 1, the second device may first read 1-bit indication information (1) carried in the data packet 1. Then, the second device may process, by using a collaborative algorithm (algorithm 3) corresponding to the algorithm 1, the data carried in the data packet 1. Similarly, after receiving the data packet 2, the second device may also read the indication information carried in the data packet 2, and then may also process, by using the collaborative algorithm (algorithm 3) corresponding to the algorithm 1, the data carried in the data packet 2. The second device may learn of related information about algorithm switching of the first device (for example, an approximate time at which the first device switches from the algorithm 1 to the algorithm 2, or a time for configuring the algorithm 2 for the first device). Therefore, the second device may perform corresponding processing in a time period in which the first device switches an algorithm. For example, the second device learns that the first device switches from the algorithm 1 to the algorithm 2 after the second device receives the data packet 2 and before the second device receives the data packet 3. Then, the second device receives the data packet 3, and may first read the indication information (0) carried in the data packet 3. Because a value of the indication information is flipped by 1 bit, the second device may determine that the data carried in the data packet 3 is obtained by using the algorithm 2, and the second device may process, by using the collaborative algorithm (algorithm 4) corresponding to the algorithm 2, the data carried in the data packet 3. Next, the second device may receive the data packet 4, and may determine that the value of the indication information of the data packet 4 is flipped compared with the value of the data packet 3. However, the second device learns that the first device does not switch an algorithm (for example, switch from the algorithm 2 to the algorithm 5) after the second device receives the data packet 3 and before the second device receives the data packet 4. Therefore, the first device may process the data carried in the data packet 4 by using the previous algorithm 3. Subsequently, the second device learns that the first device switches from the algorithm 2 to the algorithm 5 after the second device receives the data packet 4 and before the second device receives the data packet 5. Then, the second device receives the data packet 5, and may first read the indication information (0) carried in the data packet 5. Because a value of the indication information is flipped by 1 bit, but a value of the indication information is 0, it indicates that the data carried in the data packet 5 is obtained by using an old algorithm (algorithm 2). Therefore, the second device may process, by using the collaborative algorithm (algorithm 4) corresponding to the algorithm 2, the data carried in the data packet 5. Next, the second device may receive the data packet 6, and the second device may determine that the indication information carried in the data packet 6 is flipped. In addition, because a value of the indication information carried in the data packet 6 is 1, the second device may determine that the data carried in the data packet 6 is obtained by using the new algorithm (algorithm 5). Therefore, the second device may perform processing by using the collaborative algorithm (algorithm 6) corresponding to the algorithm 5.

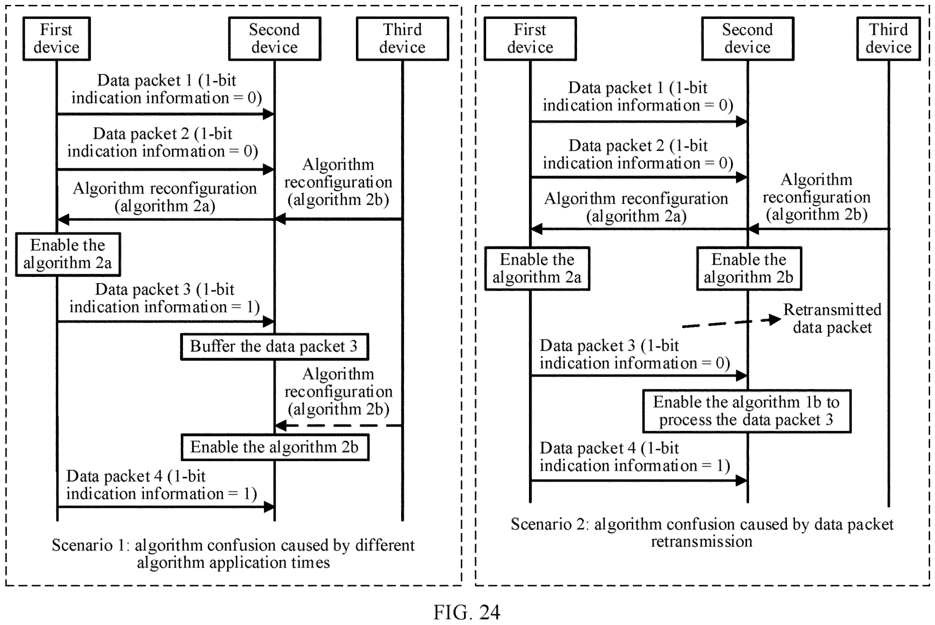

FIG. 24 is a diagram of another solution to an algorithm confusion problem according to an embodiment of the present invention. As shown in FIG. 24, for a scenario 1, that is, an algorithm confusion problem caused by different algorithm application times, in this embodiment of the present invention, a second device may learn of related information about algorithm switching of a first device. In addition, the first device may add indication information to a data packet to be sent to the second device. After the second device receives the data packet, the second device may use a correct collaborative algorithm based on the indication information carried in the data packet to process data carried in the data packet. Therefore, for a data packet 3, after the second device receives the data packet 3, the second device may determine that data carried in the data packet 3 is obtained by using an algorithm 2a. Therefore, the second device may first buffer the data packet 3, and then may perform processing after enabling a new collaborative algorithm (algorithm 2b). For a scenario 2, that is, an algorithm confusion problem caused by data packet retransmission, in this embodiment of the present invention, for the data packet 3, the second device may determine, based on indication information (0) carried in the data packet 3, that the data packet 3 is obtained by using an algorithm 1a. Therefore, the second device may enable a collaborative algorithm (algorithm 1b) corresponding to the algorithm 1a to process the data carried in the data packet 3. It should be understood that the solutions to the algorithm confusion problems shown in FIG. 24 are merely examples for description, and constitute no limitation thereto.

It can be learned that when the indication information is 1-bit information, the second device may perform corresponding processing after receiving a data packet in a time period in which the first device switches an algorithm, thereby avoiding a model confusion problem. In addition, because only one bit is required for transmitting indication information of an algorithm, a transmission resource can be saved.

The second device may receive control signaling from the first device. Besides, after receiving the control signaling from the first device, the second device may further receive a third data packet from the first device. Then, the second device may first determine whether a serial number of the third data packet is before or after a first serial number. If the serial number of the third data packet is before the first serial number, the second device may process sixth data by using a fourth algorithm. If the serial number of the third data packet is after the first serial number, the second device may process the sixth data by using a sixth algorithm. The sixth algorithm is a collaborative algorithm corresponding to a third algorithm. The fourth algorithm is different from the sixth algorithm. The sixth algorithm may be a sixth model or a sixth part of a first model. The sixth model is a collaborative model corresponding to a third model, and output data of the third model may be used as input data of the sixth model. A third part that is of the first model and that corresponds to the third algorithm and the sixth part that is of the first model and that corresponds to the sixth algorithm may be two mutually exclusive parts.

For example, the first device may use an algorithm 1 and an algorithm 2, and the second device may use an algorithm 3 and an algorithm 4. The algorithm 1 and the algorithm 3 are corresponding collaborative algorithms. The algorithm 2 and the algorithm 4 are corresponding collaborative algorithms. Specifically, the first device may sequentially send a plurality of data packets to the second device: a data packet 10 (packet 10) with a serial number (SN) = 10, a data packet 11 with an SN = 11, where the first device switches an algorithm (algorithm 1 -> algorithm 2), a data packet 12 with an SN = 12, a data packet 13 with an SN 13 carried in a control PDU or a control PDU, a data packet 14 with an SN = 14, and a data packet 15 with an SN = 9. The data packet 12 may be a data packet obtained by the first device by using the algorithm 2 before algorithm switching (algorithm 2 -> algorithm 5), and is delivered to a bottom layer (for example, a MAC layer) but has not been sent. Therefore, the serial number of the data packet 12 may be 12. The data packet 15 may be a retransmitted data packet. Therefore, the serial number of the data packet 15 may be 9. It should be understood that the serial number of the control PDU and the serial number of the data packet may be uniformly numbered. In addition, the control PDU may be generated after the first device generates the data packet 12 and before the first device generates the data packet 14. Therefore, the serial number carried in the control PDU is also after the serial number of the data packet 12 and before the serial number of the data packet 14.

Correspondingly, the second device may sequentially receive the plurality of data packets sent by the first device. A sequence of the successfully received data packets may be the data packet 10, the data packet 11, the data packet 12, the data packet 13, the data packet 14, and the data packet 15. When the second device receives the data packet 10, the second device may first read the SN (10) of the data packet 10. In addition, because the second device may learn that the first device has not switched an algorithm, the second device may process, by using a collaborative algorithm (algorithm 3) corresponding to an old algorithm (algorithm 1), data carried in the data packet 10. Similarly, after receiving the data packet 2, the second device may also read the serial number (11) of the data packet 2, and then may also process, by using the collaborative algorithm (algorithm 3) corresponding to the algorithm 1, data carried in the data packet 2. Then, the second device may learn that the first device switches from the algorithm 1 to the algorithm 2 after the second device receives the data packet 11 and before the second device receives the data packet 13. Therefore, after receiving the data packet 12 (SN = 12), the second device may first not process (buffer) the data packet 12, and performs corresponding processing after subsequently receiving the control PDU from the first device. Then, the second device may receive the control PDU, and may read the SN (13) carried in the control PDU. Next, the second device may determine that the serial number (12) of the data packet 12 is before the serial number (13) carried in the control PDU, and therefore, may determine that the data carried in the data packet 12 is obtained through processing by using the old algorithm (algorithm 1). Therefore, the second device may process, by using the collaborative algorithm (algorithm 3) corresponding to the algorithm 1, the data carried in the data packet 12. Then, the second device may receive the data packet 14, and may determine that the serial number (14) of the data packet 14 is after the serial number (13) carried in the control PDU. Therefore, the second device can determine that the data carried in the data packet 14 is obtained by using the new algorithm (algorithm 2). Therefore, the second device may perform processing by using the collaborative algorithm (algorithm 4) corresponding to the algorithm 2. Next, the second device may receive the data packet 15, and may determine that the serial number (9) of the data packet 15 is before the serial number (13) carried in the control PDU. Therefore, the second device can determine that the data carried in the data packet 15 is obtained by using the old algorithm (algorithm 1). Therefore, the second device may perform processing by using the collaborative algorithm (algorithm 3) corresponding to the algorithm 1.

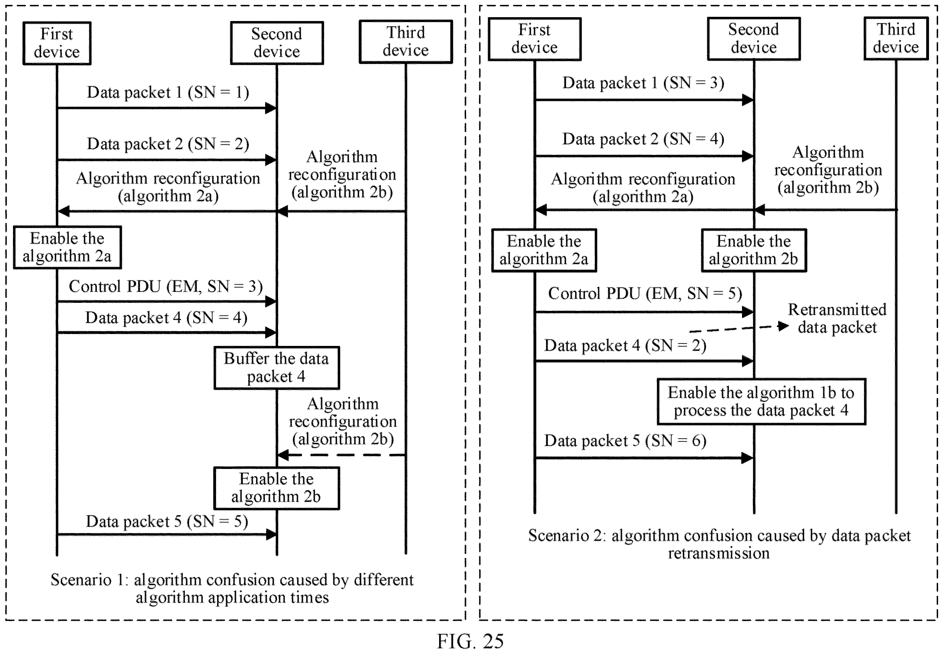

FIG. 25 is a diagram of still another solution to an algorithm confusion problem according to an embodiment of the present invention. As shown in FIG. 25, for a scenario 1, that is, an algorithm confusion problem caused by different algorithm application times, in this embodiment of the present invention, a second device may learn of related information about algorithm switching of a first device. In addition, the first device may generate a control PDU after switching an algorithm, and may send the control PDU to the second device. Then, when the second device receives a data packet from the first device, the second device may use a correct collaborative algorithm based on a serial number of the data packet and a serial number carried in the control PDU to process data carried in the data packet. Therefore, for a data packet 4, after the second device receives the data packet 4, the second device may determine that a serial number of the data packet 4 is after the serial number carried in the control PDU, and therefore may determine that data carried in the data packet 4 is obtained by using an algorithm 2a. Therefore, the second device may first buffer the data packet 4, and then may perform processing after enabling a new collaborative algorithm (algorithm 2b). For a scenario 2, that is, an algorithm confusion problem caused by data packet retransmission, in this embodiment of the present invention, for the data packet 4, the second device may determine that the serial number of the data packet 4 is before the serial number carried in the control PDU, and therefore may determine that the data packet 4 is obtained by using an algorithm 1a. Therefore, the second device may enable a collaborative algorithm (algorithm 1b) corresponding to the algorithm 1a to process the data carried in the data packet 4. It should be understood that the solutions to the algorithm confusion problems shown in FIG. 25 are merely examples for description, and constitute no limitation thereto.

In this embodiment of the present invention, the second device may receive control signaling from the first device, where the control signaling may include an end marker and a serial number. The second device may determine, by using the serial number carried in the control signaling and a serial number of a received data packet, whether data included in the received data packet is obtained by using a new algorithm or an old algorithm, thereby avoiding a model confusion problem.

It should be understood that, for related information (that is, same information or similar information) and related descriptions in the foregoing different embodiments, reference may be made to each other. In addition, the embodiment corresponding to FIG. 21 may be used as an enhancement of the embodiments corresponding to FIG. 9 and FIG. 14, and may resolve the algorithm confusion problems in the embodiments corresponding to FIG. 9 and FIG. 14.

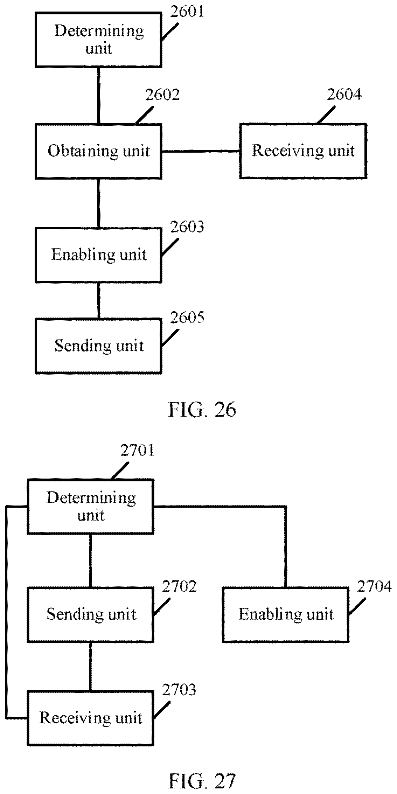

Based on the foregoing network architecture, FIG. 26 is a diagram of a structure of a communication apparatus according to an embodiment of the present invention. The communication apparatus may be a first device or a module (for example, a chip) in the first device. As shown in FIG. 26, the communication apparatus may include:
a determining unit 2601, configured to determine that a first event is satisfied;
an obtaining unit 2602, configured to obtain a first algorithm corresponding to the first event, where the first algorithm is a first model or a part of the first model; and
an enabling unit 2603, configured to enable the first algorithm.

In an embodiment, the apparatus may further include:
a receiving unit 2604, configured to receive configuration information from a second device, where the configuration information includes one or more events and corresponding algorithms, and the one or more events include the first event.

In an embodiment, the apparatus may further include:
a sending unit 2605, configured to send indication information to the second device, where the indication information indicates the first algorithm.

In an embodiment, the indication information is an identifier of the first algorithm or an identifier of the first event.

In an embodiment, the first model is one of a neural network model, a decision tree model, a random forest model, a linear regression model, a logistic regression model, a support vector machine model, or a naive Bayes model.

In an embodiment, the first event includes one or more of a signal quality event, a power level event, a memory event, and a storage event.

The signal quality event is that signal quality is less than a first threshold or the signal quality is greater than/equal to the first threshold. The power level event is that a power level of the first device is less than a second threshold or the power level of the first device is greater than/equal to the second threshold. The memory event is that a memory is less than a third threshold or the memory is greater than/equal to the third threshold. The storage event is that a storage capacity is less than a fourth threshold or the storage capacity is greater than/equal to the fourth threshold.

The signal quality is obtained based on one or more of a reference signal received power RSRP, reference signal received quality RSRQ, a signal to interference plus noise ratio SINR, a signal-to-noise ratio SNR, and a channel quality indicator CQI.

For more detailed descriptions of the determining unit 2601, the obtaining unit 2602, the enabling unit 2603, the receiving unit 2604, and the sending unit 2605, directly refer to related descriptions of the first device in the method embodiment shown in FIG. 9. Details are not described herein again.

Based on the foregoing network architecture, FIG. 27 is a diagram of a structure of another communication apparatus according to an embodiment of the present invention. The communication apparatus may be a second device or a module (for example, a chip) in the second device. As shown in FIG. 27, the communication apparatus may include:
a determining unit 2701, configured to determine configuration information; and
a sending unit 2702, configured to send the configuration information to a first device, where the configuration information includes one or more events and corresponding algorithms, the one or more events include a first event, the first event corresponds to a first algorithm, and the first algorithm is a first model or a part of the first model.

In an embodiment, the apparatus may further include:
a receiving unit 2703, configured to receive indication information from the first device, where the indication information indicates the first algorithm.

In an embodiment, the indication information is an identifier of the first algorithm or an identifier of the first event.

In an embodiment, the determining unit 2701 is further configured to determine a second algorithm based on the indication information, where the second algorithm is a collaborative algorithm corresponding to the first algorithm.

The apparatus may further include:
an enabling unit 2704, configured to enable the second algorithm.

In an embodiment, the first model is one of a neural network model, a decision tree model, a random forest model, a linear regression model, a logistic regression model, a support vector machine model, or a naive Bayes model.

In an embodiment, the first event includes one or more of a signal quality event, a power level event, a memory event, and a storage event.

The signal quality event is that signal quality is less than a first threshold or the signal quality is greater than/equal to the first threshold. The power level event is that a power level of the first device is less than a second threshold or the power level of the first device is greater than/equal to the second threshold. The memory event is that a memory is less than a third threshold or the memory is greater than/equal to the third threshold. The storage event is that a storage capacity is less than a fourth threshold or the storage capacity is greater than/equal to the fourth threshold.

The signal quality is obtained based on one or more of a reference signal received power RSRP, reference signal received quality RSRQ, a signal to interference plus noise ratio SINR, a signal-to-noise ratio SNR, and a channel quality indicator CQI.

For more detailed descriptions of the determining unit 2701, the sending unit 2702, the receiving unit 2703, and the enabling unit 2704, directly refer to related descriptions of the second device in the method embodiment shown in FIG. 9. Details are not described herein again.

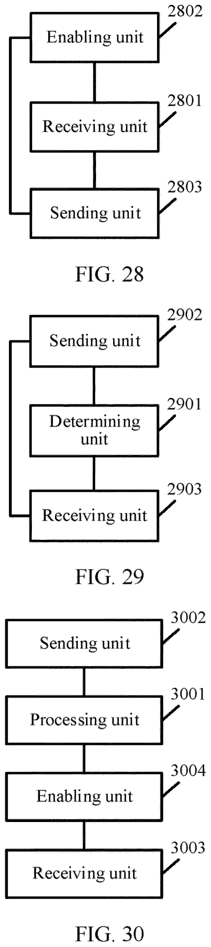

Based on the foregoing network architecture, FIG. 28 is a diagram of a structure of still another communication apparatus according to an embodiment of the present invention. The communication apparatus may be a first device or a module (for example, a chip) in the first device. As shown in FIG. 28, the communication apparatus may include:
a receiving unit 2801, configured to receive first indication information from a second device, where the first indication information indicates a first algorithm, and the first algorithm is a first model or a part of the first model; and
an enabling unit 2802, configured to enable the first algorithm.

In an embodiment, the receiving unit 2801 is further configured to receive configuration information from the second device, where the configuration information includes one or more algorithms and corresponding identifiers, and the one or more algorithms include the first algorithm.

In an embodiment, the apparatus may further include:
a sending unit 2803, configured to send second indication information to the second device, where the second indication information indicates a first event satisfied by the first device.

In an embodiment, the sending unit 2803 is further configured to send third indication information to the second device, where the third indication information indicates whether the first device successfully enables or fails to enable the first algorithm, and the third indication information is response information corresponding to the first indication information.

In an embodiment, the second indication information includes an identifier of the first event.

In an embodiment, the first event includes one or more of a signal quality event, a power level event, a memory event, and a storage event.

The signal quality event is that signal quality is less than a first threshold or the signal quality is greater than/equal to the first threshold. The power level event is that a power level of the first device is less than a second threshold or the power level of the first device is greater than/equal to the second threshold. The memory event is that a memory is less than a third threshold or the memory is greater than/equal to the third threshold. The storage event is that a storage capacity is less than a fourth threshold or the storage capacity is greater than/equal to the fourth threshold.

The signal quality is obtained based on one or more of a reference signal received power RSRP, reference signal received quality RSRQ, a signal to interference plus noise ratio SINR, a signal-to-noise ratio SNR, and a channel quality indicator CQI.

In an embodiment, the first indication information includes an identifier of the first algorithm.

In an embodiment, the first indication information is carried in downlink control information DCI, radio resource control RRC signaling, or media access control MAC signaling.

For more detailed descriptions of the receiving unit 2801, the enabling unit 2802, and the sending unit 2803, directly refer to related descriptions of the first device in the method embodiment shown in FIG. 14. Details are not described herein again.

Based on the foregoing network architecture, FIG. 29 is a diagram of a structure of still another communication apparatus according to an embodiment of the present invention. The communication apparatus may be a second device or a module (for example, a chip) in the second device. As shown in FIG. 29, the communication apparatus may include:
a determining unit 2901, configured to determine a first algorithm, where the first algorithm is a first model or a part of the first model; and
a sending unit 2902, configured to send first indication information to a first device, where the first indication information indicates the first algorithm.

In an embodiment, the sending unit 2902 is further configured to send configuration information to the first device, where the configuration information includes one or more algorithms and corresponding identifiers, and the one or more algorithms include the first algorithm.

In an embodiment, the apparatus may further include:
a receiving unit 2903, configured to receive second indication information from the first device, where the second indication information indicates a first event satisfied by the first device. The determining unit 2901 is specifically configured to determine the first algorithm based on the second indication information.

In an embodiment, the receiving unit 2903 is further configured to receive third indication information from the first device, where the third indication information indicates whether the first device successfully enables or fails to enable the first algorithm, and the third indication information is response information corresponding to the first indication information.

In an embodiment, the second indication information includes an identifier of the first event.

In an embodiment, the first event includes one or more of a signal quality event, a power level event, a memory event, and a storage event.

The signal quality event is that signal quality is less than a first threshold or the signal quality is greater than/equal to the first threshold. The power level event is that a power level of the first device is less than a second threshold or the power level of the first device is greater than/equal to the second threshold. The memory event is that a memory is less than a third threshold or the memory is greater than/equal to the third threshold. The storage event is that a storage capacity is less than a fourth threshold or the storage capacity is greater than/equal to the fourth threshold.

The signal quality is obtained based on one or more of a reference signal received power RSRP, reference signal received quality RSRQ, a signal to interference plus noise ratio SINR, a signal-to-noise ratio SNR, and a channel quality indicator CQI.

In an embodiment, the first indication information includes an identifier of the first algorithm.

In an embodiment, the first indication information is carried in downlink control information DCI, radio resource control RRC signaling, or media access control MAC signaling.

For more detailed descriptions of the determining unit 2901, the sending unit 2902, and the receiving unit 2903, directly refer to related descriptions of the second device in the method embodiment shown in FIG. 14. Details are not described herein again.

Based on the foregoing network architecture, FIG. 30 is a diagram of a structure of still another communication apparatus according to an embodiment of the present invention. The communication apparatus may be a first device or a module (for example, a chip) in the first device. As shown in FIG. 30, the communication apparatus may include:
a processing unit 3001, configured to process first data by using a first algorithm to obtain second data, where the first algorithm is a first model or a first part of the first model; and
a sending unit 3002, configured to send a first data packet to a second device, where the first data packet includes first indication information that indicates the first algorithm and the second data.

In an embodiment, the first indication information includes an identifier of the first algorithm.

In an embodiment, the first indication information is 1-bit information, and the processing unit 3001 is further configured to process third data by using a second algorithm to obtain fourth data, where the second algorithm is different from the first algorithm.

The sending unit 3002 is further configured to send a second data packet to the second device, where the second data packet includes second indication information and the fourth data, and a value of the second indication information is different from a value of the first indication information.

In an embodiment, the sending unit 3002 is further configured to send control signaling to the second device, where the control signaling includes an end marker and a first serial number.

In an embodiment, after the control signaling is sent to the second device, the processing unit 3001 is further configured to process fifth data by using a third algorithm to obtain sixth data, where the third algorithm is different from the first algorithm.

The sending unit 3002 is further configured to send a third data packet to the second device, where the third data packet includes third indication information and the sixth data, and the third indication information is a serial number of the third data packet.

In an embodiment, the apparatus may further include:
a receiving unit 3003, configured to receive fourth indication information from the second device, where the fourth indication information indicates to switch an algorithm to the second algorithm or the third algorithm, the second algorithm is a second model or a second part of the first model, and the third algorithm is a third model or a third part of the first model; and
an enabling unit 3004, configured to enable the second algorithm or the third algorithm.

For more detailed descriptions of the processing unit 3001, the sending unit 3002, the receiving unit 3003, and the enabling unit 3004, directly refer to related descriptions of the first device in the method embodiment shown in FIG. 21. Details are not described herein again.

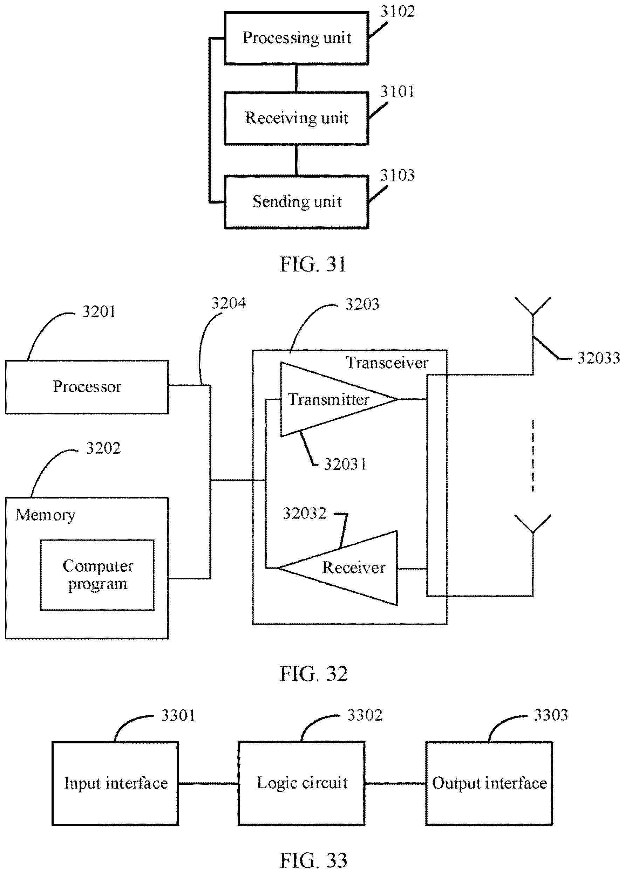

Based on the foregoing network architecture, FIG. 31 is a diagram of a structure of still another communication apparatus according to an embodiment of the present invention. The communication apparatus may be a second device or a module (for example, a chip) in the second device. As shown in FIG. 31, the communication apparatus may include:
a receiving unit 3101, configured to receive a first data packet from a first device, where the first data packet includes first indication information that indicates a first algorithm and second data, and the first algorithm is a first model or a first part of the first model; and
a processing unit 3102, configured to process the second data by using a fourth algorithm, where the fourth algorithm is a collaborative algorithm corresponding to the first algorithm.

In an embodiment, the first indication information includes an identifier of the first algorithm.

In an embodiment, the first indication information is 1-bit information, and the receiving unit 3101 is further configured to receive a second data packet from the first device, where the second data packet includes second indication information and fourth data.

When a value of the first indication information is the same as a value of the second indication information, the processing unit 3102 is further configured to process the fourth data by using the fourth algorithm.

When the value of the first indication information is different from the value of the second indication information, the processing unit 3102 is further configured to process the fourth data by using a fifth algorithm, where the fifth algorithm is a collaborative algorithm corresponding to a second algorithm, the second algorithm is different from the first algorithm, and the fourth algorithm is different from the fifth algorithm.

In an embodiment, the receiving unit 3101 is further configured to receive control signaling from the first device, where the control signaling includes an end marker and a first serial number.

In an embodiment, after receiving the control signaling from the first device, the receiving unit 3101 is further configured to receive a third data packet from the first device, where the third data packet includes third indication information and sixth data, and the third indication information is a serial number of the third data packet.

When the serial number of the third data packet is before the first serial number, the processing unit 3102 is further configured to process the sixth data by using the fourth algorithm.

When the serial number of the third data packet is after the first serial number, the processing unit 3102 is further configured to process the sixth data by using a sixth algorithm, where the sixth algorithm is a collaborative algorithm corresponding to a third algorithm, the third algorithm is different from the first algorithm, and the sixth algorithm is different from the fourth algorithm.

In an embodiment, the apparatus may further include:
a sending unit 3103, configured to send fourth indication information to the first device, where the fourth indication information indicates to switch an algorithm to the second algorithm or the third algorithm, the second algorithm is a second model or a second part of the first model, and the third algorithm is a third model or a third part of the first model.

For more detailed descriptions of the receiving unit 3101, the processing unit 3102, and the sending unit 3103, directly refer to related descriptions of the second device in the method embodiment shown in FIG. 21. Details are not described herein again.

Based on the foregoing network architecture, FIG. 32 is a diagram of a structure of still another communication apparatus according to an embodiment of the present invention. As shown in FIG. 32, the communication apparatus may include a processor 3201, a memory 3202, a transceiver 3203, and a bus 3204. The memory 3202 may exist independently, and may be connected to the processor 3201 through the bus 3204. The memory 3202 may alternatively be integrated with the processor 3201. The bus 3204 is configured to implement a connection between these components. In a case, as shown in FIG. 32, the transceiver 3203 may include a transmitter 32031, a receiver 32032, and an antenna 32033. In another case, the transceiver 3203 may include a transmitter (that is, an output interface) and a receiver (that is, an input interface). The transmitter may include a transmitter machine and an antenna, and the receiver may include a receiver machine and an antenna.

In an embodiment, the communication apparatus may be a first device or a module (for example, a chip) in the first device. When a computer program stored in the memory 3202 is executed, the processor 3201 is configured to control the receiving unit 2604 and the sending unit 2605 to perform the operations performed in the foregoing embodiment. The processor 3201 is further configured to perform the operations performed by the determining unit 2601, the obtaining unit 2602, and the enabling unit 2603. The transceiver 3203 is configured to perform operations performed by the receiving unit 2604 and the sending unit 2605 in the foregoing embodiment. The first device or the module in the first device may further be configured to perform the method performed by the first device in the method embodiment in FIG. 9. Details are not described herein again.

In an embodiment, the communication apparatus may be a second device or a module (for example, a chip) in the second device. When a computer program stored in the memory 3202 is executed, the processor 3201 is configured to control the sending unit 2702 and the receiving unit 2703 to perform the operations performed in the foregoing embodiment. The processor 3201 is further configured to perform the operations performed by the determining unit 2701 and the enabling unit 2704. The transceiver 3203 is configured to perform the operations performed by the sending unit 2702 and the receiving unit 2703 in the foregoing embodiment. The second device or the module in the second device may further be configured to perform the method performed by the second device in the method embodiment in FIG. 9. Details are not described herein again.

In an embodiment, the communication apparatus may be a first device or a module (for example, a chip) in the first device. When a computer program stored in the memory 3202 is executed, the processor 3201 is configured to control the receiving unit 2801 and the sending unit 2803 to perform the operations performed in the foregoing embodiment. The processor 3201 is further configured to perform the operations performed by the enabling unit 2802. The transceiver 3203 is configured to perform the operations performed by the receiving unit 2801 and the sending unit 2803 in the foregoing embodiment. The first device or the module in the first device may further be configured to perform the method performed by the first device in the method embodiment in FIG. 14. Details are not described herein again.

In an embodiment, the communication apparatus may be a second device or a module (for example, a chip) in the second device. When a computer program stored in the memory 3202 is executed, the processor 3201 is configured to control the sending unit 2902 and the receiving unit 2903 to perform the operations performed in the foregoing embodiment. The processor 3201 is further configured to perform the operations performed by the determining unit 2901. The transceiver 3203 is configured to perform the operations performed by the sending unit 2902 and the receiving unit 2903 in the foregoing embodiment. The second device or the module in the second device may further be configured to perform the method performed by the second device in the method embodiment in FIG. 14. Details are not described herein again.

In an embodiment, the communication apparatus may be a first device or a module (for example, a chip) in the first device. When a computer program stored in the memory 3202 is executed, the processor 3201 is configured to control the sending unit 3002 and the receiving unit 3003 to perform the operations performed in the foregoing embodiment. The processor 3201 is further configured to perform the operations performed by the processing unit 3001 and the enabling unit 3004. The transceiver 3203 is configured to perform the operations performed by the sending unit 3002 and the receiving unit 3003 in the foregoing embodiment. The first device or the module in the first device may further be configured to perform the method performed by the first device in the method embodiment in FIG. 21. Details are not described herein again.

In an embodiment, the communication apparatus may be a second device or a module (for example, a chip) in the second device. When a computer program stored in the memory 3202 is executed, the processor 3201 is configured to control the receiving unit 3101 and the sending unit 3103 to perform the operations performed in the foregoing embodiment. The processor 3201 is further configured to perform the operations performed by the processing unit 3102. The transceiver 3203 is configured to perform the operations performed by the receiving unit 3101 and the sending unit 3103 in the foregoing embodiment. The second device or the module in the second device may further be configured to perform the method performed by the second device in the method embodiment in FIG. 21. Details are not described herein again.

Based on the foregoing network architecture, FIG. 33 is a diagram of a structure of still another communication apparatus according to an embodiment of the present invention. As shown in FIG. 33, the communication apparatus may include an input interface 3301, a logic circuit 3302, and an output interface 3303. The input interface 3301 is connected to the output interface 3303 by using a logic circuit 3302. The input interface 3301 is configured to receive information from another communication apparatus. The output interface 3303 is configured to: output, schedule, or send information to the another communication apparatus. The logic circuit 3302 is configured to perform an operation other than the operations of the input interface 3301 and the output interface 3303, for example, implement the function implemented by the processor 3201 in the foregoing embodiment. The communication apparatus may be a first device or a module in the first device, or may be a second device or a module in the second device. For more detailed descriptions of the input interface 3301, the logic circuit 3302, and the output interface 3303, directly refer to related descriptions of the first device and the second device in the foregoing method embodiments. Details are not described herein again.

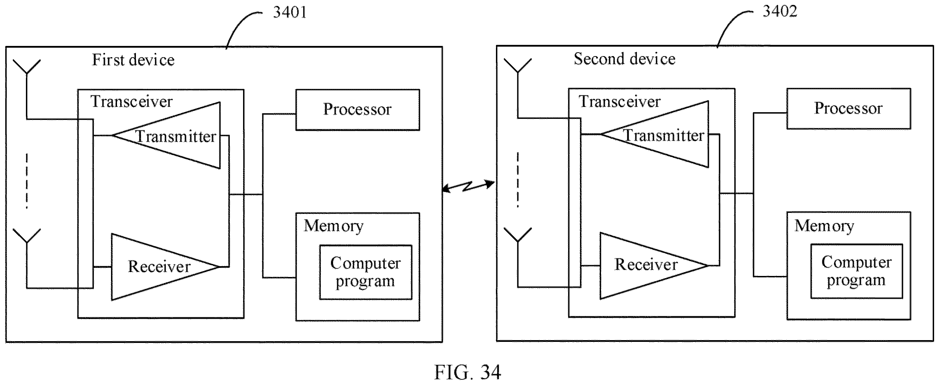

Based on the foregoing network architecture, FIG. 34 is a diagram of a structure of a communication system according to an embodiment of the present invention. As shown in FIG. 34, the communication system may include a first device 3401 and a second device 3402. For detailed descriptions, refer to the communication methods shown in FIG. 9, FIG. 14, and FIG. 21.

An embodiment of the present invention further discloses a computer-readable storage medium. The computer-readable storage medium stores instructions. When the instructions are executed, the method in the foregoing method embodiment is performed.

An embodiment of the present invention further discloses a computer program product including instructions. When the instructions are executed, the method in the foregoing method embodiment is performed.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A communication method, comprising:
receiving, by a first device, first indication information from a second device, wherein the first indication information indicates a first algorithm, and the first algorithm is a first model or a part of the first model; and
enabling the first algorithm.

2. The method according to claim 1, further comprising:
receiving configuration information from the second device, wherein the configuration information comprises one or more algorithms and corresponding identifiers, and the one or more algorithms comprise the first algorithm.

3. The method according to claim 1 or 2, further comprising:
sending second indication information to the second device, wherein the second indication information indicates a first event satisfied by the first device.

4. The method according to any one of claims 1 to 3, further comprising:
sending third indication information to the second device, wherein the third indication information indicates whether the first device successfully enables or fails to enable the first algorithm, and the third indication information is response information corresponding to the first indication information.

5. A communication method, comprising:
determining, by a second device, a first algorithm, wherein the first algorithm is a first model or a part of the first model; and
sending first indication information to a first device, wherein the first indication information indicates the first algorithm.

6. The method according to claim 5, further comprising:
sending configuration information to the first device, wherein the configuration information comprises one or more algorithms and corresponding identifiers, and the one or more algorithms comprise the first algorithm.

7. The method according to claim 5 or 6, wherein the determining, by a second device, a first algorithm comprises:
receiving second indication information from the first device, wherein the second indication information indicates a first event satisfied by the first device; and
determining the first algorithm based on the second indication information.

8. The method according to any one of claims 5 to 7, further comprising:
receiving third indication information from the first device, wherein the third indication information indicates whether the first device successfully enables or fails to enable the first algorithm, and the third indication information is response information corresponding to the first indication information.

9. The method according to claim 3 or 4 or claim 7 or 8, wherein the second indication information comprises an identifier of the first event.

10. The method according to claim 3 or 4 or any one of claims 7 to 9, wherein the first event comprises one or more of a signal quality event, a power level event, a memory event, and a storage event;
the signal quality event is that signal quality is less than a first threshold or the signal quality is greater than/equal to the first threshold, the power level event is that a power level of the first device is less than a second threshold or the power level of the first device is greater than/equal to the second threshold, the memory event is that a memory is less than a third threshold or the memory is greater than/equal to the third threshold, and the storage event is that a storage capacity is less than a fourth threshold or the storage capacity is greater than/equal to the fourth threshold; and
the signal quality is obtained based on one or more of a reference signal received power RSRP, reference signal received quality RSRQ, a signal to interference plus noise ratio SINR, a signal-to-noise ratio SNR, and a channel quality indicator CQI.

11. The method according to any one of claims 1 to 10, wherein the first indication information comprises an identifier of the first algorithm.

12. The method according to any one of claims 1 to 11, wherein the first indication information is carried in downlink control information DCI, radio resource control RRC signaling, or media access control MAC signaling.

13. A communication method, comprising:
processing, by a first device, first data by using a first algorithm to obtain second data, wherein the first algorithm is a first model or a first part of the first model; and
sending a first data packet to a second device, wherein the first data packet comprises first indication information that indicates the first algorithm and the second data.

14. The method according to claim 13, wherein the first indication information is 1-bit information, and the method further comprises:
processing third data by using a second algorithm to obtain fourth data, wherein the second algorithm is different from the first algorithm; and
sending a second data packet to the second device, wherein the second data packet comprises second indication information and the fourth data, and a value of the second indication information is different from a value of the first indication information.

15. The method according to claim 13, further comprising:
sending control signaling to the second device, wherein the control signaling comprises an end marker and a first serial number.

16. The method according to claim 15, wherein after the sending control signaling to the second device, the method further comprises:
processing fifth data by using a third algorithm to obtain sixth data, wherein the third algorithm is different from the first algorithm; and
sending a third data packet to the second device, wherein the third data packet comprises third indication information and the sixth data, and the third indication information is a serial number of the third data packet.

17. The method according to any one of claims 14 to 16, further comprising:
receiving fourth indication information from the second device, wherein the fourth indication information indicates to switch an algorithm to the second algorithm or the third algorithm, the second algorithm is a second model or a second part of the first model, and the third algorithm is a third model or a third part of the first model; and
enabling the second algorithm or the third algorithm.

18. A communication method, comprising:
receiving, by a second device, a first data packet from a first device, wherein the first data packet comprises first indication information that indicates a first algorithm and second data, and the first algorithm is a first model or a first part of the first model; and
processing the second data by using a fourth algorithm, wherein the fourth algorithm is a collaborative algorithm corresponding to the first algorithm.

19. The method according to claim 13 or 18, wherein the first indication information comprises an identifier of the first algorithm.

20. The method according to claim 18, wherein the first indication information is 1-bit information, and the method further comprises:
receiving a second data packet from the first device, wherein the second data packet comprises second indication information and fourth data; and
when a value of the first indication information is the same as a value of the second indication information, processing the fourth data by using the fourth algorithm; or
when the value of the first indication information is different from the value of the second indication information, processing the fourth data by using a fifth algorithm, wherein the fifth algorithm is a collaborative algorithm corresponding to a second algorithm, the second algorithm is different from the first algorithm, and the fourth algorithm is different from the fifth algorithm.

21. The method according to claim 18, further comprising:
receiving control signaling from the first device, wherein the control signaling comprises an end marker and a first serial number.

22. The method according to claim 21, wherein after the receiving control signaling from the first device, the method further comprises:
receiving a third data packet from the first device, wherein the third data packet comprises third indication information and sixth data, and the third indication information is a serial number of the third data packet; and
when the serial number of the third data packet is before the first serial number, processing the sixth data by using the fourth algorithm; or
when the serial number of the third data packet is after the first serial number, processing the sixth data by using a sixth algorithm, wherein the sixth algorithm is a collaborative algorithm corresponding to a third algorithm, the third algorithm is different from the first algorithm, and the sixth algorithm is different from the fourth algorithm.

23. The method according to any one of claims 20 to 22, further comprising:
sending fourth indication information to the first device, wherein the fourth indication information indicates to switch an algorithm to the second algorithm or the third algorithm, the second algorithm is a second model or a second part of the first model, and the third algorithm is a third model or a third part of the first model.

24. A communication apparatus, comprising:
a receiving unit, configured to receive first indication information from a second device, wherein the first indication information indicates a first algorithm, and the first algorithm is a first model or a part of the first model; and
an enabling unit, configured to enable the first algorithm.

25. A communication apparatus, comprising:
a determining unit, configured to determine a first algorithm, wherein the first algorithm is a first model or a part of the first model; and
a sending unit, configured to send first indication information to a first device, wherein the first indication information indicates the first algorithm.

26. A communication apparatus, comprising:
a processing unit, configured to process first data by using a first algorithm to obtain second data, wherein the first algorithm is a first model or a first part of the first model; and
a sending unit, configured to send a first data packet to a second device, wherein the first data packet comprises first indication information that indicates the first algorithm and the second data.

27. A communication apparatus, comprising:
a receiving unit, configured to receive a first data packet from a first device, wherein the first data packet comprises first indication information that indicates a first algorithm and second data, and the first algorithm is a first model or a first part of the first model; and
a processing unit, configured to process the second data by using a fourth algorithm, wherein the fourth algorithm is a collaborative algorithm corresponding to the first algorithm.

28. A communication apparatus, comprising a processor, a memory, and a transceiver, wherein the transceiver is configured to: receive information from a communication apparatus other than the communication apparatus, and output information to the communication apparatus other than the communication apparatus, and the processor invokes a computer program stored in the memory to implement the method according to any one of claims 1 to 23.

29. A computer-readable storage medium, wherein the computer-readable storage medium stores a computer program or computer instructions, and when the computer program or the computer instructions are run, the method according to any one of claims 1 to 23 is implemented.

30. A computer program product, wherein the computer program product comprises computer program code, and when the computer program code is run, the method according to any one of claims 1 to 23 is implemented.
